(19) Europäisches Patentamt
European Patent Office
Office européen des brevets

(11) **EP 1 861 454 B1**

(12) **EUROPEAN PATENT SPECIFICATION**


(45) Date of publication and mention of the grant of the patent:
**20.02.2019 Bulletin 2019/08**

(21) Application number: **06739033.6**

(22) Date of filing: **15.03.2006**

(51) Int Cl.:
***C08J 9/00*** (2006.01) ***C08L 23/00*** (2006.01)
***C08F 2/38*** (2006.01) ***C08F 295/00*** (2006.01)
***C08F 297/08*** (2006.01) ***C08F 210/16*** (2006.01)
***C08L 53/00*** (2006.01)

(86) International application number:
**PCT/US2006/010081**

(87) International publication number:
**WO 2006/099631 (21.09.2006 Gazette 2006/38)**


(54) **FOAMS MADE FROM INTERPOLYMERS OF ETHYLENE/ alpha-OLEFINS**

AUS ETHYLEN/alpha-OLEFIN-MISCHPOLYMEREN HERGESTELLTE SCHAUMSTOFFE

MOUSSES FABRIQUEES A PARTIR D'INTERPOLYMERES D'ETHYLENE / alpha-OLEFINES


(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 PCT/US2005/008917**
**16.09.2005 US 717860 P**

(43) Date of publication of application:
**05.12.2007 Bulletin 2007/49**



(73) Proprietor: **Dow Global Technologies LLC**
**Midland, MI 48674 (US)**

(72) Inventors:
- **PRIETO, Miguel, Alberto**
**CH-8805 Richterswil (CH)**
- **KOCHER, Roger, Daniel**
**CH-8804 Zurich (CH)**
- **DAMEN, Julien, H.J.M.**
**CH-8932 Mettmenstetten (CH)**
- **CHEUNG, Yunwa, Wilson**
**Pittsford, NY 14534 (US)**

(74) Representative: **V.O.**
**P.O. Box 87930**
**2508 DH Den Haag (NL)**



(56) References cited:
**WO-A-2005/090425**
**WO-A-2005/090426**
**WO-A-2005/090427**
**US-A- 6 008 262**
**US-A1- 2004 249 009**
**US-A1- 2006 046 622**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).





Printed by Jouve, 75001 PARIS (FR)

**Description**

FIELD OF THE INVENTION

This invention relates to foams comprising at least one ethylene/a-olefin block interpolymer and methods of using the foams in various applications, particularly footwear applications.

BACKGROUND OF THE INVENTION

Vulcanized rubbers, such as vulcanized styrene-butadiene rubber (SBR), butadiene rubber (BR) and natural rubber (NR), are popular soling materials because they possess a well balance of desirable properties such as abrasion resistance, tensile strength, tear strength and flexibility. However, the vulcanized rubbers can be difficult to process, and may lose the desirable properties when foamed.

Ethylene vinyl acetate copolymers (EVA), polyolefins (PO) and blends thereof are used to fabricate foam products in footwear applications such as inner soles, midsoles, outer soles, unisoles, and sole inserts. Formulating these foams often requires a tradeoff among desirable properties such as compression set resistance, rebound resilience, shrinkage, hardness, abrasion, flexibility, grip, and split tear properties. For example, a low foam density can be desirable in some applications where flexibility and good grip properties are needed. However, a low foam density generally results in low compression set, low abrasion resistance, and high foam shrinkage.

Foams with a low compression set, *i.e.,* high compression set resistance, can be desirable in some applications such as footwear articles (e.g., shoe, boot, and sandal). However, achieving a low compression set generally requires increasing the foam density, the cross-linking density and/or the polymer crystallinity of the foams. Increasing the cross-linking density of the foams may increase foam shrinkage, and increasing polymer crystallinity may decrease rebound resilience and produce a "harder" foam. Moreover, the cross-linking density of foams for footwear articles generally has a practical upper limit because most footwear foams should remain sufficiently thermoplastic for thermoforming into a finished shape.

Foams with high rebound resilience generally are desirable for using as footwear foams to maximize energy return to the wearer. Rebound resilience can be increased by decreasing the polymer crystallinity and by increasing cross-linking density. However, a combination of low polymer crystallinity and high cross-linking density may contribute to high foam shrinkage and low split tear resistance.

Because of the importance of compression set resistance and rebound resilience properties for most of the footwear applications, the foams for such applications are generally cured above the ideal level. However, as mentioned above, a high cure level (*i.e.,* high cross-linking density) can negatively impact the split tear and shrinkage properties of the foams.

For the above reasons, there are still needs for improved foams that have a good balance of desirable foam properties, such as compression set resistance, rebound resilience, shrinkage, hardness, abrasion, flexibility, grip and/or split tear properties.

**SUMMARY OF THE INVENTION**

The aforementioned needs are met by various aspects of the invention. In one aspect, the invention relates to a foam comprising at least one ethylene/a-olefin block interpolymer disclosed herein wherein the density of the foam is from greater than 150 to 500 kg/$m^3$. In one embodiment, the ethylene/a-olefin block interpolymer has a $M_w/M_n$ from 1.7 to 3.5, at least one melting point, $T_m$, in °C (degrees Celsius), and a density, d, in g/$cm^3$ (grams/cubic centimeter), wherein the numerical values of $T_m$ and d correspond to the relationship:

$$T_m \geq -2002.9 + 4538.5(d) - 2422.2(d)^2.$$

In another embodiment, the ethylene/a-olefin block interpolymer has a $M_w/M_n$ from 1.7 to 3.5, and is characterized by a heat of fusion, ΔH in J/g, and a delta quantity, ΔT, in °C (degrees Celsius) defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48\ °C \text{ for } \Delta H \text{ greater than 130 J/g ,}$$

wherein the CRYSTAF peak is determined using at least 5 percent of the cumulative polymer, and if less than 5 percent of the polymer has an identifiable CRYSTAF peak, then the CRYSTAF temperature is 30 °C.

In another embodiment, the ethylene/a-olefin block interpolymer is characterized by an elastic recovery, Re, in percent at 300 percent strain and 1 cycle measured with a compression-molded film of the ethylene/a-olefin block interpolymer, and has a density, d, in g/cm$^3$ (grams/cubic centimeter), wherein the numerical values of Re and d satisfy the following relationship when the ethylene/a-olefin block interpolymer is substantially free of a cross-linked phase:

$$Re > 1481 - 1629(d).$$

In another embodiment, the ethylene/a-olefin block interpolymer has a comonomer content of a TREF fraction which elutes between 40 °C and 130 °C greater than or equal to the quantity (-0.2013) T + 21.07, where T is the numerical value of the peak elution temperature of the TREF fraction measured in °C.

In another embodiment, the ethylene/a-olefin block interpolymer is characterized by a storage modulus at 25 °C, G'(25 °C), and a storage modulus at 100 °C, G'(100 °C), wherein the ratio of G'(25 °C) to G'(100 °C) is from 1:1 to 10:1.

In another embodiment, the ethylene/a-olefin block interpolymer has an average block index from greater than 0 and up to 1.0 and a molecular weight distribution, $M_w/M_n$, greater than 1.3.

In another embodiment, the $\alpha$-olefin in the ethylene/a-olefin block interpolymer is styrene, propylene, 1-butene, 1-hexene, 1-octene, 4-methyl-1-pentene, norbornene, 1-decene, 1,5-hexadiene, or a combination thereof. In another embodiment, the ethylene/a-olefin block interpolymer is cross-linked by a cross-linking agent or radiation. In another embodiment, the foam is cross-linked and/or contains more than 5 % of gel per ASTM D-2765-84 Method A.

In another embodiment, the foam further comprises at least an additive, wherein the additive is a blowing agent, a cross-linking agent, a stability control agent, a nucleating agent, a filler, a pigment, an antioxidant, an acid scavenger, a UV stabilizer, a flame retardant, a lubricant, a processing aid, an extrusion aid, a blowing agent activator, a coagent or a combination thereof. In another embodiment, the foam further comprises an ethylene vinyl acetate copolymer (EVA). In another embodiment, the ratio of the EVA to the ethylene/a-olefin block interpolymer is from 1:10 to 10:1.

In another aspect, the invention relates to foamable compositions comprising the ethylene/a-olefin block interpolymer disclosed herein, a blowing agent and a crosslinking agent.

In another aspect, the invention relates to foamed articles made from a foam comprising the ethylene/a-olefin block interpolymer disclosed herein. In one embodiment, the foamed article is a footwear article.

Additional aspects of the invention and characteristics and properties of various embodiments of the invention become apparent with the following description.

## BRIEF DESCRIPTION OF THE DRAWINGS

Figure 1 shows the melting point/density relationship for the inventive polymers (represented by diamonds) as compared to traditional random copolymers (represented by circles) and Ziegler-Natta copolymers (represented by triangles).

Figure 2 shows plots of delta DSC-CRYSTAF as a function of DSC Melt Enthalpy for various polymers. The diamonds represent random ethylene/octene copolymers; the squares represent polymer examples 1-4; the triangles represent polymer examples 5-9; and the circles represent polymer Examples 10-19. The "X" symbols represent polymer Comparative Examples A*-F*.

Figure 3 shows the effect of density on elastic recovery for unoriented films made from inventive interpolymers(represented by the squares and circles) and traditional copolymers (represented by the triangles which are various Dow AFFINITY® polymers). The squares represent inventive ethylene/butene block copolymers; and the circles represent inventive ethylene/octene block copolymers.

Figure 4 is a plot of octene content of TREF fractionated ethylene/ 1-octene copolymer fractions versus TREF elution temperature of the fraction for the polymer of Example 5 (represented by the circles) and comparative polymer Comparative Examples E* and F* (represented by the "X" symbols). The diamonds represent traditional random ethylene/octene copolymers.

Figure 5 is a plot of octene content of TREF fractionated ethylene/ 1-octene copolymer fractions versus TREF elution temperature of the fraction for the polymer of Example 5 (curve 1) and for polymer Comparative Examples F* (curve

2). The squares represent polymer Comparative Examples F*; and the triangles represent Example 5.

Figure 6 is a graph of the log of storage modulus as a function of temperature for comparative ethylene/1-octene copolymer (curve 2) and ethylene/propylene copolymer (curve 3) and for two ethylene/1-octene block copolymers made with differing quantities of chain shuttling agent (curves 1).

Figure 7 shows a plot of TMA (1mm) versus flex modulus for some inventive polymers (represented by the diamonds), as compared to some known polymers. The triangles represent various Dow VERSIFY® polymers; the circles represent various random ethylene/styrene copolymers; and the squares represent various Dow AFFINITY® polymers.

## DETAILED DESCRIPTION OF THE INVENTION

### General Definitions

"Polymer" means a polymeric compound prepared by polymerizing monomers, whether of the same or a different type. The generic term "polymer" embraces the terms "homopolymer," "copolymer," "terpolymer" as well as "interpolymer."

"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "ethylene/$\alpha$-olefin interpolymer" generally refers to polymers comprising ethylene and an $\alpha$ -olefin having 3 or more carbon atoms. Preferably, ethylene comprises the majority mole fraction of the whole polymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an $\alpha$-olefin having 3 or more carbon atoms. For many ethylene/octene copolymers, the preferred composition comprises an ethylene content greater than 80 mole percent of the whole polymer and an octene content of from 10 to 15, preferably from 15 to 20 mole percent of the whole polymer. In some embodiments, the ethylene/a-olefin interpolymers do not include those produced in low yields or in a minor amount or as a by-product of a chemical process. While the ethylene/a-olefin interpolymers can be blended with one or more polymers, the as-produced ethylene/a-olefin interpolymers are substantially pure and often comprise a major component of the reaction product of a polymerization process.

The ethylene/a-olefin interpolymers comprise ethylene and one or more copolymerizable $\alpha$-olefin comonomers in polymerized form, characterized by multiple blocks or segments of two or more polymerized monomer units differing in chemical or physical properties. That is, the ethylene/a-olefin interpolymers are block interpolymers, preferably multi-block interpolymers or copolymers. The terms "interpolymer" and copolymer" are used interchangeably herein. In some embodiments, the multi-block copolymer can be represented by the following formula:

(AB)n

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than 95 weight percent, and preferably greater than 98 weight percent based on the weight of the polymer. In other words, the comonomer content

(content of monomers other than ethylene) in the hard segments is less than 5 weight percent, and preferably less than 2 weight percent based on the weight of the polymer. In some embodiments, the hard segments comprises all or substantially all ethylene. "Soft" segments, on the other hand, refer to blocks of polymerized units in which the comonomer content (content of monomers other than ethylene) is greater than 5 weight percent, preferably greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can often be present in a block interpolymer from 1 weight percent to 99 weight percent of the total weight of the block interpolymer, preferably from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a concurrently filed U.S. Patent Application Serial No. 60/199,930, entitled "Ethylene/α-Olefin Block Interpolymers", filed on March 15, 2006, in the name of Colin L.P. Shan, Lonnie Hazlitt, et. al. and assigned to Dow Global Technologies Inc.

The term "crystalline", if employed, refers to a polymer that possesses a first order transition or crystalline melting point (Tm) as determined by differential scanning calorimetry (DSC) or equivalent technique. The term can be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process of making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, $R^L$ and an upper limit, $R^U$, is disclosed, any number falling within the range is specifically disclosed. In particular, the following numbers within the range are specifically disclosed: $R=R^L+k*(R^U-R^L)$, wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Embodiments of the invention provide foams comprising at least one ethylene/a-olefin block interpolymer disclosed herein wherein the foam has a density from greater than 150 to 500 kg/m$^3$. The foams disclosed herein can be prepared from a foamable composition comprising at least one ethylene/a-olefin block interpolymer, a blowing agent and a cross-linking agent. The foams possess a well balance of desirable properties that are suitable for a variety of applications, such as footwear applications. In some embodiments, the ethylene/a-olefin block interpolymers are a multi-block copolymer comprising at least one soft block and at least one hard block. In other embodiments, the foam is cross-linked. When cross-linked, the foam has a gel content of more than 5 weight percent, preferably from 5 to 90 weight percent and more preferably from 30 to 70 weight percent according to ASTM D-2765-84, method A.

Ethylene/α-Olefin Block Interpolymers

The ethylene/α-olefin block interpolymers used in embodiments of the invention (also referred to as "inventive interpolymer" or "inventive polymer") comprise ethylene and one or more copolymerizable α-olefin comonomers in polymerized form, characterized by multiple blocks or segments of two or more polymerized monomer units differing in chemical or physical properties (block interpolymer), preferably a multi-block copolymer. The ethylene/α-olefin block

interpolymers are characterized by one or more of the aspects described as follows.

In one aspect, the ethylene/a-olefin block interpolymers used in embodiments of the invention have a $M_w/M_n$ from 1.7 to 3.5 and at least one melting point, $T_m$, in °C (degrees Celsius) and density, d, in g/cm$^3$ (grams/cubic centimeter), wherein the numerical values of the variables correspond to the relationship:

$$T_m > -2002.9 + 4538.5(d) - 2422.2(d)^2,$$

and preferably

$$T_m \geq -6288.1 + 13141(d) - 6720.3(d)^2,$$

and more preferably

$$T_m \geq 858.91 - 1825.3(d) + 1112.8(d)^2.$$

Such melting point/density relationship is illustrated in Figure 1. Unlike the traditional random copolymers of ethylene/α-olefins whose melting points decrease with decreasing densities, the inventive interpolymers (represented by diamonds) exhibit melting points substantially independent of the density, particularly when density is between 0.87 g/cm$^3$ (g/cc) to 0.95 g/cm$^3$ (g/cc). For example, the melting point of such polymers are in the range of 110 °C to 130 °C when density ranges from 0.875 g/cm$^3$ (g/cc) to 0.945 g/cm$^3$ (g/cc). In some embodiments, the melting point of such polymers are in the range of 115 °C to 125 °C when density ranges from 0.875 g/cm$^3$ (g/cc) to 0.945 g/cm$^3$ (g/cc).

In another aspect, the ethylene/a-olefin block interpolymers comprise, in polymerized form, ethylene and one or more α-olefins and are characterized by a ΔT, in °C (degree Celsius), defined as the temperature for the tallest Differential Scanning Calorimetry ("DSC") peak minus the temperature for the tallest Crystallization Analysis Fractionation ("CRYSTAF") peak and a heat of fusion in J/g, ΔH, and ΔT and ΔH satisfy the following relationships:

$$\Delta T > -0.1299(\Delta H) + 62.81,$$

and preferably

$$\Delta T \geq -0.1299(\Delta H) + 64.38,$$

and more preferably

$$\Delta T \geq -0.1299(\Delta H) + 65.95,$$

for ΔH up to 130 J/g. Moreover, ΔT is equal to or greater than 48 °C for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30 °C, and ΔH is the numerical value of the heat of fusion in J/g. More preferably, the highest CRYSTAF peak contains at least 10 percent of the cumulative polymer. Figure 2 shows plotted data for inventive polymers as well as comparative examples. Integrated peak areas and peak temperatures are calculated by the computerized drawing program supplied by the instrument maker. The diagonal line shown for the random ethylene/octene comparative polymers corresponds to the equation ΔT = -0.1299 (ΔH) + 62.81.

In yet another aspect, the ethylene/a-olefin block interpolymers have a molecular fraction which elutes between 40 °C and 130 °C when fractionated using Temperature Rising Elution Fractionation ("TREF"), characterized in that said fraction has a molar comonomer content at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the $M_w/M_n$ of the comparable interpolymer is also within 10 percent of that of the block interpolymer and/or the comparable interpolymer has a total comonomer content within 10 weight percent of that of the block interpolymer.

In still another aspect, the ethylene/a-olefin block interpolymers are characterized by an elastic recovery, Re, in percent at 300 percent strain and 1 cycle measured on a compression-molded film of an ethylene/a-olefin block interpolymer, and has a density, d, in g/cm$^3$ (grams/cubic centimeter), wherein the numerical values of Re and d satisfy the following relationship when ethylene/a-olefin block interpolymer is substantially free of a cross-linked phase:

$$Re > 1481-1629(d);$$

and preferably

$$Re \geq 1491-1629(d);$$

and more preferably

$$Re \geq 1501-1629(d);$$

and even more preferably

$$Re \geq 1511-1629(d).$$

Figure 3 shows the effect of density on elastic recovery for unoriented films made from certain inventive interpolymers and traditional random copolymers. For the same density, the inventive interpolymers have substantially higher elastic recoveries.

In some embodiments, the ethylene/a-olefin block interpolymers have a tensile strength above 10 MPa, preferably a tensile strength ≥ 11 MPa, more preferably a tensile strength ≥ 13 MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/a-olefin block interpolymers have (1) a storage modulus ratio, G'(25°C)/G'(100°C), of from 1 to 9; and/or (2) a 70°C compression set of less than 80 percent, preferably less than 70 percent, especially less than 60 percent, less than 50 percent, or less than 40 percent, down to a compression set of 0 percent.

In still other embodiments, the ethylene/a-olefin block interpolymers have a 70°C compression set of less than 80 percent, less than 70 percent, less than 60 percent, or less than 50 percent. Preferably, the 70°C compression set of the interpolymers is less than 40 percent, less than 30 percent, less than 20 percent, and may go down to about 0 percent.

In some embodiments, the ethylene/a-olefin block interpolymers have a heat of fusion of less than 85 J/g and/or a pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/a-olefin block interpolymers comprise, in polymerized form, at least 50 mole percent ethylene and have a 70°C compression set of less than 80 percent, preferably less than 70 percent or less than 60 percent, most preferably less than 40 to 50 percent and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks .

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

In another aspect, the inventive polymer is an olefin interpolymer, comprising ethylene and one or more copolymerizable $\alpha$-olefin comonomers in polymerized form, characterized by multiple blocks (i.e., at least two blocks) or segments of two or more polymerized monomer units differing in chemical or physical properties (blocked interpolymer),

most preferably a multi-block copolymer, said block interpolymer having a peak (but not just a molecular fraction) which elutes between 40°C and 130°C (but without collecting and/or isolating individual fractions), characterized in that said peak, has a comonomer content estimated by infra-red spectroscopy when expanded using a full width/half maximum (FWHM) area calculation, has an average molar comonomer content at least 5 percent higher, preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the $M_w/M_n$ of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [$CH_3/CH_2$] from the ATREF infra-red detector, wherein the tallest (highest) peak is identified from the base line, and then the FWHM area is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/a-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl: methylene area ratio [$CH_3/CH_2$] of the TREF peak.

Comonomer content may be measured using any suitable technique, with techniques based on nuclear magnetic resonance (NMR) spectroscopy preferred. Using this technique, said blocked interpolymers have a higher molar comonomer content than a corresponding comparable interpolymer.

Preferably, for interpolymers of ethylene and 1-octene, the block interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene where a plot of the comonomer content versus TREF elution temperature for several comparable ethylene/1-octene interpolymers (random copolymers) are fit to a line representing (- 0.2013) T + 20.07 (solid line). The line for the equation (-0.2013) T + 21.07 is depicted by a dotted line. Also depicted are the comonomer contents for fractions of several block ethylene/1-octene interpolymers of the invention (multi-block copolymers). All of the block interpolymer fractions have significantly higher 1-octene content than either line at equivalent elution temperatures. This result is characteristic of the inventive interpolymer and is believed to be due to the presence of differentiated blocks within the polymer chains, having both crystalline and amorphous nature.

Figure 5 graphically displays the TREF curve and comonomer contents of polymer fractions for Example 5 and comparative Example F to be discussed below. The peak eluting from 40 to 130°C, preferably from 60°C to 95°C for both polymers is fractionated into three parts, each part eluting over a temperature range of less than 10°C. Actual data for Example 5 is represented by triangles. The skilled artisan can appreciate that an appropriate calibration curve may be constructed for interpolymers containing different comonomers and a line used as a comparison fitted to the TREF values obtained from comparative interpolymers of the same monomers, preferably random copolymers made using a metallocene or other homogeneous catalyst composition. Inventive interpolymers are characterized by a molar comonomer content of at least 5 percent greater, preferably at least 10 percent greater than the value determined from the calibration curve at the same TREF elution temperature.

In addition to the above aspects and properties described herein, the inventive polymers can be characterized by one or more additional characteristics. In one aspect, the inventive polymer is an olefin interpolymer, comprising ethylene and one or more copolymerizable $\alpha$-olefin comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that said fraction has a molar comonomer content at least 5 percent higher, preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer(s), and a melt index, density, and molar comonomer content (based on the whole polymer) within 10 percent of that of the blocked interpolymer. Preferably, the $M_w/M_n$ of the comparable interpolymer is also within 10 percent of that of the blocked interpolymer and/or the comparable interpolymer has a total comonomer content within 10 weight percent of that of the blocked interpolymer.

Preferably, the above interpolymers, especially those interpolymers having a whole polymer density from 0.855 to 0.935 g/cm$^3$, and more especially for polymers having more than about 1 mole percent comonomer, the blocked interpolymer has a comonomer content of the TREF fraction eluting between 40 and 130°C greater than or equal to the

quantity (- 0.1356) T + 13.89, more preferably greater than or equal to the quantity (-0.1356) T+ 14.93, and most preferably greater than or equal to the quantity (-0.2013)T + 21.07, where T is the numerical value of the peak ATREF elution temperature of the TREF fraction being compared, measured in °C.

Preferably, for the above interpolymers of ethylene and at least one alpha-olefin, especially those interpolymers having a whole polymer density from 0.855 to 0.935 g/cm$^3$, and more especially for polymers having more than 1 mole percent comonomer, the blocked interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

In still another aspect, the inventive polymer is an olefin interpolymer, comprising ethylene and one or more copolymerizable $\alpha$-olefin comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction having a comonomer content of at least about 6 mole percent, has a melting point greater than about 100°C. For those fractions having a comonomer content from 3 mole percent to 6 mole percent, every fraction has a DSC melting point of about 110°C or higher. More preferably, said polymer fractions, having at least 1 mol percent comonomer, has a DSC melting point that corresponds to the equation:

$$Tm \geq (-5.5926)(\text{mol percent comonomer in the fraction}) + 135.90.$$

In yet another aspect, the inventive polymer is an olefin interpolymer, comprising ethylene and one or more copolymerizable $\alpha$-olefin comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction that has an ATREF elution temperature greater than or equal to 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58,$$

The inventive block interpolymers have a molecular fraction which elutes between 40°C and 130°C, when fractionated using TREF increments, characterized in that every fraction that has an ATREF elution temperature between 40°C and less than 76°C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infra-red detector available from Polymer Char, Valencia, Spain (http://www.polymerchar.com/).

The "composition mode" of the detector is equipped with a measurement sensor ($CH_2$) and composition sensor ($CH_3$) that are fixed narrow band infra-red filters in the region of 2800-3000 cm$^{-1}$. The measurement sensor detects the methylene ($CH_2$) carbons on the polymer (which directly relates to the polymer concentration in solution) while the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-olefin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying a the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [$CH_3/CH_2$] from the ATREF infra-red detector, wherein the tallest (highest) peak is identified from the base line, and then the FWHM area is determined. For a distribution measured using an ATREF peak, the FWHM area is defined as the area under the curve between T1 and

T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infrared method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 65, 98-100.; and Deslauriers, P.J.; Rohlfing, D.C.; Shieh, E.T.; "Quantifying short chain branching microstructures in ethylene-1-olefin copolymers using size exclusion chromatography and Fourier transform infrared spectroscopy (SEC-FTIR)", Polymer (2002), 43, 59-170.

In other embodiments, the inventive ethylene/a-olefin interpolymer is characterized by an average block index, ABI, which is greater than zero and up to 1.0 and a molecular weight distribution, $M_w/M_n$, greater than 1.3. The average block index, ABI, is the weight average of the block index ("BI") for each of the polymer fractions obtained in preparative TREF from 20°C and 110°C, with an increment of 5°C :

$$ABI = \sum (w_i BI_i)$$

where $BI_i$ is the block index for the ith fraction of the inventive ethylene/a-olefin interpolymer obtained in preparative TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_X$ is the ATREF elution temperature for the ith fraction (preferably expressed in Kelvin), $P_X$ is the ethylene mole fraction for the ith fraction, which can be measured by NMR or IR as described above. $P_{AB}$ is the ethylene mole fraction of the whole ethylene/a-olefin block interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As a first order approximation, the $T_A$ and $P_A$ values are set to those for high density polyethylene homopolymer, if the actual values for the "hard segments" are not available. For calculations performed herein, $T_A$ is 372°K, $P_A$ is 1.

$T_{AB}$ is the ATREF temperature for a random copolymer of the same composition and having an ethylene mole fraction of $P_{AB}$. $T_{AB}$ can be calculated from the following equation:

$$\text{Ln } P_{AB} = \alpha/T_{AB} + \beta$$

where $\alpha$ and $\beta$ are two constants which can be determined by calibration using a number of known random ethylene copolymers. It should be noted that $\alpha$ and $\beta$ may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\text{Ln } P = -237.83/T_{ATREF} + 0.639$$

$T_{XO}$ is the ATREF temperature for a random copolymer of the same composition and having an ethylene mole fraction of $P_X$. $T_{XO}$ can be calculated from $LnP_X = \alpha/T_{XO} + \beta$. Conversely, $P_{XO}$ is the ethylene mole fraction for a random copolymer of the same composition and having an ATREF temperature of $T_X$, which can be calculated from $\text{Ln } P_{XO} = \alpha/T_X + \beta$.

Once the block index (BI) for each preparative TREF fraction is obtained, the weight average block index, ABI, for the whole polymer can be calculated. In preferred embodiments, ABI is from 0.1 to 0.3. In other embodiments, ABI is greater than 0.3 and up to 1.0. Preferably, ABI should be in the range of from 0.4 to 0.7, from 0.5 to 0.7, or from 0.6 to 0.9. In some embodiments, ABI is in the range of from 0.3 to 0.9, from 0.3 to 0.8, or from 0.3 to 0.7, from 0.3 to 0.6, from 0.3 to 0.5, or from 0.3 to 0.4. In other embodiments, ABI is in the range of from 0.4 to 1.0, from 0.5 to 1.0, or from

0.6 to 1.0, from 0.7 to 1.0, from 0.8 to 1.0, or from 0.9 to 1.0.

Another characteristic of the inventive ethylene/a-olefin interpolymer is that the inventive ethylene/a-olefin interpolymer comprises at least one polymer fraction which can be obtained by preparative TREF, wherein the fraction has a block index of at least 0.5 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0.

For copolymers of ethylene and an α-olefin, the inventive polymers preferably possess (1) a PDI of greater than 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, $T_g$, of less than -25°C, more preferably less than -30°C, and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0 MPa, at a temperature of 100°C. Moreover, the inventive polymers possess a relatively flat storage modulus as a function of temperature in the range from 0 to 100°C (illustrated in Figure 6) that is characteristic of block copolymers, and heretofore unknown for an olefin copolymer, especially a copolymer of ethylene and one or more $C_{3-8}$ aliphatic α-olefins. (By the term "relatively flat" in this context is meant that log G' (in Pascals) decreases by less than one order of magnitude between 50 and 100°C, preferably between 0 and 100°C).

The inventive interpolymers may be further characterized by a thermomechanical analysis penetration depth of 1 mm at a temperature of at least 90°C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the inventive polymers, as compared to other known polymers. The inventive polymers have significantly better flexibility-heat resistance balance than the other polymers.

Additionally, the ethylene/ α-olefin block interpolymers can have a melt index, $I_2$, from 0.01 to 2000 g/10 minutes, preferably from 0.01 to 1000 g/10 minutes, more preferably from 0.01 to 500 g/10 minutes, and especially from 0.01 to 100 g/10 minutes. In certain embodiments, the ethylene/α-olefin interpolymers have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the ethylene/a-olefin block polymers is 1g/10 minutes, 3 g/10 minutes or 5 g/10 minutes.

The polymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 g/$cm^3$ and preferably from 0.85 g/$cm^3$ to 0.97 g/$cm^3$. In certain embodiments, the density of the ethylene/a-olefin block polymers ranges from 0.860 to 0.925 g/$cm^3$ or 0.867 to 0.910 g/$cm^3$.

The process of making the polymers has been disclosed in the following patent applications: U.S. Provisional Application No. 60/553,906, filed March 17, 2004; U.S. Provisional Application No. 60/662,937, filed March 17, 2005; U.S. Provisional Application No. 60/662,939, filed March 17, 2005; U.S. Provisional Application No. 60/5662938, filed March 17, 2005; PCT Application No. PCT/US2005/008916, filed March 17, 2005; PCT Application No. PCT/US2005/008915, filed March 17, 2005; and PCT Application No. PCT/US2005/008917, filed March 17, 2005. For example, one such method comprises contacting ethylene and one or more addition polymerizable α-olefin monomers under addition polymerization conditions with a catalyst composition comprising:
the admixture or reaction product resulting from combining:

(A) a first olefin polymerization catalyst having a high comonomer incorporation index,
(B) a second olefin polymerization catalyst having a comonomer incorporation index less than 90 percent, preferably less than 50 percent, most preferably less than 5 percent of the comonomer incorporation index of catalyst (A), and
(C) a chain shuttling agent.

Representative catalysts and chain shuttling agent are as follows.

**Catalyst (A1)** is [N-(2,6-di(1-methylethyl)phenyl)amido)(2-isopropylphenyl)(α-naphthalen-2-diyl(6-pyridin-2-diyl)methane)]hafnium dimethyl, prepared according to the teachings of WO 03/40195, 2003US0204017, USSN 10/429,024, filed May 2, 2003, and WO 04/24740.

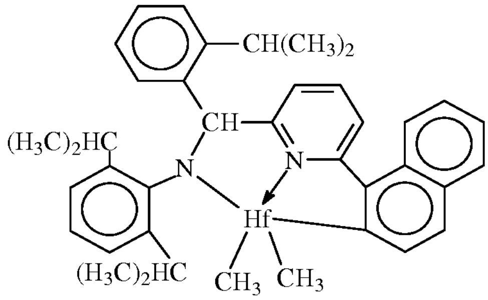

**Catalyst (A2)** is [N-(2,6-di(1-methylethyl)phenyl)amido)(2-methylphenyl)(1,2-phenylene-(6-pyridin-2-diyl)methane)]hafnium dimethyl, prepared according to the teachings of WO 03/40195, 2003US0204017, USSN 10/429,024, filed May 2, 2003, and WO 04/24740.

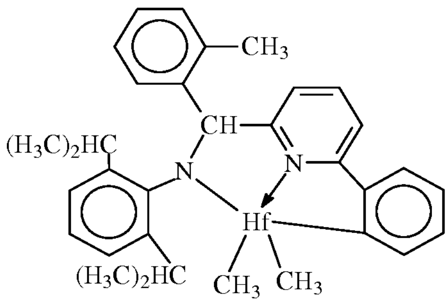

**Catalyst (A3)** is bis[N,N'''-(2,4,6-tri(methylphenyl)amido)ethylenediamine]hafnium dibenzyl.

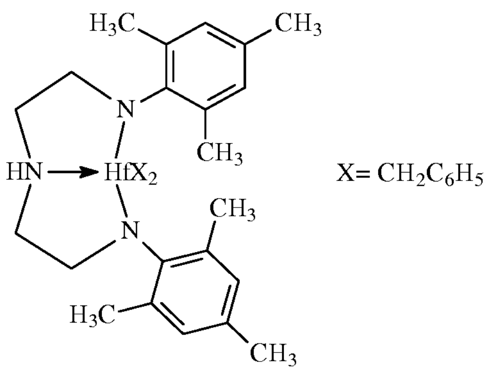

**Catalyst (A4)** is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

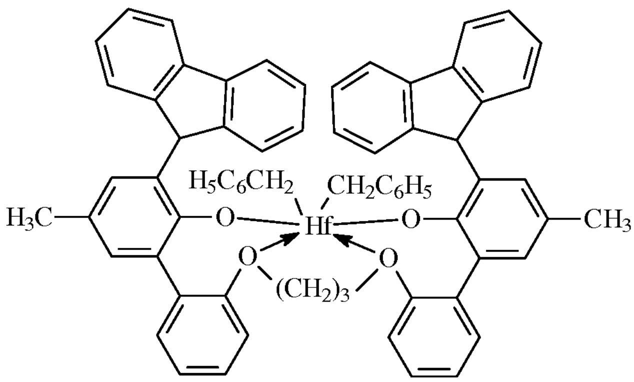

**Catalyst (B1**) is 1,2-bis-(3,5-di-t-butylphenylene)(1-(N-(1-methylethyl)immino)methyl)(2-oxoyl) zirconium dibenzyl

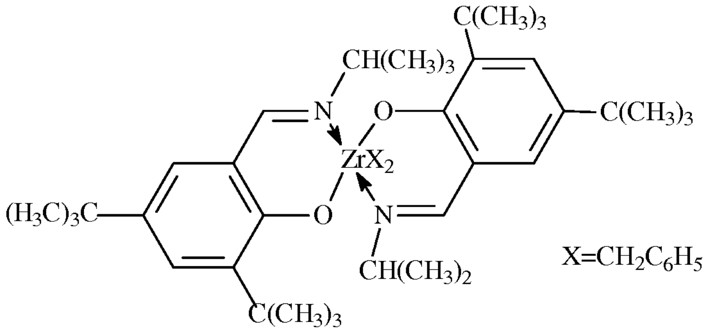

.

**Catalyst (B2)** is 1,2-bis-(3,5-di-t-butylphenylene)(1-(N-(2-methylcyclohexyl)-immino)methyl)(2-oxoyl) zirconium dibenzyl

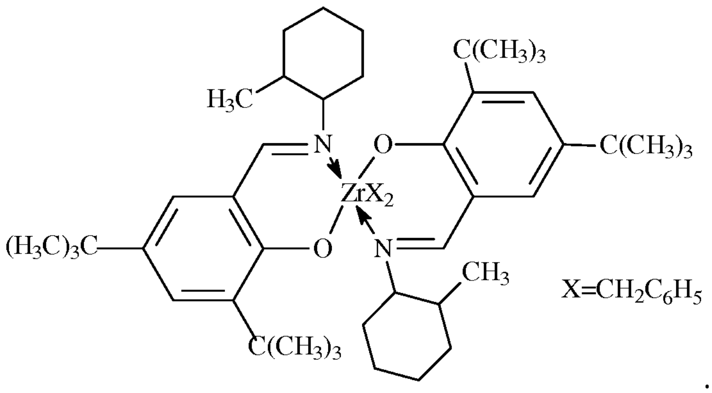

.

**Catalyst (C1)** is (t-butylamido)dimethyl(3-N-pyrrolyl-1,2,3,3a,7a-η-inden-1-yl)silanetitanium dimethyl prepared substantially according to the techniques of USP 6,268,444:

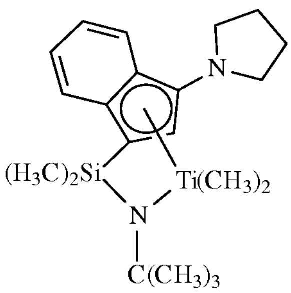

.

**Catalyst (C2)** is (t-butylamido)di(4-methylphenyl)(2-methyl-1,2,3,3a,7a-η-inden-1-yl)silanetitanium dimethyl prepared substantially according to the teachings of US-A-2003/004286:

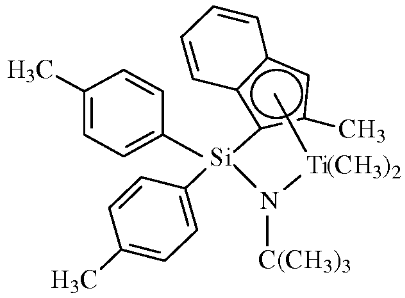

.

**Catalyst (C3)** is (t-butylamido)di(4-methylphenyl)(2-methyl-1,2,3,3a,8a-η-s-indacen-1-yl)silanetitanium dimethyl prepared substantially according to the teachings of US-A-2003/004286:

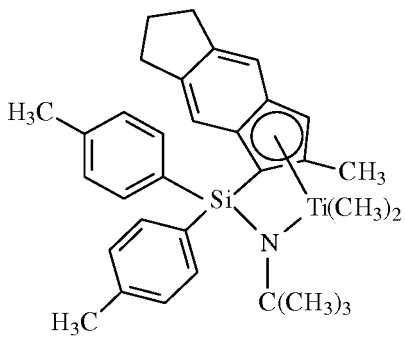

.

**Catalyst (D1)** is bis(dimethyldisiloxane)(indene-1-yl)zirconium dichloride available from Sigma-Aldrich:

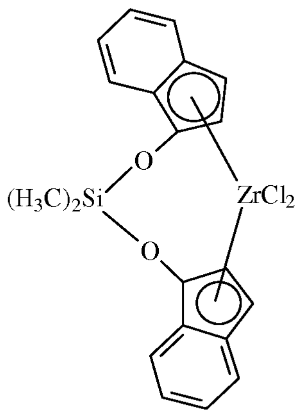

.

**Shuttling Agents** The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{4-20}$ α-olefin, using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using CRYSTAF and DSC as a function of heat of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any $\beta$-hydride elimination is observed in the polymerization of ethylene/ $\alpha$-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene/a-olefin block interpolymers used in the embodiments of the invention are preferably interpolymers of ethylene with at least one $C_3$-$C_{20}$ $\alpha$-olefin. Copolymers of ethylene and a $C_3$-$C_{20}$ $\alpha$-olefin are especially preferred. The interpolymers may further comprise $C_4$-$C_{18}$ diolefin and/or alkenylbenzene. Suitable unsaturated comonomers useful for polymerizing with ethylene include, for example, $C_3$-$C_{20}$ $\alpha$ -olefins such as propylene, isobutylene, 1-butene, 1-hexene, 1-pentene, 4-methyl-1-pentene, 1-heptene, 1-octene, 1-nonene, 1-decene, and the like. 1-butene and 1-octene are especially preferred. Other suitable monomers include styrene, halo- or alkyl-substituted styrenes, vinylbenzocyclobutane, 1,4-hexadiene, and 1,7-octadiene.

Also included are mixtures of such olefins as well as mixtures of such olefins with $C_4$-$C_{40}$ diolefin compounds.

Examples of suitable $\alpha$-olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, $C_4$-$C_{40}$ dienes, including but not limited to 1,3-butadiene, 1,3-pentadiene, 1,4-hexadiene, 1,5-hexadiene, 1,7-octadiene, 1,9-decadiene, other $C_4$-$C_{40}$ $\alpha$-olefins, and

the like. In certain embodiments, the α-olefin is propylene, 1-butene, 1-pentene, 1-hexene, 1-octene or a combination thereof. Although any hydrocarbon containing an α-vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$C_{20}$ alpha olefin, optionally comprising a $C_4$-$C_{20}$ diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

One class of desirable polymers that can be made for use in accordance with embodiments of the invention are elastomeric block interpolymers of ethylene, a $C_3$-$C_{20}$ α-olefin, especially propylene, and optionally one or more diene monomers. Preferred α-olefins for use in this embodiment of the present invention are designated by the formula $CH_2$=CHR*, where R* is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. A particularly preferred α-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

Because the diene containing polymers comprise alternating segments or blocks containing greater or lesser quantities of the diene (including none) and α-olefin, the total quantity of diene and α-olefin may be reduced without loss of subsequent polymer properties. That is, because the diene and α-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have an ethylene content of from 20 to 90 percent, a diene content of from 0.1 to 10 percent, and an α-olefin content of from 10 to 80 percent, based on the total weight of the polymer. Further preferably, the multi-block elastomeric polymers have an ethylene content of from 60 to 90 percent, a diene content of from 0.1 to 10 percent, and an α-olefin content of from 10 to 40 percent, based on the total weight of the polymer. Preferred polymers are high molecular weight polymers, having a weight average molecular weight (Mw) from 10,000 to 2,500,000, preferably from 20,000 to 500,000, more preferably from 20,000 to 350,000, and a polydispersity less than 3.5, more preferably less than 3.0, and a Mooney viscosity (ML (1+4) 125°C) from 1 to 250. More preferably, such polymers have an ethylene content from 65 to 75 percent, a diene content from 0 to 6 percent, and an α-olefin content from 20 to 35 percent.

The ethylene/a-olefin block interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/ α-olefin block interpolymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888, and 4,950,541. One particularly useful functional group is malic anhydride.

The amount of the functional group present in the functional interpolymer can vary. The functional group can typically be present in a copolymer-type functionalized interpolymer in an amount of at least 1.0 weight percent, preferably at least 5 weight percent, and more preferably at least 7 weight percent. The functional group will typically be present

in a copolymer-type functionalized interpolymer in an amount less than 40 weight percent, preferably less than 30 weight percent, and more preferably less than 25 weight percent.

Preparation of Foams

The foams disclosed herein can be prepared from a foamable composition comprising at least one blowing agent, at least one cross-linking agent and at least one ethylene/a-olefin block interpolymer disclosed herein. Optionally, the foamable composition may further comprise at least a second polymer component, at least one other additive or a combination thereof. Non-limiting examples of suitable other additives include grafting initiators, cross-linking catalysts, blowing agent activators (e.g., zinc oxide, zinc stearate and the like), coagents (e.g., triallyl cyanurate), plasticizers, colorants or pigments, stability control agents, nucleating agents, fillers, antioxidants, acid scavengers, ultraviolet stabilizers, flame retardants, lubricants, processing aids, extrusion aids, and combinations thereof.

The foams disclosed herein may take any physical forms known in the art, such as sphere, cylinder, disk, cube, prism, sheet, plank, foam slab stock or irregular shapes. Further, they can be injection molded articles, compression molded articles, or extruded articles. Other useful forms are expandable or foamable particles, moldable foam particles, or beads, and articles formed by expansion and/or coalescing and welding of those particles.

In some footwear applications such as inner soles, midsoles, outer soles, unisoles, and sole inserts, the foams disclosed herein can be substantially cross-linked. A foam is substantially cross-linked when the foam contains more than 5 % of gel per ASTM D-2765-84 Method A. In some embodiments, the foam disclosed herein contains more than 5 % of gel, more than 10 % of gel, more than 15 % of gel, more than 20 % of gel, more than 25 % of gel, more than 30 % of gel, more than 35 % of gel, or more than 40 % of gel per ASTM D-2765-84 Method A. In other embodiments, the foam disclosed herein contains less than about 95 % of gel. In further embodiments, the foam disclosed herein contains less than about 85 % of gel. In further embodiments, the foam disclosed herein contains less than about 75 % of gel. The foregoing % values are weight %.

The foams or foamable compositions disclosed herein can have a density from greater than 150 to 500 kg/$m^3$, from greater than 150 to 400 kg/$m^3$, from greater than 150 to 350 kg/$m^3$, from greater than 150 to 300 kg/$m^3$, or from greater than 150 to 250 kg/$m^3$. In some embodiments, the foam disclosed herein has a density from 175 to 500 kg/$m^3$. In further embodiments, the foam disclosed herein has a density from 200 to 500 kg/$m^3$. The foam disclosed herein can have an average cell size from 0.05 to 5.0 mm, from 0.2 to 2.0 mm, from 0.1 to 1.5 mm, from 0.1 to 1.0 mm, or from 0.2 to 0.6 mm according to ASTM D3576.

The foams or foamable compositions disclosed herein can be either closed-celled or open-celled. Disclosed herein, a foam is a closed cell foam when the foam contains 80 % or more closed cells or less than 20 % open cells according to ASTM D2856-A. In some embodiments, the foams disclosed herein can have less than 1% open cells, less than 10 % open cells, less than 20 % open cells, less than 30 % open cells, less than 40 % open cells, less than 50 % open cells, less than 60 % open cells, less than 10 % open cells, less than 70 % open cells, less than 80 % open cells or less than 90 % open cells. In other embodiments, the foams disclosed herein can have between 10 % and 90 % open cells, between 10 % and 50 % open cells, between 50 % and 90 % open cells, or between 10 % and 30 % open cells.

In some embodiments, the foamable composition comprises the ethylene/a-olefin block interpolymer disclosed herein. In other embodiments, the foamable composition comprises a polymer blend (hereinafter "polymer blend") comprising the ethylene/a-olefin block interpolymer and a second polymer component. Some non-limiting examples of the second polymer component include EVA, polyolefins (e.g., polyethylene and polypropylene), foamable polymers (e.g., polystyrene, ABS, SBS and the like) and combinations thereof. In some embodiments, the second polymer component is EVA, polyethylene, polypropylene, polystyrene, ABS, SBS or a combination thereof. The second polymer component may be blended with the ethylene/a-olefin block interpolymer before it is added to the foamable composition. In some embodiments, the second polymer component is added directly to the foamable composition without pre-blending with the ethylene/a-olefin block interpolymer.

The weight ratio of the ethylene/a-olefin block interpolymer to the second polymer component in the polymer blend can be between 1:99 and 99:1, between 1:50 and 50:1, between 1:25 and 25:1, between 1:10 and 10:1, between 1:9 and 9:1, between 1:8 and 8:1, between 1:7 and about 7:1, between 1:6 and 6:1, between 1:5 and 5:1, between 1:4 and 4:1, between 1:3 and 3:1, between 1:2 and 2:1, between 3:7 and 7:3 or between 2:3 and 3:2.

In some embodiments, the second polymer component is a polyolefin. Any polyolefin that is partially or totally compatible with the ethylene/a-olefin block interpolymer may be used. Non-limiting examples of suitable polyolefins include polyethylenes; polypropylenes; polybutylenes (e.g., polybutene-1); polypentene-1; polyhexene-1; polyoctene-1; polydecene-1; poly-3-methylbutene-1; poly-4-methylpentene-1; polyisoprene; polybutadiene; poly-1,5-hexadiene; interpolymers derived from olefins; interpolymers derived from olefins and other polymers such as polyvinyl chloride, polystyrene, and polyurethane; and mixtures thereof. In some embodiments, the polyolefin is a homopolymer such as polyethylene, polypropylene, polybutylene, polypentene-1, poly-3-methylbutene-1, poly-4-methylpentene-1, polyisoprene, polybutadiene, poly-1,5-hexadiene, polyhexene-1, polyoctene-1 and polydecene-1.

Some non-limiting examples of suitable polyethylenes include ultra low density polyethylene (ULDPE), linear low density polyethylene (LLDPE), low density polyethylene (LDPE), medium density polyethylene (MDPE), high density polyethylene (HDPE), high molecular weight high density polyethylene (HMW-HDPE), ultra high molecular weight polyethylene (UHMW-PE) and combinations thereof. Some non-limiting examples of polypropylenes include low density polypropylene (LDPP), high density polypropylene (HDPP), high-melt strength polypropylene (HMS-PP) and combination thereof. In some embodiments, the second polymer component is or comprises high-melt-strength polypropylene (HMS-PP), low density polyethylene (LDPE) or a combination thereof.

The blowing agents suitable for making the foams disclosed herein can include, but are not limited to, inorganic blowing agents, organic blowing agents, chemical blowing agents and combinations thereof. Some blowing agents are disclosed in Sendijarevic et al., "Polymeric Foams And Foam Technology," Hanser Gardner Publications, Cincinnati, Ohio, 2nd edition, Chapter 18, pages 505-547 (2004).

Non-limiting examples of suitable inorganic blowing agents include carbon dioxide, nitrogen, argon, water, air, nitrogen, and helium. Non-limiting examples of suitable organic blowing agents include aliphatic hydrocarbons having 1-6 carbon atoms, aliphatic alcohols having 1-3 carbon atoms, and fully and partially halogenated aliphatic hydrocarbons having 1-4 carbon atoms. Non-limiting examples of suitable aliphatic hydrocarbons include methane, ethane, propane, n-butane, isobutane, n-pentane, isopentane, neopentane, and the like. Non-limiting examples of suitable aliphatic alcohols include methanol, ethanol, n-propanol, and isopropanol. Non-limiting examples of suitable fully and partially halogenated aliphatic hydrocarbons include fluorocarbons, chlorocarbons, and chlorofluorocarbons. Non-limiting examples of suitable fluorocarbons include methyl fluoride, perfluoromethane, ethyl fluoride, 1,1-difluoroethane (HFC-152a), 1,1,1-trifluoroethane (HFC-143a), 1,1,1,2-tetrafluoro-ethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane. Non-limiting examples of suitable partially halogenated chlorocarbons and chlorofluorocarbons include methyl chloride, methylene chloride, ethyl chloride, 1,1,1-trichloroethane, 1,1-dichloro-1-fluoroethane (HCFC-141b), 1-chloro-1,1 difluoroethane (HCFC-142b), 1,1-dichloro-2,2,2-trifluoroethane (HCFC-123) and 1-chloro-1,2,2,2-tetrafluoroethane(HCFC-124). Non-limiting examples of suitable fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. Non-limiting examples of suitable chemical blowing agents include azodicarbonamide, azodiisobutyronitrile, benezenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, and trihydrazino triazine. In some embodiments, the blowing agent is azodicarbonamide isobutane, $CO_2$, or a mixture of thereof.

The amount of the blowing agent in the foamable composition disclosed herein may be from 0.1 to 20 wt%, from 0.1 to 10 wt%, or from 0.1 to 5 wt%, based on the weight of the ethylene/a-olefin block interpolymer or the polymer blend. In other embodiments, the amount of the blowing agent is from 0.2 to 5.0 moles per kilogram of the interpolymer or polymer blend, from 0.5 to 3.0 moles per kilogram of the interpolymer or polymer blend, or from 1.0 to 2.50 moles per kilogram of the interpolymer or polymer blend.

The foams disclosed herein can be perforated to enhance or accelerate permeation of the blowing agent from the foam cells and/or air into the foam cells. In some embodiments, the foams are perforated to form channels which extend entirely through the foam from one surface to another or partially through the foam. The channels can be spaced up to 2.5 centimeters or up to 1.3 centimeters apart. The channels can be present over substantially an entire surface of the foam and preferably are uniformly dispersed over the surface. In other embodiments, the foams can employ a stability control agent of the type described below in combination with perforation to allow accelerated permeation or release of the blowing agent while maintaining a dimensionally stable foam. The teachings of foam perforation are disclosed in U.S. Patent Nos. 5,424,016 and 5,585,058.

The foamable compositions disclosed herein comprise a cross-linking agent. Any cross-linking agent that can cross-link the ethylene/a-olefin block interpolymer or the polymer blend disclosed herein can be used. The cross-linking agent can be incorporated into the ethylene/a-olefin block interpolymer or the polymer blend in the same manner as the blowing agent. The amount of the cross-linking agent in the foamable compositions or foams can be from about greater than 0 to 10 wt%, from about 0.1 to 7.5 wt%, or from 1 to 5 wt% based on the weight of the ethylene/a-olefin block interpolymer or the polymer blend.

When a cross-linking agent is used, the cross-linking of the foams can be induced by activating the cross-linking agent in the foamable composition. The cross-linking agent can be activated by exposing it to a temperature above its decomposition temperature. Alternatively, the cross-linking agent can be activated by exposing it to a radiation that causes the generation of free radicals from the cross-linking agent. Similarly, the foaming or expansion of the foams disclosed herein can be induced by activating the blowing agent in the foamable composition. In some embodiments, the blowing agent is activated by exposing it to a temperature above its activation temperature. Generally, the activations of the cross-linking and foaming can occur either simultaneously or sequentially. In some embodiments, the activations occur simultaneously. In other embodiments, the activation of the cross-linking occurs first and the activation of the

foaming occurs next. In further embodiments, the activation of the foaming occurs first and the activation of the cross-linking occurs next.

The foamable composition can be prepared or processed at a temperature of less than 150 °C to prevent the decomposition of the blowing agent and the cross-linking agent. When radiation cross-linking is used, the foamable composition can be prepared or processed at a temperature of less than 160 °C to prevent the decomposition of the blowing agent. In some embodiments, the foamable composition can be extruded or processed through a die of desired shape to form a foamable structure. Next, the foamable structure can be expanded and cross-linked at an elevated temperature (e.g., from 150 °C to 250 °C) to activate the blowing agent and the cross-linking agent to form a foam structure. In some embodiments, the foamable structure can be irradiated to cross-link the polymer material, which can then be expanded at the elevated temperature as described above.

Some suitable cross-linking agents have been disclosed in Zweifel Hans et al., "Plastics Additives Handbook," Hanser Gardner Publications, Cincinnati, Ohio, 5th edition, Chapter 14, pages 725-812 (2001); Encyclopedia of Chemical Technology, Vol. 17, 2nd edition, Interscience Publishers (1968); and Daniel Seern, "Organic Peroxides," Vol. 1, Wiley-Interscience, (1970). In some embodiments, there is no cross-linking agent in the foamable compositions or foams disclosed herein.

Non-limiting examples of suitable cross-linking agents include peroxides, phenols, azides, aldehyde-amine reaction products, substituted ureas, substituted guanidines; substituted xanthates; substituted dithiocarbamates; sulfur-containing compounds, such as thiazoles, sulfenamides, thiuramidisulfides, paraquinonedioxime, dibenzoparaquinonedioxime, sulfur; imidazoles; silanes and combinations thereof.

Non-limiting examples of suitable organic peroxide cross-linking agents include alkyl peroxides, aryl peroxides, peroxyesters, peroxycarbonates, diacylperoxides, peroxyketals, cyclic peroxides and combinations thereof. In some embodiments, the organic peroxide is dicumyl peroxide, t-butylisopropylidene peroxybenzene, 1,1-di-t-butyl peroxy-3,3,5-trimethylcyclohexane, 2,5-dimethyl-2,5-di(t-butyl peroxy) hexane, t-butyl-cumyl peroxide, di-t-butyl peroxide, 2,5-dimethyl-2,5-di-(t-butyl peroxy) hexyne or a combination thereof. In one embodiment, the organic peroxide is dicumyl peroxide. Additional teachings regarding organic peroxide cross-linking agents are disclosed in C. P. Park, "Polyolefin Foam", Chapter 9 of Handbook of Polymer Foams and Technology, edited by D. Klempner and K. C. Frisch, Hanser Publishers, pp. 198-204, Munich (1991).

Non-limiting examples of suitable azide cross-linking agents include azidoformates, such as tetramethylenebis(azidoformate); aromatic polyazides, such as 4,4'-diphenylmethane diazide; and sulfonazides, such as p,p'-oxybis(benzene sulfonyl azide). The disclosure of azide cross-linking agents can be found in U.S. Patent Nos. 3,284,421 and 3,297,674.

The poly(sulfonyl azide) is any compound having at least two sulfonyl azide groups (*i.e.,* $-SO_2N_3$) that are reactive towards the ethylene/a-olefin block interpolymer disclosed herein. In some embodiments, the poly(sulfonyl azide)s have a structure of X-R-X wherein each X is $-SO_2N_3$ and R represents an unsubstituted or inertly substituted hydrocarbyl, hydrocarbyl ether or silicon-containing group. In some embodiments, the R group has sufficient carbon, oxygen or silicon, preferably carbon, atoms to separate the sulfonyl azide groups sufficiently to permit a facile reaction between the ethylene/a-olefin interpolymer and the sulfonyl azide groups. In other embodiments, the R group has at least 1, at least 2, or at least 3 carbon, oxygen or silicon, preferably carbon, atoms between the sulfonyl azide groups. The term "inertly substituted" refers to substitution with atoms or groups which do not undesirably interfere with the desired reaction(s) or desired properties of the resulting cross-linked polymers. Such groups include fluorine, aliphatic or aromatic ethers, siloxanes and the like. Non-limiting examples of suitable structures of R include aryl, alkyl, alkaryl, arylalkyl, silanyl, heterocyclyl, and other inert groups. In some embodiments, the R group includes at least one aryl group between the sulfonyl groups. In other embodiments, the R group includes at least two aryl groups (such as when R is 4,4' diphenylether or 4,4'-biphenyl). When R is one aryl group, it is preferred that the group have more than one ring, as in the case of naphthylene bis(sulfonyl azides). In some embodiments, the poly(sulfonyl)azides include 1,5-pentane bis(sulfonylazide), 1,8-octane bis(sulfonyl azide), 1,10-decane bis(sulfonyl azide), 1,10-octadecane bis(sulfonyl azide), 1-octyl-2,4,6-benzene tris(sulfonyl azide), 4,4'-diphenyl ether bis(sulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from about 2 to 5 sulfonyl azide groups per molecule, and combinations thereof. In other embodiments, the poly(sulfonyl azide)s include oxy-bis(4-sulfonylazidobenzene), 2,7-naphthalene bis(sulfonyl azido), 4,4'-bis(sulfonyl azido)biphenyl, 4,4'-diphenyl ether bis(sulfonyl azide) and bis(4-sulfonyl azidophenyl)methane, and combinations thereof.

Non-limiting examples of suitable aldehyde-amine reaction products include formaldehyde-ammonia, formaldehyde-ethylchloride-ammonia, acetaldehyde-ammonia, formaldehyde-aniline, butyraldehyde-aniline, heptaldehyde-aniline, and combinations thereof.

Non-limiting examples of suitable substituted ureas include trimethylthiourea, diethylthiourea, dibutylthiourea, tripentylthiourea, 1,3-bis(2-benzothiazolylmercaptomethyl)urea, N,N-diphenylthiourea, and combinations thereof.

Non-limiting examples of suitable substituted guanidines include diphenylguanidine, di-o-tolylguanidine, diphenylguanidine phthalate, the di-o-tolylguanidine salt of dicatechol borate, and combinations thereof.

Non-limiting examples of suitable substituted xanthates include zinc ethylxanthate, sodium isopropylxanthate, butylxanthic disulfide, potassium isopropylxanthate, zinc butylxanthate, and combinations thereof.

Non-limiting examples of suitable dithiocarbamates include copper dimethyl-, zinc dimethyl-, tellurium diethyl-, cadmium dicyclohexyl-, lead dimethyl-, lead dimethyl-, selenium dibutyl-, zinc pentamethylene-, zinc didecyl-, zinc isopropyloctyl-dithiocarbamate, and combinations thereof.

Non-limiting examples of suitable thiazoles include 2-mercaptobenzothiazole, zinc mercaptothiazolyl mercaptide, 2-benzothiazolyl-N,N-diethylthiocarbamyl sulfide, 2,2'-dithiobis(benzothiazole), and combinations thereof.

Non-limiting examples of suitable imidazoles include 2-mercaptoimidazoline 2-mercapto-4,4,6-trimethyldihydropyrimidine, and combinations thereof.

Non-limiting examples of suitable sulfenamides include N-t-butyl-2-benzothiazole-, N-cyclohexylbenzothiazole-, N,N-diisopropylbenzothiazole-, N-(2,6-dimethylmorpholino)-2-benzothiazole-, N,N-diethylbenzothiazole-sulfenamide, and combinations thereof.

Non-limiting examples of suitable thiuramidisulfides include N,N'-diethyl-, tetrabutyl-, N,N'-diisopropyldioctyl-, tetramethyl-, N,N'-dicyclohexyl-, N,N'-tetralaurylthiuramidisulfide, and combinations thereof.

In some embodiments, the cross-linking agents are silanes. Any silane that can effectively graft to and/or cross-link the ethylene/a-olefin block interpolymer or the polymer blend disclosed herein can be used. Non-limiting examples of suitable silane cross-linking agents include unsaturated silanes that comprise an ethylenically unsaturated hydrocarbyl group, such as a vinyl, allyl, isopropenyl, butenyl, cyclohexenyl or gamma-(meth)acryloxy allyl group, and a hydrolyzable group such as a hydrocarbyloxy, hydrocarbonyloxy, and hydrocarbylamino group. Non-limiting examples of suitable hydrolyzable groups include methoxy, ethoxy, formyloxy, acetoxy, proprionyloxy, alkyl and arylamino groups. In other embodiments, the silanes are the unsaturated alkoxy silanes which can be grafted onto the interpolymer. Some of these silanes and their preparation methods are more fully described in U.S. Pat. No. 5,266,627. In further embodiments, the silane cross-linking agents are vinyltrimethoxysilane, vinyltriethoxysilane, vinyltris(2-methoxyethoxy)silane, vinyltriacetoxysilane, vinylmethyldimethoxysilane, 3-methacryloyloxypropyltrimethoxysilane, and combinations thereof.

The amount of the silane cross-linking agent can vary widely, depending upon the nature of the ethylene/a-olefin block interpolymer or the polymer blend, the silane employed, the processing conditions, the amount of grafting initiator, the ultimate application, and other factors. When vinyltrimethoxysilane (VTMOS) is used, the amount of VTMOS is generally at least about 0.1 weight percent, at least about 0.5 weight percent, or at least about 1 weight percent, based on the combined weight of the silane cross-linking agent and the interpolymer or the polymer blend.

Optionally, the foamable composition disclosed herein may comprise a grafting initiator. Those skilled in the art will be readily able to select the amount of the grafting initiator based on the characteristics of the ethylene/a-olefin block interpolymer or the polymer blend, such as molecular weight, molecular weight distribution, comonomer content, as well as the presence of cross-linking enhancing coagents, additives, and the like.

Optionally, the foamable composition disclosed herein may comprise a catalyst. Any cross-linking catalyst that can promote the cross-linking of the ethylene/a-olefin block interpolymer or the polymer blend can be used. Non-limiting examples of suitable catalysts include organic bases, carboxylic acids, and organometallic compounds. In some embodiments, the catalyst includes organic titanates and complexes or carboxylates of lead, cobalt, iron, nickel, zinc and tin. In other embodiments, the catalyst is or comprises dibutyltin dilaurate, dioctyltin maleate, dibutyltin diacetate, dibutyltin dioctanoate, stannous acetate, stannous octanoate, lead naphthenate, zinc caprylate, cobalt naphthenate or a combination thereof. In further embodiments, the catalyst is or comprises a tin carboxylate such as dibutyltin dilaurate and dioctyltin maleate.

Alternatively, the cross-linking of the foams or foamable compositions disclosed herein can be effected by using radiation. Non-limiting examples of suitable radiation include electron beam or beta ray, gamma rays, X-rays, or neutron rays. Radiation is believed to activate the cross-linking by generating radicals in the polymer which may subsequently combine and cross-link. Additional teachings concerning radiation cross-linking are disclosed in C. P. Park, *supra,* pages 198-204. In some embodiments, the foam or foamable composition is not cross-linked by radiation.

Radiation dosage generally depends upon many factors. Those skilled in the art will be readily able to select suitable radiation levels based on thickness and geometry of the article to be irradiated, as well as the characteristics of the ethylene/a-olefin block interpolymer or the polymer blend, such as molecular weight, molecular weight distribution, comonomer content, the presence of cross-linking enhancing coagents, additives (e.g., oil), and the like. In general, the dosage does not exceed what is required to effect the desired level of cross-linking. In some embodiments, the dosage causes more than 5 weight % gel in the foam per ASTM D-2765-84 Method A.

In some embodiments, dual cure systems, which comprises at least two activation methods selected from cross-linking agents and radiation, can be effectively employed. For instance, it may be desirable to employ a peroxide cross-linking agent in conjunction with a silane cross-linking agent, a peroxide cross-linking agent in conjunction with radiation, a sulfur-containing cross-linking agent in conjunction with a silane cross-linking agent, or the like.

Those skilled in the art will be readily able to select the amount of cross-linking agent, based on the desired

cross-linking level, the characteristics of the polymer such as molecular weight, molecular weight distribution, comonomer content, the presence of cross-linking enhancing coagents, other additives and the like. Since it is expressly contemplated that the ethylene/a-olefin block interpolymer can be blended with other polymers such as EVA and polyolefins prior to cross-linking, those skilled in the art may use the disclosure herein as a reference point in optimizing the amount of the cross-linking agent for a particular polymer in question.

Optionally, the foams or foamable compositions disclosed herein can comprise at least one other additive. Any foam additive that can improve and/or control the processibility, appearance, physical, chemical, and/or mechanical properties of the foam structures or articles can be used. Non-limiting examples of suitable other additives include grafting initiators, cross-linking catalysts, blowing agent activators (e.g., zinc oxide, zinc stearate and the like), coagents (e.g., triallyl cyanurate), plasticizers, colorants or pigments, stability control agents, nucleating agents, fillers, antioxidants, acid scavengers, ultraviolet (UV) stabilizers, flame retardants, lubricants, processing aids, extrusion aids, and combinations thereof. The total amount of the other additives can range from about greater than 0 to about 80%, from about 0.001 % to about 70%, from about 0.01 % to about 60%, from about 0.1 % to about 50%, from about 1 % to about 40%, or from about 10 % to about 50% of the total weight of the foam. Some suitable additives have been described in Zweifel Hans et al., "Plastics Additives Handbook," Hanser Gardner Publications, Cincinnati, Ohio, 5th edition (2001).

The foams or foamable compositions disclosed herein may optionally comprise a stability control agent or gas permeation modifier. Any stability control agent that can enhance the dimensional stability of the foams can be used. Non-limiting examples of suitable stability control agents include amides and esters of $C_{10-24}$ fatty acids. Such agents are described in U.S. Patent Nos. 3,644,230 and 4,214,054. In some embodiments, the stability control agents include stearyl stearamide, glycerol monostearate, glycerol monobehenate, sorbitol monostearate and combinations thereof. In general, the amount of the stability control agents is from about 0.1 to about 10 parts, from about 0.1 to about 5 parts, or from about 0.1 to about 3 parts by weight per hundred parts by weight of the polymer. In some embodiment, the stability control agent is glycerol monostearate.

The foams or foamable compositions disclosed herein may optionally comprise a nucleating agent. Any nucleating agent that can control the size of foam cells can be used. Non-limiting examples of suitable nucleating agents include inorganic substances such as calcium carbonate, talc, clay, titanium oxide, silica, barium sulfate, diatomaceous earth, citric acid, sodium bicarbonate, sodium carbonate, and combinations thereof. In some embodiments, the nucleating agent is a combination of citric acid and sodium bicarbonate or a combination of citric acid and sodium carbonate. In other embodiments, the nucleating agent is HYDROCEROL® CF 20 from Clariant Corporation, Charlotte, NC. The amount of nucleating agent employed can range from 0.01 to 5 parts by weight per hundred parts by weight of the polymer.

In some embodiments, the foams or foamable compositions disclosed herein comprise an antioxidant. Any antioxidant that can prevent the oxidation of polymer components and organic additives in the foams can be added to the foams disclosed herein. Non-limiting examples of suitable antioxidants include aromatic or hindered amines such as alkyl diphenylamines, phenyl-$\alpha$- naphthylamine, alkyl or aralkyl substituted phenyl-$\alpha$-naphthylamine, alkylated p-phenylene diamines, tetramethyl-diaminodiphenylamine and the like; phenols such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (e.g., IRGANOX™ 1010, from Ciba Geigy, New York); acryloyl modified phenols; octadecyl-3,5-di-t-butyl-4-hydroxycinnamate (e.g., IRGANOX™ 1076, commercially available from Ciba Geigy); phosphites and phosphonites; hydroxylamines; benzofuranone derivatives; and combinations thereof. Where used, the amount of the antioxidant in the foam can be from greater than 0 to 5 wt%, from 0.0001 to 2.5 wt%, from 0.001 to 1 wt%, or from 0.001 to 0.5 wt% of the total weight of the foam. Some antioxidants have been described in Zweifel Hans et al., "Plastics Additives Handbook," Hanser Gardner Publications, Cincinnati, Ohio, 5th edition, Chapter 1, pages 1-140 (2001).

In other embodiments, the foams or foamable compositions disclosed herein comprise a UV stabilizer. Any UV stabilizer that may prevent or reduce the degradation of the foams by UV radiations can be added to the foams disclosed herein. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Where used, the amount of the UV stabilizer in the foam can be from greater than 0 to 5 wt%, from 0.01 to 3 wt%, from 0.1 to 2 wt%, or from 0.1 to 1 wt% of the total weight of the foam. Some UV stabilizers have been described in Zweifel Hans et al., "Plastics Additives Handbook," Hanser Gardner Publications, Cincinnati, Ohio, 5th edition, Chapter 2, pages 141-426 (2001).

In further embodiments, the foams or foamable compositions disclosed herein comprise a colorant or pigment. Any colorant or pigment that can change the look of the foams to human eyes can be added to the foams disclosed herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Where used, the amount of

the colorant or pigment in the foam can be from about greater than 0 to about 10 wt%, from about 0.1 to about 5 wt%, or from about 0.25 to about 2 wt% of the total weight of the foam. Some colorants have been described in Zweifel Hans et al., "Plastics Additives Handbook," Hanser Gardner Publications, Cincinnati, Ohio, 5th edition, Chapter 15, pages 813-882 (2001).

Optionally, the foams or foamable compositions disclosed herein can comprise a filler. Any filler which can be used to adjust, *inter alia,* volume, weight, costs, and/or technical performance can be added to the foams disclosed herein. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Where used, the amount of the filler in the foam can be from greater than 0 to 80 wt%, from 0.1 to 60 wt%, from 0.5 to 40 wt%, from 1 to 30 wt%, or from 10 to 40 wt% of the total weight of the foam. Some fillers have been disclosed in U.S. Patent No. 6,103,803 and Zweifel Hans et al., "Plastics Additives Handbook," Hanser Gardner Publications, Cincinnati, Ohio, 5th edition, Chapter 17, pages 901-948 (2001).

Optionally, the foams or foamable compositions disclosed herein can comprise a lubricant. Any lubricant that can be used, *inter alia,* to modify the rheology of the molten foamable compositions, to improve the surface finish of molded foamed articles, and/or to facilitate the dispersion of fillers or pigments can be added to the foams disclosed herein. Non-limiting examples of suitable lubricants include fatty alcohols and their dicarboxylic acid esters, fatty acid esters of short-chain alcohols, fatty acids, fatty acid amides, metal soaps, oligomeric fatty acid esters, fatty acid esters of long-chain alcohols, montan waxes, polyethylene waxes, polypropylene waxes, natural and synthetic paraffin waxes, fluoropolymers and combinations thereof. Where used, the amount of the lubricant in the foam can be from greater than 0 to 5 wt%, from 0.1 to 4 wt%, or from 0.1 to 3 wt% of the total weight of the foam. Some suitable lubricants have been disclosed in Zweifel Hans et al., "Plastics Additives Handbook," Hanser Gardner Publications, Cincinnati, Ohio, 5th edition, Chapter 5, pages 511-552 (2001).

Optionally, the foams or foamable compositions disclosed herein can comprise an antistatic agent. Any antistatic agent that can increase the conductivity of the foams and to prevent static charge accumulation can be added to the foams disclosed herein. Non-limiting examples of suitable antistatic agents include conductive fillers (*e.g.,* carbon black, metal particles and other conductive particles), fatty acid esters (*e.g.,* glycerol monostearate), ethoxylated alkylamines, diethanolamides, ethoxylated alcohols, alkylsulfonates, alkylphosphates, quaternary ammonium salts, alkylbetaines and combinations thereof. Where used, the amount of the antistatic agent in the foam can be from greater than 0 to 5 wt%, from 0.01 to 3 wt%, or from 0.1 to 2 wt% of the total weight of the foam. Some suitable antistatic agents have been disclosed in Zweifel Hans et al., "Plastics Additives Handbook," Hanser Gardner Publications, Cincinnati, Ohio, 5th edition, Chapter 10, pages 627-646 (2001).

The processes of making polyolefin foams are described in C. P. Park, "Polyolefin Foam", Chapter 9 of Handbook of Polymer Foams and Technology, edited by D. Klempner and K. C. Frisch, Hanser Publishers, Munich (1991).

The ingredients of the foamable composition can be mixed or blended in any suitable mixing or blending devices known to skilled artisans. The ingredients in the foamable composition can then be mixed at a temperature below the decomposition temperature of the blowing agent and the cross-linking agent to ensure that all ingredients are homogeneously mixed and remain intact. After the foamable composition is relatively homogeneously mixed, the composition is shaped and then exposed to conditions (e.g. heat, pressure, shear, *etc.*) over a sufficient period of time to activate the blowing agent and the cross-linking agent to make the foam.

In some embodiments, the ingredients of the foamable composition can be mixed and melt blended by any mixing or blending device known to a person of ordinary skill in the art. Non-limiting examples of suitable mixing or blending devices include extruders, mixers, blenders, mills, dispersers, homogenizers and the like. In other embodiments, the blowing agent is dry-blended with the ethylene/a-olefin interpolymer or the polymer blend before the foamable composition is heated to a molten form. In further embodiments, the blowing agent is added when the foamable composition is in a molten phase. In some embodiments, the foamable composition disclosed herein is extruded through a die where the cross-linking is activated. Next, the extruded foamable composition may be exposed to an elevated temperature to activate the blowing agent to form the foams.

The foams disclosed herein can be prepared by conventional extrusion foaming processes. The foam can generally be prepared by heating the ethylene/a-olefin block interpolymer or the polymer blend to form a plasticized or melt polymer material, incorporating therein a blowing agent to form a foamable composition, and extruding the foamable composition through a die to form foam products. Prior to mixing with the blowing agent, the ethylene/a-olefin block interpolymer can be heated to a temperature at or above its glass transition temperature or melting point. The blowing agent can be incorporated or mixed into the molten ethylene/a-olefin block interpolymer by any means known in the art

such as with an extruder, mixer, blender, and the like. The blowing agent can be mixed with the molten ethylene/a-olefin block interpolymer at an elevated pressure sufficient to prevent substantial expansion of the molten ethylene/a-olefin block interpolymer and to generally disperse the blowing agent homogeneously therein. Optionally, a nucleating agent can be blended in the interpolymer melt or dry blended with the ethylene/a-olefin block interpolymer prior to plasticizing or melting. The foamable composition can be cooled to a lower temperature to optimize physical characteristics of the foam structure. The foamable composition can be then extruded or conveyed through a die of desired shape to a zone of reduced or lower pressure to form the foam structure. The zone of lower pressure can be at a pressure lower than that in which the foamable composition is maintained prior to extrusion through the die. The lower pressure can be super-atmospheric or sub-atmospheric (vacuum), but is preferably at an atmospheric level.

In some embodiments, the foams disclosed herein are formed in a coalesced strand form by extrusion of the ethylene/a-olefin block interpolymer through a multi-orifice die. The orifices can be arranged so that contact between adjacent streams of the molten extrudate occurs during the foaming process and the contacting surfaces adhere to one another with sufficient adhesion to result in a unitary foam structure. The streams of the molten extrudate exiting the die can take the form of strands or profiles, which can desirably foam, coalesce, and adhere to one another to form a unitary structure. Desirably, the coalesced individual strands or profiles should remain adhered in a unitary structure to prevent strand delamination under stresses encountered in preparing, shaping, and using the foams. Apparatuses and methods for producing foam structures in coalesced strand form are disclosed in U.S. Patent Nos. 3,573,152 and 4,824,720.

In other embodiments, the foams disclosed herein are formed by an accumulating extrusion process as seen in U.S. Patent No. 4,323,528. In the accumulating extrusion process, low density foams having large lateral cross-sectional areas are prepared by: 1) forming under pressure a foamable composition of the ethylene/a-olefin block interpolymer and a blowing agent at a temperature at which the viscosity of the foamable composition is sufficient to retain the blowing agent when the foamable composition is allowed to expand; 2) extruding the foamable composition into a holding zone maintained at a temperature and pressure which does not allow the foamable composition to foam, the holding zone having an outlet die defining an orifice opening into a zone of lower pressure at which the foamable composition foams, and an openable gate closing the die orifice; 3) periodically opening the gate; 4) substantially concurrently applying mechanical pressure by a movable ram on the foamable composition to eject it from the holding zone through the die orifice into the zone of lower pressure, at a rate greater than that at which substantial foaming in the die orifice occurs and less than that at which substantial irregularities in cross-sectional area or shape occurs; and 5) permitting the ejected foamable composition to expand unrestrained in at least one dimension to produce the foam structure.

In some embodiments, the foams disclosed herein are formed into non-crosslinked foam beads suitable for molding into articles. To make the foam beads, discrete ethylene/a-olefin block interpolymer particles such as granulated ethylene/a-olefin block interpolymer pellets are: (1) suspended in a liquid medium in which they are substantially insoluble such as water; (2) impregnated with a blowing agent by introducing the blowing agent into the liquid medium at an elevated pressure and temperature in an autoclave or other pressure vessel; and (3) rapidly discharged into the atmosphere or a region of reduced pressure to expand to form the foam beads. This process is well taught in U.S. Patent Nos. 4,379,859 and 4,464,484.

In a derivative of the above process, styrene monomer can be impregnated into the suspended ethylene/a-olefin block interpolymer pellets prior to impregnation with blowing agent to form a graft interpolymer with the ethylene/a-olefin block interpolymer. The resulted graft interpolymer beads can be cooled and discharged from the vessel substantially unexpanded. The beads are then expanded and molded by the conventional expanded polystyrene bead molding process. The process of making some graft interpolymer beads is described in U.S. Patent No. 4,168,353.

The foam beads can be molded into articles by any method known to a person of ordinary skill in the art. In some embodiments, the foam beads are charged to the mold, compressed by compressing the mold, and heated with a heat source such as steam to effect coalescing and welding of the foam beads to form the articles. In other embodiments, the foam beads are impregnated with air or other blowing agent at an elevated pressure and temperature prior to charging to the mold. In further embodiments, the foam beads are heated prior to charging to the mold. The beads can then be molded to blocks or shaped articles by a suitable molding method known in the art. Some of the methods are taught in U.S. Pat. Nos. 3,504,068 and 3,953,558 and in C. P. Park, *supra,* p. 191, pp. 197-198, and pp. 227-229.

In some embodiments, the foams disclosed herein can be prepared by either compression molding or injection molding. In other embodiments, the foams are prepared by compression molding at a temperature above the decomposition temperatures of the peroxide and the blowing agent which is followed by a post expansion when the mold open. In further embodiments, the foams are prepared by injection molding the ethylene/a-olefin block interpolymer melts at temperatures below the decomposition temperatures of the peroxide and the blowing agent into molds at temperature above the decomposition temperatures of the peroxide and the blowing agent which is followed by a post expansion after opening the molds (from 160 to 190°C).

In some embodiments, microcellular thermoplastic vulcanizate ("TPV") foams could be made using supercritical fluids (e.g., CO or $N_2$). Such techniques are taught in U.S. Patent Nos. 5,158,986; 5,160,674; 5,334,356; 5,866,053;

6,169,122; 6,284,810; and 6,294,115. The methods disclosed therein can be used in embodiments of the invention with or without modifications. TPV compositions based on the inventive polymers disclosed herein are taught in U.S. Provisional Application No. 60/718,186, filed September 16, 2005. Such TPV compositions could be used in embodiments of the invention to make microcellular TPV foams.

Blending of the Ingredients Of the Foams

The ingredients of the foams, *i.e.,* the ethylene/a-olefin block interpolymer, the blowing agent, the optional second polymer component (*e.g.*, EVA, polyethylene, and polypropylene) and additives (*e.g.*, the cross-linking agent) can be mixed or blended using methods known to a person of ordinary skill in the art. Non-limiting examples of suitable blending methods include melt blending, solvent blending, extruding, and the like.

In some embodiments, the ingredients of the foams are melt blended by a method as described by Guerin et al. in U.S. Patent No. 4,152,189. First, all solvents, if there are any, are removed from the ingredients by heating to an appropriate elevated temperature of about 100°C to about 200°C or about 150°C to about 175°C at a pressure of about 5 torr (667 Pa) to about 10 torr (1333 Pa). Next, the ingredients are weighed into a vessel in the desired proportions and the foam is formed by heating the contents of the vessel to a molten state while stirring.

In other embodiments, the ingredients of the foams are processed using solvent blending. First, the ingredients of the desired foam are dissolved in a suitable solvent and the mixture is then mixed or blended. Next, the solvent is removed to provide the foam.

In further embodiments, physical blending devices that can provide dispersive mixing, distributive mixing, or a combination of dispersive and distributive mixing can be used in preparing homogenous blends. Both batch and continuous methods of physical blending can be used. Non-limiting examples of batch methods include those methods using BRABENDER® mixing equipments (*e.g.*, BRABENDER PREP CENTER®, available from C. W. Brabender Instruments, Inc., South Hackensack, N.J.) or BANBURY® internal mixing and roll milling (available from Farrel Company, Ansonia, Conn.) equipment. Non-limiting examples of continuous methods include single screw extruding, twin screw extruding, disk extruding, reciprocating single screw extruding, and pin barrel single screw extruding. In some embodiments, the additives can be added into an extruder through a feed hopper or feed throat during the extrusion of the ethylene/a-olefin block interpolymer, the optional second polymer component or the foam. The mixing or blending of polymers by extrusion has been described in C. Rauwendaal, "Polymer Extrusion", Hanser Publishers, New York, NY, pages 322-334 (1986).

When one or more additives are required in the foams, the desired amounts of the additives can be added in one charge or multiple charges to the ethylene/a-olefin block interpolymer, the second polymer component or the polymer blend. Furthermore, the addition can take place in any order. In some embodiments, the additives are first added and mixed or blended with the ethylene/a-olefin block interpolymer and then the additive-containing interpolymer is blended with the second polymer component. In other embodiments, the additives are first added and mixed or blended with the second polymer component and then the additive-containing second polymer component is blended with the ethylene/a-olefin block interpolymer. In further embodiments, the ethylene/a-olefin block interpolymer is blended with the second polymer component first and then the additives are blended with the polymer blend.

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

## EXAMPLES

### Testing Methods

In the examples that follow, the following analytical techniques are employed: **GPC Method for Samples 1-4 and A-C**

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx Rapid GPC system is used to determine the molecular weight data for each sample. A Gilson 350 pump set at 2.0 ml/min flow rate is used to pump helium-purged 1,2-dichlorobenzene stabilized with 300 ppm Ionol as the mobile phase through three Plgel 10 micrometer (μm) Mixed B 300mm x 7.5mm columns placed in series and heated to 160°C. A Polymer Labs ELS 1000 Detector is used with the Evaporator set to 250°C, the Nebulizer set to 165°C, and

the nitrogen flow rate set to 1.8 SLM at a pressure of 60-80 psi (400-600 kPa) $N_2$. The polymer samples are heated to 160°C and each sample injected into a 250 μl loop using the liquid-handling robot and a heated needle. Serial analysis of the polymer samples using two switched loops and overlapping injections are used. The sample data is collected and analyzed using Symyx Epoch™ software. Peaks are manually integrated and the molecular weight information reported uncorrected against a polystyrene standard calibration curve.

### Standard CRYSTAF Method

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

### DSC Standard Method (Excluding Samples 1-4 and A-C)

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to -40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

### GPC Method (Excluding Samples 1-4 and A-C)

The gel permeation chromatographic system consists of either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431(M_{polystyrene})$.

Polyethylene equivalent molecular weight calculations are performed using Viscotek TriSEC software Version 3.0.

### Compression Set

Compression set is measured according to ASTM D 395. The sample is prepared by stacking 25.4 mm diameter

round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°C, followed by cooling inside the press with cold running water at 86 MPa.

**Density**

Samples for density measurement are prepared according to ASTM D 1928. Measurements are made within one hour of sample pressing using ASTM D792, Method B.

**Flexural/Secant Modulus/ Storage Modulus**

Samples are compression molded using ASTM D 1928. Flexural and 2 percent secant moduli are measured according to ASTM D-790. Storage modulus is measured according to ASTM D 5026-01 or equivalent technique.

**Optical properties**

Films of 0.4 mm thickness are compression molded using a hot press (Carver Model #4095-4PR1001R). The pellets are placed between polytetrafluoroethylene sheets, heated at 190 °C at 55 psi (380 kPa) for 3 min, followed by 1.3 MPa for 3 min, and then 2.6 MPa for 3 min. The film is then cooled in the press with running cold water at 1.3 MPa for 1 min. The compression molded films are used for optical measurements, tensile behavior, recovery, and stress relaxation.

Clarity is measured using BYK Gardner Haze-gard as specified in ASTM D 1746.

45° gloss is measured using BYK Gardner Glossmeter Microgloss 45° as specified in ASTM D-2457.

Internal haze is measured using BYK Gardner Haze-gard based on ASTM D 1003 Procedure A. Mineral oil is applied to the film surface to remove surface scratches.

**Mechanical Properties - Tensile, Hysteresis, and Tear**

Stress-strain behavior in uniaxial tension is measured using ASTM D 1708 microtensile specimens. Samples are stretched with an Instron at 500 % $min^{-1}$ at 21°C. Tensile strength and elongation at break are reported from an average of 5 specimens.

100% and 300% Hysteresis is determined from cyclic loading to 100% and 300% strains using ASTM D 1708 microtensile specimens with an Instron™ instrument. The sample is loaded and unloaded at 267 % $min^{-1}$ for 3 cycles at 21°C. Cyclic experiments at 300% and 80°C are conducted using an environmental chamber. In the 80 °C experiment, the sample is allowed to equilibrate for 45 minutes at the test temperature before testing. In the 21 °C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\%\,\mathrm{Recovery} = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the 1st unloading cycle.

Stress relaxation is measured at 50 percent strain and 37 °C for 12 hours using an INSTRON™ instrument equipped with an environmental chamber. The gauge geometry was 76 mm x 25 mm x 0.4 mm. After equilibrating at 37°C for 45 min in the environmental chamber, the sample was stretched to 50% strain at 333% $min^{-1}$. Stress was recorded as a function of time for 12 hours. The percent stress relaxation after 12 hours was calculated using the formula:

$$\%\ Stress\ Relaxation = \frac{L_0 - L_{12}}{L_0} \times 100$$

where $L_0$ is the load at 50% strain at 0 time and $L_{12}$ is the load at 50 percent strain after 12 hours.

Tensile notched tear experiments are carried out on samples having a density of 0.88 g/cc or less using an INSTRON™ instrument. The geometry consists of a gauge section of 76 mm x 13 mm x 0.4 mm with a 2 mm notch cut

into the sample at half the specimen length. The sample is stretched at 508 mm $min^{-1}$ at 21 °C until it breaks. The tear energy is calculated as the area under the stress-elongation curve up to strain at maximum load. An average of at least 3 specimens are reported.

### TMA

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with 1.5 mm radius tip (P/N N519-0416) is applied to the surface of the sample disc with IN force. The temperature is raised at 5°C/min from 25°C. The probe penetration distance is measured as a function of temperature. The experiment ends when the probe has penetrated 1 mm into the sample.

### DMA

Dynamic Mechanical Analysis (DMA) is measured on compression molded disks formed in a hot press at 180°C at 10 MPa pressure for 5 minutes and then water cooled in the press at 90°C / min. Testing is conducted using an ARES controlled strain rheometer (TA instruments) equipped with dual cantilever fixtures for torsion testing.

A 1.5mm plaque is pressed and cut in a bar of dimensions 32x12mm. The sample is clamped at both ends between fixtures separated by 10mm (grip separation $\Delta L$) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation $\Delta L$ increases with the temperature, particularly above the melting or softening point of the polymer sample. The test stops at the maximum temperature or when the gap between the fixtures reaches 65 mm.

### Melt Index

Melt index, or $I_2$, is measured in accordance with ASTM D 1238, Condition 190°C/2.16 kg. Melt index, or $I_{10}$ is also measured in accordance with ASTM D 1238, Condition 190°C/10 kg.

### ATREF

Analytical temperature rising elution fractionation (ATREF) analysis is conducted according to the method described in USP 4,798,081 and Wilde, L.; Ryle, T.R.; Knobeloch, D.C.; Peat, I.R.; Determination of Branching Distributions in Polyethylene and Ethylene Copolymers, J. Polym. Sci., 20, 441-455 (1982). The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared detector. An ATREF chromatogram curve is then generated by eluting the crystallized polymer sample from the column by slowly increasing the temperature of the eluting solvent (trichlorobenzene) from 20 to 120°C at a rate of 1.5°C/min.

### $^{13}C$ NMR Analysis

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL ECLIPSE™ 400 MHz spectrometer or a Varian Unity PLUS™ 400 MHz spectrometer, corresponding to a $^{13}C$ resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989).

### Polymer Fractionation by TREF

Large-scale TREF fractionation is carried by dissolving 15-20 g of polymer in 2 liters of 1,2,4-trichlorobenzene (TCB)by stirring for 4 hours at 160°C. The polymer solution is forced by 15 psig (100 kPa) nitrogen onto a 3 inch by 4

foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel, 0.028" (0.7mm) diameter cut wire shot (available from Pellets, Inc. 63 Industrial Drive, North Tonawanda, NY, 14120). The column is immersed in a thermally controlled oil jacket, set initially to 160 °C. The column is first cooled ballistically to 125 °C, then slow cooled to 20 °C at 0.04 °C per minute and held for one hour. Fresh TCB is introduced at about 65 ml/min while the temperature is increased at 0.167 °C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60 °C and weighed on an analytical balance before further testing.

**Melt Strength**

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 mm/sec$^2$. The required tensile force is recorded as a function of the take-up speed of the nip rolls. The maximum tensile force attained during the test is defined as the melt strength. In the case of polymer melt exhibiting draw resonance, the tensile force before the onset of draw resonance was taken as melt strength. The melt strength is recorded in centiNewtons ("cN").

**Catalysts**

The term "overnight", if used, refers to a time of approximately 16-18 hours, the term "room temperature", refers to a temperature of 20-25 °C, and the term "mixed alkanes" refers to a commercially obtained mixture of $C_{6-9}$ aliphatic hydrocarbons available under the trade designation ISOPAR E®, from ExxonMobil Chemical Company. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

**MMAO** refers to modified methylalumoxane, a triisobutylaluminum modified methylalumoxane available commercially from Akzo-Noble Corporation.

The preparation of catalyst (B1) is conducted as follows.

a) Preparation of (1-methylethyl)(2-hydroxy-3,5-di(t-butyl)phenyl)methylimine

3,5-Di-t-butylsalicylaldehyde (3.00 g) is added to 10 mL of isopropylamine. The solution rapidly turns bright yellow. After stirring at ambient temperature for 3 hours, volatiles are removed under vacuum to yield a bright yellow, crystalline solid (97 percent yield).

b) Preparation of 1,2-bis-(3,5-di-t-butylphenylene)(1-(N-(1-methylethyl)immino)methyl)(2-oxoyl) zirconium dibenzyl

A solution of (1-methylethyl)(2-hydroxy-3,5-di(t-butyl)phenyl)imine (605 mg, 2.2 mmol) in 5 mL toluene is slowly added to a solution of $Zr(CH_2Ph)_4$ (500 mg, 1.1 mmol) in 50 mL toluene. The resulting dark yellow solution is stirred for 30 min. Solvent is removed under reduced pressure to yield the desired product as a reddish-brown solid.

The preparation of catalyst (B2) is conducted as follows.

a) Preparation of (1-(2-methylcyclohexyl)ethyl)(2-oxoyl-3,5-di(t-butyl)phenyl)imine

2-Methylcyclohexylamine (8.44 mL, 64.0 mmol) is dissolved in methanol (90 mL), and di-t-butylsalicaldehyde (10.00 g, 42.67 mmol) is added. The reaction mixture is stirred for three hours and then cooled to -25°C for 12 hrs. The resulting yellow solid precipitate is collected by filtration and washed with cold methanol (2 x 15 mL), and then dried under reduced pressure. The yield is 11.17 g of a yellow solid. $^1H$ NMR is consistent with the desired product as a mixture of isomers.

b) Preparation of bis-(1-(2-methylcyclohexyl)ethyl)(2-oxoyl-3,5-di(t-butyl)phenyl) immino)zirconium dibenzyl

A solution of (1-(2-methylcyclohexyl)ethyl)(2-oxoyl-3,5-di(t-butyl)phenyl)imine (7.63 g, 23.2 mmol) in 200 mL toluene is slowly added to a solution of $Zr(CH_2Ph)_4$ (5.28 g, 11.6 mmol) in 600 mL toluene. The resulting dark yellow solution is stirred for 1 hour at 25°C. The solution is diluted further with 680 mL toluene to give a solution having a concentration of 0.00783 M.

**Cocatalyst 1** A mixture of methyldi($C_{14-18}$ alkyl)ammonium salts of tetrakis(pentafluorophenyl)borate (here-in-after armeenium borate), prepared by reaction of a long chain trialkylamine (ARMEEN™ M2HT, available from Akzo-Nobel, Inc.), HCl and $Li[B(C_6F_5)_4]$, substantially as disclosed in USP 5,919,9883, Ex. 2.

**Cocatalyst 2** Mixed $C_{14-18}$ alkyldimethylammonium salt of bis(tris(pentafluorophenyl)-alumane)-2-undecylimidazolide, prepared according to USP 6,395,671, Ex. 16.

**Shuttling Agents** The shuttling agents employed include diethylzinc (DEZ, SA1), di(i-butyl)zinc (SA2), di(n-hexyl)zinc (SA3), triethylaluminum (TEA, SA4), trioctylaluminum (SA5), triethylgallium (SA6), i-butylaluminum bis(dimethyl(t-butyl)siloxane) (SA7), i-butylaluminum bis(di(trimethylsilyl)amide) (SA8), n-octylaluminum di(pyridine-2-methoxide) (SA9), bis(n-octadecyl)i-butylaluminum (SA10), i-butylaluminum bis(di(n-pentyl)amide) (SA11), n-octylaluminum bis(2,6-dit-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheptaneamide) (SA16), n-octylaluminum bis(2,3,6,7-dibenzo-1-azacycloheptaneamide) (SA17), n-octylaluminum bis(dimethyl(t-butyl)siloxide(SA18), ethylzinc (2,6-diphenylphenoxide) (SA19), and ethylzinc (t-butoxide) (SA20).

Examples 1-4, Comparative A-C

General High Throughput Parallel Polymerization Conditions

Polymerizations are conducted using a high throughput, parallel polymerization reactor (PPR) available from Symyx technologies, Inc. and operated substantially according to USP's 6,248,540, 6,030,917, 6,362,309, 6,306,658, and 6,316,663. Ethylene copolymerizations are conducted at 130°C and 200 psi (1.4 MPa) with ethylene on demand using 1.2 equivalents of cocatalyst 1 based on total catalyst used (1.1 equivalents when MMAO is present). A series of polymerizations are conducted in a parallel pressure reactor (PPR) contained of 48 individual reactor cells in a 6 x 8 array that are fitted with a pre-weighed glass tube. The working volume in each reactor cell is 6000 μL. Each cell is temperature and pressure controlled with stirring provided by individual stirring paddles. The monomer gas and quench gas are plumbed directly into the PPR unit and controlled by automatic valves. Liquid reagents are robotically added to each reactor cell by syringes and the reservoir solvent is mixed alkanes. The order of addition is mixed alkanes solvent (4 ml), ethylene, 1-octene comonomer (1 ml), cocatalyst 1 or cocatalyst 1/MMAO mixture, shuttling agent, and catalyst or catalyst mixture. When a mixture of cocatalyst 1 and MMAO or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until predetermined ethylene consumptions are reached. After quenching with CO, the reactors are cooled and the glass tubes are unloaded. The tubes are transferred to a centrifuge/vacuum drying unit, and dried for 12 hours at 60 °C. The tubes containing dried polymer are weighed and the difference between this weight and the tare weight gives the net yield of polymer. Results are contained in Table 1. In Table 1 and elsewhere in the application, comparative compounds are indicated by an asterisk (*).

Examples 1-4 demonstrate the synthesis of linear block copolymers suitable for use in the present invention as evidenced by the formation of a very narrow MWD, essentially monomodal copolymer when DEZ is present and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting copolymers of the invention are distinguishable based on branching or density.

**Table 1**

| Ex. | Cat. (A1) (μmol) | Cat(Bl) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |
| 1 | 0.06 | 0.1 | 0.192 | - | DEZ (8.0) | 0.1974 | 28715 | 1.19 | 4.8 |

(continued)

| Ex. | Cat. (A1) (μmol) | Cat(BI) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the polymers produced according to Examples 1-4 have a relatively narrow polydispersity ($M_w/M_n$) and larger block-copolymer content (trimer, tetramer, or larger) than polymers prepared in the absence of the shuttling agent.

Further characterizing data for the polymers of Table 1 are determined by reference to the figures. More specifically DSC and ATREF results show the following:

The DSC curve for the polymer of Example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of Example 2 shows a peak with a 109.7°C melting point (Tm) with a heat of fusion of 214.0 J/g. The corresponding CRYSTAF curve shows the tallest peak at 46.2°C with a peak area of 57.0 percent. The difference between the DSC Tm and the Tcrystaf is 63.5°C.

The DSC curve for the polymer of Example 3 shows a peak with a 120.7°C melting point (Tm) with a heat of fusion of 160.1 J/g. The corresponding CRYSTAF curve shows the tallest peak at 66.1°C with a peak area of 71.8 percent. The difference between the DSC Tm and the Tcrystaf is 54.6°C.

The DSC curve for the polymer of Example 4 shows a peak with a 104.5°C melting point (Tm) with a heat of fusion of 170.7 J/g. The corresponding CRYSTAF curve shows the tallest peak at 30 °C with a peak area of 18.2 percent. The difference between the DSC Tm and the Tcrystaf is 74.5°C.

The DSC curve for Comparative Example A* shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for Comparative Example B* shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for Comparative Example C* shows a 125.3°C melting point (Tm) with a heat of fusion of 143.0 J/g. The corresponding CRYSTAF curve shows the tallest peak at 81.8 °C with a peak area of 34.7 percent as well as a lower crystalline peak at 52.4 °C. The separation between the two peaks is consistent with the presence of a high crystalline and a low crystalline polymer. The difference between the DSC Tm and the Tcrystaf is 43.5°C.

Examples 5-19, Comparative Examples D*-F*, Continuous Solution Polymerization, Catalyst A1/B2 + DEZ

Continuous solution polymerizations are carried out in a computer controlled autoclave reactor equipped with an internal stirrer. Purified mixed alkanes solvent (ISOPAR™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor.

All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer. Process details and results are contained in Table 2. Selected polymer properties are provided in Table 3.

**Table 2 Process details for preparation of exemplary polymers**

| Ex. | $C_8H_{16}$ kg/hr | Solv. kg/hr | $H_2$ sccm[1] | T °C | Cat A1[2] ppm | Cat A1 Flow kg/hr | Cat B2[3] ppm | B2 Flow kg/hr | DEZ Conc % | DEZ Flow kg/hr | Cocat Cone. ppm | Cocat Flow kg/hr | $[C_2H_4]/[DEZ]$[4] | Poly Rate[5] kg/hr | Conv %[6] | Solids % | Eff.[7] |
|---|---|---|---|---|---|---|---|---|---|---|---|---|---|---|---|---|---|
| D* | 1.63 | 12.7 | 29.90 | 120 | 142.2 | 0.14 | - | -- | 0.19 | 0.32 | 820 | 0.17 | 536 | 1.81 | 88.8 | 11.2 | 95.2 |
| E* | " | 9.5 | 5.00 | " | -- | -- | 109 | 0.10 | 0.19 | " | 1743 | 0.40 | 485 | 1.47 | 89.9 | 11.3 | 126.8 |
| F* | " | 11.3 | 251.6 | " | 71.7 | 0.06 | 30.8 | 0.06 | -- | -- | " | 0.11 | - | 1.55 | 88.5 | 10.3 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | " | " | 4.92 | " | " | 0.10 | 30.4 | 0.08 | 0.17 | 0.32 | " | 0.18 | 570 | 1.65 | 89.3 | 11.1 | 172.7 |
| 7 | " | " | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 30.3 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | " | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 90.2 |
| 19 | 0.32 | " | " | 122 | 71.1 | 0.06 | " | " | " | 0.09 | 1743 | 0.08 | 367 | 1.16 | 90.74 | 8.4 | 106.0 |

* Comparative Example, not an example of the invention
[1] standard $cm^3$/min
[2]. [N-(2,6-di(1-methylethyl)phenyl)amido)(2-isopropylphenyl)(α-naphthalen-2-diyl(6-pyridin-2-diyl)methane)]hafnium dimethyl
[3]. bis-(1-(2-methylcyclohexyl)ethyl)(2-oxoyl-3,5-di(t-butyl)phenyl)immino) zirconium dibenzyl
[4]. molar ratio in reactor
[5]. polymer production rate
[6]. percent ethylene conversion in reactor
[7] efficiency, kg polymer/g M where g M = g Hf + g Zr

**Table 3 Properties of exemplary polymers**

| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (°C) | $T_c$ (°C) | $T_{CRYSTAF}$ (°C) | $Tm-T_{CRYSTAF}$ (°C) | CRYSTAF Peak Area (percent) |
|---|---|---|---|---|---|---|---|---|---|---|---|---|---|
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137,300 | 9,980 | 13.8 | 90 | 125 | 111 | 78 | 47 | 20 |
| 5 | 0.8786 | 1.5 | 9.8 | 6.7 | 104,600 | 53,200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

* Comparative Example, not an example of the inventive polymer

The resulting polymers are tested by DSC and ATREF as with previous examples. Results are as follows: The DSC curve for the polymer of Example 5 shows a peak with a 119.6 °C melting point (Tm) with a heat of fusion of 60.0 J/g. The corresponding CRYSTAF curve shows the tallest peak at 47.6°C with a peak area of 59.5 percent. The delta between the DSC Tm and the Tcrystaf is 72.0°C.

The DSC curve for the polymer of Example 6 shows a peak with a 115.2 °C melting point (Tm) with a heat of fusion of 60.4 J/g. The corresponding CRYSTAF curve shows the tallest peak at 44.2°C with a peak area of 62.7 percent. The delta between the DSC Tm and the Tcrystaf is 71.0°C.

The DSC curve for the polymer of Example 7 shows a peak with a 121.3 °C melting point with a heat of fusion of 69.1 J/g. The corresponding CRYSTAF curve shows the tallest peak at 49.2°C with a peak area of 29.4 percent. The delta between the DSC Tm and the Tcrystaf is 72.1°C.

The DSC curve for the polymer of Example 8 shows a peak with a 123.5 °C melting point (Tm) with a heat of fusion of 67.9 J/g. The corresponding CRYSTAF curve shows the tallest peak at 80.1°C with a peak area of 12.7 percent. The delta between the DSC Tm and the Tcrystaf is 43.4°C.

The DSC curve for the polymer of Example 9 shows a peak with a 124.6 °C melting point (Tm) with a heat of fusion of 73.5 J/g. The corresponding CRYSTAF curve shows the tallest peak at 80.8°C with a peak area of 16.0 percent. The delta between the DSC Tm and the Tcrystaf is 43.8°C.

The DSC curve for the polymer of Example 10 shows a peak with a 115.6 °C melting point (Tm) with a heat of fusion of 60.7 J/g. The corresponding CRYSTAF curve shows the tallest peak at 40.9°C with a peak area of 52.4 percent. The delta between the DSC Tm and the Tcrystaf is 74.7°C.

The DSC curve for the polymer of Example 11 shows a peak with a 113.6 °C melting point (Tm) with a heat of fusion of 70.4 J/g. The corresponding CRYSTAF curve shows the tallest peak at 39.6°C with a peak area of 25.2 percent. The delta between the DSC Tm and the Tcrystaf is 74.1°C.

The DSC curve for the polymer of Example 12 shows a peak with a 113.2 °C melting point (Tm) with a heat of fusion of 48.9 J/g. The corresponding CRYSTAF curve shows no peak equal to or above 30 °C. (Tcrystaf for purposes of further calculation is therefore set at 30°C). The delta between the DSC Tm and the Tcrystaf is 83.2°C.

The DSC curve for the polymer of Example 13 shows a peak with a 114.4 °C melting point (Tm) with a heat of fusion of 49.4 J/g. The corresponding CRYSTAF curve shows the tallest peak at 33.8 °C with a peak area of 7.7 percent. The delta between the DSC Tm and the Tcrystaf is 84.4°C.

The DSC for the polymer of Example 14 shows a peak with a 120.8 °C melting point (Tm) with a heat of fusion of 127.9 J/g. The corresponding CRYSTAF curve shows the tallest peak at 72.9 °C with a peak area of 92.2 percent. The delta between the DSC Tm and the Tcrystaf is 47.9°C.

The DSC curve for the polymer of Example 15 shows a peak with a 114.3 °C melting point (Tm) with a heat of fusion of 36.2 J/g. The corresponding CRYSTAF curve shows the tallest peak at 32.3 °C with a peak area of 9.8 percent. The delta between the DSC Tm and the Tcrystaf is 82.0°C.

The DSC curve for the polymer of Example 16 shows a peak with a 116.6 °C melting point (Tm) with a heat of fusion of 44.9 J/g. The corresponding CRYSTAF curve shows the tallest peak at 48.0 °C with a peak area of 65.0 percent. The delta between the DSC Tm and the Tcrystaf is 68.6°C.

The DSC curve for the polymer of Example 17 shows a peak with a 116.0 °C melting point (Tm) with a heat of fusion of 47.0 J/g. The corresponding CRYSTAF curve shows the tallest peak at 43.1 °C with a peak area of 56.8 percent. The delta between the DSC Tm and the Tcrystaf is 72.9°C.

The DSC curve for the polymer of Example 18 shows a peak with a 120.5 °C melting point (Tm) with a heat of fusion of 141.8 J/g. The corresponding CRYSTAF curve shows the tallest peak at 70.0 °C with a peak area of 94.0 percent. The delta between the DSC Tm and the Tcrystaf is 50.5 °C.

The DSC curve for the polymer of Example 19 shows a peak with a 124.8 °C melting point (Tm) with a heat of fusion of 174.8 J/g. The corresponding CRYSTAF curve shows the tallest peak at 79.9 °C with a peak area of 87.9 percent. The delta between the DSC Tm and the Tcrystaf is 45.0 °C.

The DSC curve for the polymer of Comparative Example D* shows a peak with a 37.3°C melting point (Tm) with a heat of fusion of 31.6 J/g. The corresponding CRYSTAF curve shows no peak equal to and above 30°C. Both of these values are consistent with a resin that is low in density. The delta between the DSC Tm and the Tcrystaf is 7.3°C.

The DSC curve for the polymer of Comparative Example E* shows a peak with a 124.0 °C melting point (Tm) with a heat of fusion of 179.3 J/g. The corresponding CRYSTAF curve shows the tallest peak at 79.3°C with a peak area of 94.6 percent. Both of these values are consistent with a resin that is high in density. The delta between the DSC Tm and the Tcrystaf is 44.6°C.

The DSC curve for the polymer of Comparative Example F* shows a peak with a 124.8 °C melting point (Tm) with a heat of fusion of 90.4 J/g. The corresponding CRYSTAF curve shows the tallest peak at 77.6°C with a peak area of 19.5 percent. The separation between the two peaks is consistent with the presence of both a high crystalline and a low crystalline polymer. The delta between the DSC Tm and the Tcrystaf is 47.2°C.

## Physical Property Testing

Polymer samples are evaluated for physical properties such as high temperature resistance properties, as evidenced by TMA temperature testing, pellet blocking strength, high temperature recovery, high temperature compression set and storage modulus ratio, G'(25°C)/G'(100°C). Several commercially available polymers are included in the tests: Comparative Example G* is a substantially linear ethylene/1-octene copolymer (AFFINITY®, available from The Dow Chemical Company), Comparative Example H* is an elastomeric, substantially linear ethylene/ 1-octene copolymer (AFFINITY® EG8100, available from The Dow Chemical Company), Comparative Example I* is a substantially linear ethylene/1-octene copolymer (AFFINITY® PL1840, available from The Dow Chemical Company), Comparative Example J* is a hydrogenated styrene/butadiene/styrene triblock copolymer (KRATON™ G1652, available from KRATON Polymers), Comparative Example K* is a thermoplastic vulcanizate (TPV, a polyolefin blend containing dispersed therein a crosslinked elastomer). Results are presented in Table 4.

Table 4 High Temperature Mechanical Properties

| Ex. | TMA-1mm penetration (°C) | Pellet Blocking Strength lb/ft$^2$ (kPa) | G'(25°C)/ G'(100°C) | 300 % Strain Recovery (80°C) (percent) | Compression Set (70°C) (percent) |
|---|---|---|---|---|---|
| D* | 51 | - | 9 | Failed | - |
| E* | 130 | - | 18 | - | - |
| F* | 70 | 141 (6.8) | 9 | Failed | 100 |
| 5 | 104 | 0(0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0(0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (10.2) | 29 | Failed | 100 |
| I* | 111 | - | 11 | - | - |
| J* | 107 | - | 5 | Failed | 100 |
| K* | 152 | - | 3 | - | 40 |

In Table 4, Comparative Example F* (which is a physical blend of the two polymers resulting from simultaneous polymerizations using catalyst A1 and B1) has a 1 mm penetration temperature of about 70°C, while Examples 5-9 have a 1 mm penetration temperature of 100°C or greater. Further, examples 10-19 all have a 1 mm penetration temperature of greater than 85°C, with most having 1 mm TMA temperature of greater than 90°C or even greater than 100°C. This shows that the novel polymers have better dimensional stability at higher temperatures compared to a physical blend. Comparative Example J* (a commercial SEBS) has a good 1 mm TMA temperature of about 107°C, but it has very poor

(high temperature 70°C) compression set of about 100 percent and it also failed to recover (sample broke) during a high temperature (80°C) 300 percent strain recovery. Thus the exemplified polymers have a unique combination of properties unavailable even in some commercially available, high performance thermoplastic elastomers.

Similarly, Table 4 shows a low (good) storage modulus ratio, G'(25°C)/G'(100°C), for the inventive polymers of 6 or less, whereas a physical blend (Comparative Example F*) has a storage modulus ratio of 9 and a random ethylene/octene copolymer (Comparative Example G*) of similar density has a storage modulus ratio an order of magnitude greater (89). It is desirable that the storage modulus ratio of a polymer be as close to 1 as possible. Such polymers will be relatively unaffected by temperature, and fabricated articles made from such polymers can be usefully employed over a broad temperature range. This feature of low storage modulus ratio and temperature independence is particularly useful in elastomer applications such as in pressure sensitive adhesive formulations.

The data in Table 4 also demonstrate that the inventive polymers possess improved pellet blocking strength. In particular, Example 5 has a pellet blocking strength of 0 MPa, meaning it is free flowing under the conditions tested, compared to Comparative Examples F* and G* which show considerable blocking. Blocking strength is important since bulk shipment of polymers having large blocking strengths can result in product clumping or sticking together upon storage or shipping, resulting in poor handling properties.

High temperature (70°C) compression set for the inventive polymers is generally good, meaning generally less than 80 percent, preferably less than 70 percent and especially less than 60 percent. In contrast, Comparative Examples F*, G*, H* and J* all have a 70°C compression set of 100 percent (the maximum possible value, indicating no recovery). Good high temperature compression set (low numerical values) is especially needed for applications such as gaskets, window profiles, o-rings, and the like.

Table 5 Ambient Temperature Mechanical Properties

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| D* | 12 | 5 | - | - | 10 | 1074 | - | - | 91 | 83 | 760 | - | - |
| E* | 895 | 589 | | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | - | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 | 30 |
| 12 | 20 | 17 | 12 | 961 | 13 | 931 | - | 1247 | 91 | 75 | 700 | 17 | - |
| 13 | 16 | 14 | - | - | 13 | 814 | - | 691 | 91 | - | - | 21 | - |
| 14 | 212 | 160 | - | - | 29 | 857 | - | - | - | - | - | - | - |
| 15 | 18 | 14 | 12 | 1127 | 10 | 1573 | - | 2074 | 89 | 83 | 770 | 14 | - |
| 16 | 23 | 20 | - | - | 12 | 968 | - | - | 88 | 83 | 1040 | 13 | - |
| 17 | 20 | 18 | - | - | 13 | 1252 | - | 1274 | 13 | 83 | 920 | 4 | - |
| 18 | 323 | 239 | - | - | 30 | 808 | - | - | - | - | - | - | - |
| 19 | 706 | 483 | - | - | 36 | 871 | - | - | - | - | - | - | - |
| G* | 15 | 15 | - | - | 17 | 1000 | - | 746 | 86 | 53 | 110 | 27 | 50 |
| H* | 16 | 15 | - | - | 15 | 829 | - | 569 | 87 | 60 | 380 | 23 | - |
| I* | 210 | 147 | - | - | 29 | 697 | - | - | - | - | - | - | - |
| J* | - | - | - | - | 32 | 609 | - | - | 93 | 96 | 1900 | 25 | - |

(continued)

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| K* | - | - | - | - | - | - | - | - | - | - | - | 30 | - |

1. Tested at 51 cm/minute
2. measured at 38°C for 12 hours

Table 5 shows results for mechanical properties for the inventive polymers as well as for various comparison polymers at ambient temperatures. It may be seen that the inventive polymers have very good abrasion resistance when tested according to ISO 4649, generally showing a volume loss of less than about 90 $mm^3$, preferably less than about 80 $mm^3$, and especially less than about 50 $mm^3$. In this test, higher numbers indicate higher volume loss and consequently lower abrasion resistance.

Tear strength as measured by tensile notched tear strength of the inventive polymers is generally 1000 mJ or higher, as shown in Table 5. Tear strength for the inventive polymers can be as high as 3000 mJ, or even as high as 5000 mJ. Comparative polymers generally have tear strengths no higher than 750 mJ.

Table 5 also shows that the inventive polymers have better retractive stress at 150 percent strain (demonstrated by higher retractive stress values) than some of the comparative samples. Comparative Examples F*, G* and H* have retractive stress value at 150 percent strain of 400 kPa or less, while the inventive polymers have retractive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic bands.

Table 5 also shows that stress relaxation (at 50 percent strain) is also improved (less) for the inventive polymers as compared to, for example, Comparative Example G*. Lower stress relaxation means that the polymer retains its force better in applications such as diapers and other garments where retention of elastic properties over long time periods at body temperatures is desired.

Optical Testing

Table 6 Polymer Optical Properties

| Ex. | Internal Haze (percent) | Clarity (percent) | 45° Gloss (percent) |
|---|---|---|---|
| F* | 84 | 22 | 49 |
| G* | 5 | 73 | 56 |
| 5 | 13 | 72 | 60 |
| 6 | 33 | 69 | 53 |
| 7 | 28 | 57 | 59 |
| 8 | 20 | 65 | 62 |
| 9 | 61 | 38 | 49 |
| 10 | 15 | 73 | 67 |
| 11 | 13 | 69 | 67 |
| 12 | 8 | 75 | 72 |
| 13 | 7 | 74 | 69 |
| 14 | 59 | 15 | 62 |
| 15 | 11 | 74 | 66 |
| 16 | 39 | 70 | 65 |
| 17 | 29 | 73 | 66 |
| 18 | 61 | 22 | 60 |
| 19 | 74 | 11 | 52 |
| G* | 5 | 73 | 56 |
| H* | 12 | 76 | 59 |
| I* | 20 | 75 | 59 |

The optical properties reported in Table 6 are based on compression molded films substantially lacking in

orientation. Optical properties of the polymers may be varied over wide ranges, due to variation in crystallite size, resulting from variation in the quantity of chain shuttling agent employed in the polymerization.

Extractions of Multi-Block Copolymers

Extraction studies of the polymers of Examples 5, 7 and Comparative Example E* are conducted. In the experiments, the polymer sample is weighed into a glass fritted extraction thimble and fitted into a Kumagawa type extractor. The extractor with sample is purged with nitrogen, and a 500mL round bottom flask is charged with 350 mL of diethyl ether. The flask is then fitted to the extractor. The ether is heated while being stirred. Time is noted when the ether begins to condense into the thimble, and the extraction is allowed to proceed under nitrogen for 24 hours. At this time, heating is stopped and the solution is allowed to cool. Any ether remaining in the extractor is returned to the flask. The ether in the flask is evaporated under vacuum at ambient temperature, and the resulting solids are purged dry with nitrogen. Any residue is transferred to a weighed bottle using successive washes of hexane. The combined hexane washes are then evaporated with another nitrogen purge, and the residue dried under vacuum overnight at 40°C. Any remaining ether in the extractor is purged dry with nitrogen.

A second clean round bottom flask charged with 350 mL of hexane is then connected to the extractor. The hexane is heated to reflux with stirring and maintained at reflux for 24 hours after hexane is first noticed condensing into the thimble. Heating is then stopped and the flask is allowed to cool. Any hexane remaining in the extractor is transferred back to the flask. The hexane is removed by evaporation under vacuum at ambient temperature, and any residue remaining in the flask is transferred to a weighed bottle using successive hexane washes. The hexane in the flask is evaporated by a nitrogen purge, and the residue is vacuum dried overnight at 40°C.

The polymer sample remaining in the thimble after the extractions is transferred from the thimble to a weighed bottle and vacuum dried overnight at 40°C. Results are contained in Table 7.

Table 7

| Sample | wt. (g) | ether soluble (g) | ether soluble (percent) | $C_8$ mole percent[1] | hexane soluble (g) | hexane soluble (percent) | $C_8$ mole percent[1] | residue $C_8$ mole percent[1] |
|---|---|---|---|---|---|---|---|---|
| Comp. F* | 1.097 | 0.063 | 5.69 | 12.2 | 0.245 | 22.35 | 13.6 | 6.5 |
| Ex. 5 | 1.006 | 0.041 | 4.08 | - | 0.040 | 3.98 | 14.2 | 11.6 |
| Ex. 7 | 1.092 | 0.017 | 1.59 | 13.3 | 0.012 | 1.10 | 11.7 | 9.9 |
| [1.] Determined by $^{13}C$ NMR | | | | | | | | |

**Additional Polymer Examples 19 A-F, Continuous Solution Polymerization, Catalyst A1/B2 + DEZ**

Continuous solution polymerizations are carried out in a computer controlled well-mixed reactor. Purified mixed alkanes solvent (ISOPAR™ E available from ExxonMobil Chemical Company), ethylene, 1-octene, and hydrogen (where used) are combined and fed to a 102 1 (27 gallon) reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 3.8 MPa (550 psig) pressure. Upon exiting the reactor, water and additive are injected in the polymer solution. The water hydrolyzes the catalysts, and terminates the polymerization reactions. The post reactor solution is then heated in preparation for a two-stage devolatization. The solvent and unreacted monomers are removed during the devolatization process. The polymer melt is pumped to a die for underwater pellet cutting.

Process details and results are contained in Table 8. Selected polymer properties are provided in Table 9.

**Table 8. Polymerization Conditions for Polymers 19a-j.**

| Ex. | $C_2H_4$ lb/hr[8] | $C_8H_{16}$ lb/hr[8] | Solv. lb/hr[8] | $H_2$ sccm[1] | T °C | Cat A1[2] Conc. ppm | Cat A1 Flow lb/hr[8] | Cat B2[3] Conc. ppm | Cat B2 Flow lb/hr[8] | DEZ Conc. wt% | DEZ Flow lb/hr[8] | Cocat 1 Conc. ppm | Cocat 1 Flow lb/hr[8] | Cocat 2 Conc. ppm | Cocat 2 Flow lb/hr[8] | [Zn][4] in polymer ppm | Poly. Rate[5] lb/hr[8] | Conv[6] wt% | Polymer wt% | Eff.[7] |
|---|---|---|---|---|---|---|---|---|---|---|---|---|---|---|---|---|---|---|---|---|
| 19a | 55.29 | 32.03 | 323.03 | 101 | 120 | 600 | 0.25 | 200 | 0.42 | 3.0 | 0.70 | 4500 | 0.65 | 525 | 0.33 | 248 | 83.94 | 88.0 | 17.28 | 297 |
| 19b | 53.95 | 28.96 | 325.3 | 577 | 120 | 600 | 0.25 | 200 | 0.55 | 3.0 | 0.24 | 4500 | 0.63 | 525 | 0.11 | 90 | 80.72 | 88.1 | 17.2 | 295 |
| 19c | 55.53 | 30.97 | 324.37 | 550 | 120 | 600 | 0.216 | 200 | 0.609 | 3.0 | 0.69 | 4500 | 0.61 | 525 | 0.33 | 246 | 84.13 | 88.9 | 17.16 | 293 |
| 19d | 54.83 | 30.58 | 326.33 | 60 | 120 | 600 | 0.22 | 200 | 0.63 | 3.0 | 1.39 | 4500 | 0.66 | 525 | 0.66 | 491 | 82.56 | 88.1 | 17.07 | 280 |
| 19e | 54.95 | 31.73 | 326.75 | 251 | 120 | 600 | 0.21 | 200 | 0.61 | 3.0 | 1.04 | 4500 | 0.64 | 525 | 0.49 | 368 | 84.11 | 88.4 | 17.43 | 288 |
| 19f | 50.43 | 34.80 | 330.33 | 124 | 120 | 600 | 0.20 | 200 | 0.60 | 3.0 | 0.74 | 4500 | 0.52 | 525 | 0.35 | 257 | 85.31 | 87.5 | 17.09 | 319 |
| 19g | 50.25 | 33.08 | 325.61 | 188 | 120 | 600 | 0.19 | 200 | 0.59 | 3.0 | 0.54 | 4500 | 0.51 | 525 | 0.16 | 194 | 83.72 | 87.5 | 17.34 | 333 |
| 19h | 50.15 | 34.87 | 318.17 | 58 | 120 | 600 | 0.21 | 200 | 0.66 | 3.0 | 0.70 | 4500 | 0.52 | 525 | 0.70 | 259 | 83.21 | 88.0 | 17.46 | 312 |
| 19i | 55.02 | 34.02 | 323.59 | 53 | 120 | 600 | 0.44 | 200 | 0.74 | 3.0 | 1.72 | 4500 | 0.70 | 525 | 1.65 | 600 | 86.63 | 88.0 | 17.6 | 275 |
| 19j | 7.46 | 9.04 | 50.6 | 47 | 120 | 150 | 0.22 | 76.7 | 0.36 | 0.5 | 0.19 | - | - | - | - | - | - | - | - | - |

1 standard $cm^3$/min
2. [N-(2,6-di(1-methylethyl)phenyl)amido)(2-isopropylphenyl)(α-naphthalen-2-diyl(6-pyridin-2-diyl)methane)]hafnium dimethyl
3. bis-(1-(2-methylcyclohexyl)ethyl)(2-oxoyl-3,5-di(t-butyl)phenyl)immino) zirconium dimethyl
4. ppm in final product calculated by mass balance
5. polymer production rate
6. weight percent ethylene conversion in reactor
7 efficiency, kg polymer/g M where g M = g Hf + g Z
8 1 lb/hr. = 0.45 kg/hr.

**Table 9 Polymer Physical properties**

| Polymer Ex. No. | Density (g/cc) | $I_2$ | $I_{10}$ | $I_{10}/I_2$ | Mw (g/mol) | Mn (g/mol) | $M_w/M_n$ | Heat of Fusion (J/g) | $T_m$ (°C) | $T_c$ (°C) | TCRYSTAF (°C) | Tm-TCRYSTAF (°C) | CRYSTAF Peak Area (wt%) |
|---|---|---|---|---|---|---|---|---|---|---|---|---|---|
| 19g | 0.8649 | 0.9 | 6.4 | 7.1 | 135000 | 64800 | 2.1 | 26 | 120 | 92 | 30 | 90 | 90 |
| 19h | 0.8654 | 1.0 | 7.0 | 7.1 | 131600 | 66900 | 2.0 | 26 | 118 | 88 | - | - | - |

**Table 9A Average Block Index For exemplary polymers[1]**

| Example | $Zn/C_2$[2] | $C_2/Zn$ | Tal[2], E1 | Average BI |
|---|---|---|---|---|
| Polymer F | 0 | - | (F*) | 0 E1 |
| Polymer 8 | 0.56 | 1786 | (8) | 0.59 E1 |
| Polymer 19a | 1.3 | 769 | | 0.62 |
| Polymer 5 | 2.4 | 417 | (5) | 0.52 E1 |
| Polymer 19b | 0.56 | 1786 | | 0.54 |
| Polymer 19h | 3.15 | 317 | | 0.59 |

1. Additional information regarding the calculation of the block indices for various polymers is disclosed in U.S. Patent Application Serial No. 60/199,930, entitled "Ethylene/α-Olefin Block Interpolymers", filed on March 15, 2006, in the name of Colin L.P. Shan, Lonnie Hazlitt, et. al. and assigned to Dow Global Technologies Inc..
2. $Zn/C_2$ *1000 = (Zn feed flow*Zn concentration/1000000/Mw of Zn)/(Total Ethylene feed flow*(1-fractional ethylene conversion rate)/Mw of Ethylene)*1000. Please note that "Zn" in "$Zn/C_2$*1000" refers to the amount of zinc in diethyl zinc ("DEZ") used in the polymerization process, and "C2" refers to the amount of ethylene used in the polymerization process.

**Comparative Examples L-Q**

Comparative Example L was a 70/30 blend of ENGAGE® 8842 (a polyolefin elastomer from DuPont Dow Elastomers, Wilmington, DE) and DOWLEX® 2042 (a polyethylene resin from The Dow Chemical Company, Midland, MI). Comparative Example M was a 50/50 blend of ENGAGE® 8842 and DOWLEX® 2042. Comparative Example N was AFFINITY® 8100 (a polyolefin plastomer from The Dow Chemical Company, Midland, MI). Comparative Example O was AFFINITY® 8200 (a polyolefin plastomer from The Dow Chemical Company, Midland, MI). Comparative Example P was AFFINITY® PF 1140 (a polyolefin plastomer from The Dow Chemical Company, Midland, MI). Comparative Example Q was ELVAX® 460 (a copolymer of ethylene and vinyl acetate (EVA) from DuPont Industrial Polymers, Wilmington, DE).

**Measurements of Polymer Properties**

The Zn levels, estimated overall densities, soft segment %, soft segment densities, hard segment %, estimated hard segment densities and melt indexes of inventive Polymers 19a, 19b, 19k and 191 and Comparative Examples L-Q are listed in Table 10 below. Polymers 19k and 191 were copolymers of ethylene and octene which were prepared substantially similar to Examples 1-19 and Examples 19a-h.

The Zn levels of Polymers 19a, 19b, 19k and 191 were measured by standard industry procedure. The melt indexes ($I_2$) of Polymers 19a, 19b, 19k and 191 and Comparative Examples L-Q were measured according to ASTM D-1238, Condition 190°C/2.16 kg. The soft segment % and hard segment % of Polymers 19a, 19b, 19k and 191 were calculated based on respectively the % of α-olefin and ethylene in the ethylene/a-olefin interpolymers. The hard segment densities of Polymers 19a, 19b, 19k and 191 were estimated based on the density of a low density polyethylene. The overall densities of Polymers 19a, 19b, 19k and 191 were estimated by the sum of soft segment % x soft segment density (*i.e.,* 0.855) and hard segment % x estimated hard segment density (*i.e.,* 0.932). The densities of Comparative Examples L-Q were provided by the suppliers.

Table 10. Some Characteristics of Polymers 19a, 19b, 19k and Comparative Examples L-Q.

| Polymer Example | Zn Level (ppm) | Estimated Overall density (g/cc) | Soft Segment % | Soft Segment Density (g/cc) | Hard Segment % | Estimated Hard segment density (g/cc) | Melt Index |
|---|---|---|---|---|---|---|---|
| 19a | 250 | 0.877 | 70% | 0.855 | 30% | 0.932 | 1 |
| 19d | 500 | 0.877 | 70% | 0.855 | 30% | 0.932 | 5 |
| 19k | Max | 0.892 | 50% | 0.855 | 50% | 0.932 | 1 |

(continued)

| Polymer Example | Zn Level (ppm) | Estimated Overall density (g/cc) | Soft Segment % | Soft Segment Density (g/cc) | Hard Segment % | Estimated Hard segment density (g/cc) | Melt Index |
|---|---|---|---|---|---|---|---|
| 191 | 250 | 0.866 | 85% | 0.855 | 15% | 0.932 | 1 |
| Comp. Ex. L | N/A | 0.88 | N/A | N/A | N/A | N/A | N/A |
| Comp. Ex. M | N/A | 0.892 | N/A | N/A | N/A | N/A | N/A |
| Comp. Ex. N | N/A | 0.87 | N/A | N/A | N/A | N/A | 1 |
| Comp. Ex. O | N/A | 0.877 | N/A | N/A | N/A | N/A | 5 |
| Comp. Ex. P | N/A | 0.895 | N/A | N/A | N/A | N/A | 1.6 |
| Comp. Ex. Q | N/A | N/A | N/A | N/A | N/A | N/A | 2.6 |
| N/A = not available. | | | | | | | |

**Examples 20-27 and Comparative Examples R-Z, AA and AB**

Examples 20-22 and Comparative Examples R-V were medium density foams having formulae as shown in Table 11 and prepared according to the conditions as shown in Table 14. These foams were made from different polymers with similar polymer densities. These examples are used to show the balance of % of shrinkage, compression set resistance and split tear properties of cross-linked foams having a medium foam density of about 0.300 g/cc.

Examples 23-24 and Comparative Examples W-Z and AA were low density foams having formulae as shown in Table 12 and prepared according to the conditions as shown in Table 14. These foams were made from different polymers with similar polymer densities. These examples are used to show the balance of % of shrinkage, compression set resistance and split tear properties of cross-linked foams having a low foam density of about 0.200 g/cc.

Examples 25-27 and Comparative Example AB were foams having formulae as shown in Table 13 and processed according to the conditions similar to those for Examples 20-24. These foams were made from EVA and different blends of EVA and the ethylene/a-olefin interpolymers. These examples are used to show the balance of % of shrinkage, compression set resistance and split tear properties of cross-linked foams having a medium foam density of about 0.370 g/cc.

Table 11. The Formulae of Examples 20-22 and Comparative Examples R-V.

| Ingredients | Comp. R | Comp. S | Comp. T | Comp. U | Comp. V | Ex. 20 | Ex. 21 | Ex. 22 |
|---|---|---|---|---|---|---|---|---|
| Comp. Ex. Q | 100 | | | | | | | |
| Comp. Ex. P | | 100 | | | | | | |
| Comp. Ex. N | | | 100 | | | | | |
| Comp. Ex. L | | | | 100 | | | | |
| Comp. Ex. M | | | | | 100 | | | |
| Ex. 19d | | | | | | 100 | | |
| Ex. 19k | | | | | | | 100 | |
| Ex. 19a | | | | | | | | 100 |
| PERKADOX® 1440[1] | 1.6 | 1.15 | 1.4 | 1.2 | 1.05 | 2 | 1.4 | 1.4 |
| CELOGEN® AZ 130[2] | 1.7 | 1.7 | 1.7 | 1.7 | 1.7 | 1.7 | 1.7 | 1.7 |
| Zinc Oxide[3] | 3 | 3 | 3 | 3 | 3 | 3 | 3 | 3 |

(continued)

| Ingredients | Comp. R | Comp. S | Comp. T | Comp. U | Comp. V | Ex. 20 | Ex. 21 | Ex. 22 |
|---|---|---|---|---|---|---|---|---|
| Stearic Acid | 0.2 | 0.2 | 0.2 | 0.2 | 0.2 | 0.2 | 0.2 | 0.2 |
| OMYALITE® 95T[4] | 10 | 10 | 10 | 10 | 10 | 10 | 10 | 10 |

[1] PERKADOX® 1440 is a peroxide from Hercules, Wilmington, DE.
[2] CELOGEN® AZ130 is an azodicarbonamide from Uniroyal Chemical Co., Middlebury, CN.
[3] The zinc oxide used was KADOX® 911 from Zinc Corporation of America, Monaca, PA.
[4] OMYALITE® 95T is a surface treated calcium carbonate from Omya Inc., Florence, VT.

Table 12. The Formulae of Examples 23-24 and Comparative Examples W-Z and AA.

| Ingredients | Comp. W | Comp. X | Comp. Y | Comp. Z | Comp. AA | Ex. 23 | Ex. 24 |
|---|---|---|---|---|---|---|---|
| Comp. Ex. Q | 100 | | | | | | |
| Comp. Ex. P | | 100 | | | | | |
| Comp. Ex. N | | | 100 | | | | |
| Comp. Ex. L | | | | 100 | | | |
| Comp. Ex. M | | | | | 100 | | |
| Ex. 19d | | | | | | 100 | |
| Ex. 19k | | | | | | | 100 |
| PERKADOX® 1440 | 1.6 | 1.15 | 1.4 | 1.2 | 1.05 | 2 | 1.4 |
| CELOGEN® AZ 130 | 2.8 | 2.8 | 2.8 | 2.8 | 2.8 | 2.8 | 2.8 |
| Zinc Oxide | 3 | 3 | 3 | 3 | 3 | 3 | 3 |
| Stearic Acid | 0.2 | 0.2 | 0.2 | 0.2 | 0.2 | 0.2 | 0.2 |
| OMYALITE® 95T | 10 | 10 | 10 | 10 | 10 | 10 | 10 |

Table 13. The Formulae of Examples 25-27 and Comparative Example AB.

| Ingredients | Comp. AB | Ex. 25 | Ex. 26 | Ex. 27 |
|---|---|---|---|---|
| Ex. 191 | / | / | / | 60 |
| Ex. 19a | / | 50 | 30 | / |
| Comp. Ex. Q | 100 | 50 | 70 | 40 |
| PERKADOX® 1440 | 1.6 | 1.8 | 1.8 | 1.8 |
| CELOGEN® AZ 130 | 1.7 | 1.7 | 1.7 | 1.7 |
| Zinc Oxide | 3 | 3 | 3 | 3 |
| Stearic Acid | 0.2 | 0.2 | 0.2 | 0.2 |
| OMYALITE® 95T | 10 | 10 | 10 | 10 |

Table 14. The Process Conditions for Examples 20-27 and Comparative Examples R-Z, AA and AB.

| Foam | Amount (g) | Preparation Time (min.) | Preheating Temp. (°C) | Curing time (min.) | Mould Temp. (°C) | Expansion after demould (mm) | Expansion after 30 min. (mm) | Time of Vacuum on mould (min.) | Calculated foam density (g/cc) |
|---|---|---|---|---|---|---|---|---|---|
| Comp. Ex. R | 225 | 10 | 100 | 10 | 180 | 150 | 143 | 2 | 0.353 |
| Comp. Ex. R | 225 | 10 | 100 | 10 | 180 | 151 | 143 | 2 | 0.353 |
| Comp. Ex. R | 225 | 10 | 100 | 10 | 180 | 150 | 143 | 2 | 0.353 |
| Comp. Ex. W | 225 | 10 | 100 | 10 | 180 | 177 | 168 | 2 | 0.216 |
| Comp. Ex. W | 225 | 10 | 100 | 10 | 180 | 177 | 170 | 2 | 0.211 |
| Comp. Ex. W | 225 | 10 | 100 | 10 | 180 | 177 | 169 | 2 | 0.214 |
| Ex. 20 | 220 | 10 | 100 | 10 | 180 | 153 | 145 | 2 | 0.317 |
| Ex. 20 | 221 | 10 | 100 | 10 | 180 | 155 | 146 | 2 | 0.311 |
| Ex. 20 | 221 | 10 | 100 | 10 | 180 | 155 | 146 | 2 | 0.311 |
| Ex. 23 | 220 | 10 | 100 | 10 | 180 | 178 | 166 | 2 | 0.212 |
| Ex. 23 | 221 | 10 | 100 | 10 | 180 | 178 | 168 | 2 | 0.205 |
| Ex. 23 | 221 | 10 | 100 | 10 | 180 | 179 | 168 | 2 | 0.205 |
| Ex. 21 | 222 | 10 | 100 | 10 | 180 | 150 | 143 | 2 | 0.335 |
| Ex. 21 | 221 | 10 | 100 | 10 | 180 | 152 | 143 | 2 | 0.335 |
| Ex. 21 | 220 | 10 | 100 | 10 | 180 | 152 | 143 | 2 | 0.335 |
| Ex. 24 | 221 | 10 | 100 | 10 | 180 | 178 | 168 | 2 | 0.208 |
| Ex. 24 | 220 | 10 | 100 | 10 | 180 | 179 | 169 | 2 | 0.204 |
| Ex. 24 | 220 | 10 | 100 | 10 | 180 | 179 | 169 | 2 | 0.204 |
| Comp. Ex. S | 226 | 10 | 100 | 10 | 180 | 160 | 149 | 2 | 0.297 |
| Comp. Ex. S | 221 | 10 | 100 | 10 | 180 | 160 | 149 | 2 | 0.297 |
| Comp. Ex. S | 222 | 10 | 100 | 10 | 180 | 160 | 149 | 2 | 0.297 |

(continued)

| Foam | Amount (g) | Preparation Time (min.) | Preheating Temp. (°C) | Curing time (min.) | Mould Temp. (°C) | Expansion after demould (mm) | Expansion after 30 min. (mm) | Time of Vacuum on mould (min.) | Calculated foam density (g/cc) |
|---|---|---|---|---|---|---|---|---|---|
| Comp. Ex. X | 228 | 10 | 100 | 10 | 180 | 189 | 176 | 2 | 0.181 |
| Comp. Ex. X | 222 | 10 | 100 | 10 | 180 | 189 | 175 | 2 | 0.184 |
| Comp. Ex. X | 222 | 10 | 100 | 10 | 180 | 189 | 175 | 2 | 0.184 |
| Comp. T-1 | 223 | 10 | 100 | 10 | 180 | 145 | 136 | 2 | 0.384 |
| Comp. T-2 | 222 | 10 | 100 | 8 | 180 | 148 | 138 | 2 | 0.367 |
| Comp. T-3 | 220 | 10 | 100 | 7 | 180 | 149 | 140 | 2 | 0.352 |
| Comp. T-3 | 220 | 10 | 100 | 7 | 180 | 149 | 140 | 2 | 0.352 |
| Comp. Y-1 | 224 | 10 | 100 | 10 | 180 | 174 | 161 | 2 | 0.232 |
| Comp. Y-2 | 220 | 10 | 100 | 8 | 180 | 175 | 162 | 2 | 0.228 |
| Comp. Y-3 | 221 | 10 | 100 | 7 | 180 | 176 | 163 | 2 | 0.224 |
| Comp. Y-3 | 220 | 10 | 100 | 7 | 180 | 176 | 163 | 2 | 0.224 |
| Comp. U-1 | 222 | 10 | 100 | 10 | 180 | 147 | 141 | 2 | 0.345 |
| Comp. U-2 | 221 | 10 | 100 | 8 | 180 | 151 | 144 | 2 | 0.324 |
| Comp. U-2 | 221 | 10 | 100 | 8 | 180 | 151 | 143 | 2 | 0.331 |
| Comp. U-2 | 220 | 10 | 100 | 8 | 180 | 150 | 143 | 2 | 0.331 |

(continued)

| Foam | Amount (g) | Preparation Time (min.) | Preheating Temp. (°C) | Curing time (min.) | Mould Temp. (°C) | Expansion after demould (mm) | Expansion after 30 min. (mm) | Time of Vacuum on mould (min.) | Calculated foam density (g/cc) |
|---|---|---|---|---|---|---|---|---|---|
| Comp. Z-1 | 222 | 10 | 100 | 10 | 180 | 174 | 166 | 2 | 0.216 |
| Comp. Z-2 | 221 | 10 | 100 | 8 | 180 | 176 | 167 | 2 | 0.209 |
| Comp. Z-2 | 221 | 10 | 100 | 8 | 180 | 175 | 166 | 2 | 0.213 |
| Comp. Z-2 | 221 | 10 | 100 | 8 | 180 | 175 | 166 | 2 | 0.213 |
| Comp. V-1 | 224 | 10 | 100 | 10 | 180 | 142 | 138 | 2 | 0.373 |
| Comp. V-2 | 221 | 10 | 100 | 8 | 180 | 145 | 141 | 2 | 0.35 |
| Comp. V-2 | 221 | 10 | 100 | 8 | 180 | 143 | 139 | 2 | 0.365 |
| Comp. V-2 | 222 | 10 | 100 | 8 | 180 | 143 | 140 | 2 | 0.357 |
| Comp. AA-1 | 224 | 10 | 100 | 10 | 180 | 173 | 167 | 2 | 0.211 |
| Comp. AA-2 | 221 | 10 | 100 | 8 | 180 | 173 | 169 | 2 | 0.204 |
| Comp. AA-2 | 221 | 10 | 100 | 8 | 180 | 172 | 167 | 2 | 0.211 |
| Comp. AA-2 | 222 | 10 | 100 | 8 | 180 | 173 | 168 | 2 | 0.208 |

Examples 20-27 and Comparative Examples R-Z, AA and AB were prepared under the conditions listed in Table 14 according to the following procedure. Compounded material for each example was roll milled into sheets. After the required amount of material for filling the mold was cut from the sheets, the material was pre-heated in convection oven to 100°C for 10 minutes. The pre-heated material was placed in the molding tool, which was at 180°C and the press was closed. Next, the material was cured at 180°C during the required curing time. After curing, the press was opened and the plaque expanded and was cooled at room temperature.

The foam densities of Examples 20-27 and Comparative Examples R-Z, AA and AB were calculated by Archimedes measurement in distilled water by weight.

**Measurements of Foam Properties**

The foam densities of Examples 20-27, Comparative Examples R-Z, AA and AB were measured according to ASTM D-792. The foam densities of Examples 20-22 and Comparative Examples R-V are listed in Table 15. The foam densities of Examples 23-24 and Comparative Examples W-Z and AA are listed in Table 16. The foam densities of Examples 25-27 and Comparative Example AB are listed in Table 19.

The compression set properties of the foam samples after 24 hours at 50°C were measured according to SATRA Test Method TM64. The compression set results and the test conditions of Examples 20-22 and Comparative Examples R-V are listed in Table 15. The compression set results and the test conditions of Examples 23-24 and Comparative Examples W-Z and AA are listed in Table 16. The compression set results and the test conditions of Examples 25-27 and Comparative Example AB are listed in Table 19.

The split tear properties of the foam samples were measured according to SATRA Test Method TM65. The samples were tested with skin. The split tear results of Examples 20-22 and Comparative Examples R-V are listed in Table 15. The split tear results of Examples 23-24 and Comparative Examples W-Z and AA are listed in Table 16. The split tear results of Examples 25-27 and Comparative Example AB are listed in Table 19.

The percentages of shrinkage of the foam samples after 70°C at 6 hours and after 50°C at 24 hours were measured according to SATRA Test Method PM70. The % of shrinkage results and the test conditions of Examples 20-22 and Comparative Examples R-V are listed in Table 15. The % of shrinkage results and the test conditions of Examples 23-24 and Comparative Examples W-Z and AA are listed in Table 16. The % of shrinkage results and the test conditions of Examples 25-27 and Comparative Example AB are listed in Table 19.

The ultimate tensile strength and ultimate elongation of the foam samples were measured according to ASTM D 412. The samples were tested for ultimate tensile strength without skin. The tensile and elongation results of Examples 20-22 and Comparative Examples R-V are listed in Table 17. The tensile and elongation results of Examples 23-24 and Comparative Examples W-Z and AA are listed in Table 18.

The abrasion of the foam samples were measured according to DIN 53516. The samples were tested with skin. The abrasion results of Examples 20-22 and Comparative Examples R-V are listed in Table 17. The abrasion results of Examples 25-27 and Comparative Example AB are listed in Table 19.

The final rebound resiliency of the foam samples were measured according to DIN 53512. The samples were tested without skin. The final rebound resiliency results of Examples 20-22 and Comparative Examples R-V are listed in Table 17. The final rebound resiliency results of Examples 23-24 and Comparative Examples W-Z and AA are listed in Table 18.

The Shore A hardness values of the foam samples were measured according to ISO 868. The contact time between the probe and the sample was 3 seconds. The samples were tested with skin. The Shore A hardness results of Examples 20-22 and Comparative Examples R-V are listed in Table 17. The Shore A hardness results of Examples 23-24 and Comparative Examples W-Z and AA are listed in Table 18. The Shore A hardness results of Examples 25-27 and Comparative Example AB are listed in Table 19.

Asker C is a measure of the hardness (or softness) of the foam with the larger the number, the harder the foam. An Asker C hardness of 50 is typical of a midsole application while an Asker C hardness of 30 is typical of a sock liner. The Asker C hardness of the foam samples were measured according to ASTM D 2240. The samples were tested with skin. The Asker C hardness results of Examples 20-22 and Comparative Examples R-V are listed in Table 17. The Asker C hardness results of Examples 23-24 and Comparative Examples W-Z and AA are listed in Table 18.

Table 15.

| Foam | Density (g/cc) | Compression set 24 hrs @ 50°C 50% deformation 30 min. recov. | Compression set 24 hrs @ 50°C 50% deformation 24 hrs. recov. | Split Tear (N/mm) | % Shrink (70°C, 6 hrs) | % Shrink (50°C, 24 hrs) |
|---|---|---|---|---|---|---|
| Comp. Ex. R | 0.310 | 61.6 | 61.5 | 3.09 | 5 | 1.4 |

(continued)

| Foam | Density (g/cc) | Compression set 24 hrs @ 50°C 50% deformation 30 min. recov. | Compression set 24 hrs @ 50°C 50% deformation 24 hrs. recov. | Split Tear (N/mm) | % Shrink (70°C, 6 hrs) | % Shrink (50°C, 24 hrs) |
|---|---|---|---|---|---|---|
| Comp. Ex. S | 0.263 | 60.3 | 57.6 | 3.29 | 0.8 | 1.2 |
| Comp. T-3 | 0.327 | 70.7 | 68.7 | 3.68 | 11 | 2.7 |
| Comp. U-2 | 0.308 | 58.6 | 53.3 | 3.6 | 2.4 | 1.8 |
| Comp. V-2 | 0.327 | 46.7 | 44.1 | 5.71 | 1.8 | 1.8 |
| Ex. 20 | 0.297 | 40.0 | 25.9 | 3.17 | 2.4 | 1.9 |
| Ex. 21 | 0.303 | 28.3 | 21.5 | 6.19 | 1.4 | 1.7 |
| Ex. 22 | 0.353 | 32.5 | 27 | 4.81 | 1.11 | / |

The data in Table 15 show that Examples 20-22 made from the ethylene/α-olefin block interpolymer disclosed herein provide better balance of compression set, split tear and shrinkage properties than Comparative Examples R-V made from ELVAX® 460, AFFINITY® 1140 and ENGAGE® 8100.

Table 16.

| Foam | Density (g/cc) | Compression set 24 hrs @ 50°C 50% deformation 30 min. recov. | Compression set 24 hrs @ 50°C 50% deformation 24 hrs. recov. | Split Tear (N/mm) | % Shrink (70°C, 6 hrs) | % Shrink (50°C, 24 hrs) |
|---|---|---|---|---|---|---|
| Comp. Ex. W | 0.182 | 71.4 | 63.8 | 1.68 | 7 | 1.8 |
| Comp. Ex. X | 0.157 | 75.5 | 69.3 | 2.89 | 2 | 1.5 |
| Comp. Y-3 | 0.204 | 82.4 | 78.6 | 2.41 | 15 | 4.2 |
| Comp. Z-2 | 0.190 | 71.3 | 64.4 | 2.29 | 5 | 2.9 |
| Comp. AA-2 | 0.185 | 65.4 | 58.7 | 2.97 | 2 | 1.8 |
| Ex. 23 | 0.186 | 56.5 | 30.2 | 2.05 | 4 | 2.3 |
| Ex. 24 | 0.176 | 52 | 27.9 | 3.28 | 2 | 1.8 |

The data in Table 16 show that Examples 23-24 made form the ethylene/α-olefin block interpolymer disclosed herein provide better balance of compression set, split tear and shrinkage properties than Comparative Examples W-AA made from ELVAX® 460, AFFINITY® 1140 and ENGAGE® 8100.

Table 17.

| Foam | Ultimate Elongation (%) | Ultimate Tensile Strength (MPa) | Abrasion ($mm^3$) | Final Rebound Resiliency (%) | Shore A Hardness | Asker C |
|---|---|---|---|---|---|---|
| Comp. Ex. R | 225 | 2.96 | 361 | 42 | 55.2 | 72 |

(continued)

| Foam | Ultimate Elongation (%) | Ultimate Tensile Strength (MPa) | Abrasion (mm$^3$) | Final Rebound Resiliency (%) | Shore A Hardness | Asker C |
|---|---|---|---|---|---|---|
| Comp. Ex. S | 366 | 3.99 | 274 | 39 | 60 | 67.4 |
| Comp. T-3 | 423 | 3.24 | 1093 | 59 | 36.3 | 53.8 |
| Comp. U-2 | 353 | 2.74 | 900 | 55.2 | 38.3 | 56.4 |
| Comp. V-2 | 302 | 3.58 | 294 | 43.8 | 55.7 | 72.6 |
| Ex. 20 | 317 | 2.13 | 816 | 54.2 | 36.2 | 53.6 |
| Ex. 21 | 352 | 3.68 | 252 | 51.6 | 54.1 | 71 |
| Ex. 22 | 400 | 3.21 | 341 | / | / | 69.3 |

The data in Table 17 show that Examples 20-22 made form the ethylene/α-olefin block interpolymer disclosed herein are more resilient than Comparative Example R made from ELVAX® 460; the abrasion resistance of Example 21 is similar to Comparative Example R made from Affinity 1140 and Comparative Example V made from ENGAGE® 8842 and DOWLEX® 2042; and Example 21 provides better abrasion resistance than Comparative Examples T and U made from ENGAGE® 8100 and 8842.

Table 18.

| Foam | Ultimate Elongation (%) | Ultimate Tensile Strength (MPa) | Final Rebound Resiliency (%) | Shore A Hardness | Asker C |
|---|---|---|---|---|---|
| Comp. Ex. W | 169 | 2.04 | 45.6 | 39.5 | 55 |
| Comp. Ex. X | 319 | 2.7 | 44.2 | 34 | 48.8 |
| Comp. Y-3 | 358 | 2.44 | 61 | 23.6 | 37.6 |
| Comp. Z-2 | 259 | 2.23 | 58.2 | 25.3 | 41 |
| Comp. AA-2 | 240 | 2.45 | 50 | 38.7 | 55.8 |
| Ex. 23 | 275 | 1.82 | 58.8 | 23.7 | 38.6 |
| Ex. 24 | 314 | 2.98 | 56.4 | 35.4 | 53.4 |

Table 18 shows that Example 24 made form the ethylene/α-olefin block interpolymer disclosed herein is more resilient, has higher elongation and ultimate strength than Comparative Example W made from ELVAX® 460, for the same hardness of Comparative Example W. Comparative Example Y made out of Affinity 1140 and Comparative Example Z made from ENGAGE® 8842 and DOWLEX® 2042 also exhibit high resiliency and elongation. Example 24 demonstrates a good balance of hardness, elongation, ultimate strength and hardness.

Table 19.

| Foam | Density (g/cc) | Shore A Hardness | Abrasion (mm3 volume loss) | % Shrink (70°C, 6 hrs) | Compression set 6 hrs @ 50°C 50% deformation | Split tear (N/mm) |
|---|---|---|---|---|---|---|
| Comp. Ex. AB | 0.371 | 63.3 | 300 | 3.25 | 66 | 4.25 |

(continued)

| Foam | Density (g/cc) | Shore A Hardness | Abrasion (mm3 volume loss) | % Shrink (70°C, 6 hrs) | Compression set 6 hrs @ 50°C 50% deformation | Split tear (N/mm) |
|---|---|---|---|---|---|---|
| Ex. 25 | 0.383 | 56.9 | 296.8 | 3.5 | 43.8 | 4.27 |
| Ex. 26 | 0.366 | 56.8 | 308.3 | 4.1 | 52.4 | 4.02 |
| Ex. 27 | 0.369 | 44.9 | 636.6 | 4.5 | 39.7 | 3.25 |

Example 25 made from EVA and an ethylene/α-olefin block interpolymer shows lower compression set than Comparative Example AB for similar shrinkage, abrasion and split tear.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

## Claims

**1.** A foam comprising at least one ethylene/α-olefin block interpolymer, wherein the density of the foam is from greater than 150 to 500 kg/$m^3$ and wherein the ethylene/α-olefin block interpolymer:

(a) has a $M_w/M_n$ from 1.7 to 3.5, at least one melting point, $T_m$, in °C (degrees Celsius), and a density, d, in g/$cm^3$ (grams/cubic centimeter), wherein the numerical values of $T_m$ and d correspond to the relationship:

$$T_m \geq -2002.9 + 4538.5(d) - 2422.2(d)^2;$$

or

(b) has a $M_w/M_n$ from 1.7 to 3.5, and is **characterized by** a heat of fusion, ΔH in J/g, and a delta quantity, ΔT, in °C (degrees Celsius) defined as the temperature difference between the tallest DSC peak and the tallest CRYSTAF peak, wherein the numerical values of ΔT and ΔH have the following relationships:

$\Delta T > -0.1299(\Delta H) + 62.81$ for ΔH greater than zero and up to 130 J/g,
$\Delta T \geq 48°C$ for ΔH greater than 130 J/g ,

wherein the CRYSTAF peak is determined using at least 5 percent of the cumulative polymer, and if less than 5 percent of the polymer has an identifiable CRYSTAF peak, then the CRYSTAF temperature is 30°C; or

(c) is **characterized by** an elastic recovery, Re, in percent at 300 percent strain and 1 cycle measured with a compression-molded film of the ethylene/a-olefin interpolymer, and has a density, d, in g/$cm^3$ (grams/cubic centimeter), wherein the numerical values of Re and d satisfy the following relationship when ethylene/a-olefin interpolymer is substantially free of a cross-linked phase:

$$Re > 1481 - 1629(d);$$

or

(d) has a comonomer content of a TREF fraction which elutes between 40°C and 130°C greater than or equal to the quantity (-2013) T + 2107, where T is the numerical value of the peak elution temperature of the TREF fraction measured in °C; or

(e) has a storage modulus at 25°C, G'(25°C), and a storage modulus at 100°C, G'(100°C), wherein the ratio of G'(25°C) to G'(100°C) is in the range of 1:1 to 9:1.

2. The foam of claim 1, wherein the ethylene/a-olefin block interpolymer has a $M_w/M_n$ from 1.7 to 3.5, at least one melting point, Tm, in °C (degrees Celsius), and a density, d, in g/cm$^3$ (grams/cubic centimeter), wherein the numerical values of $T_m$ and d correspond to the relationship:

$$T_m \geq 858.91 - 1825.3(d) + 1112.8(d)^2.$$

3. The foam of claim 1, wherein the ethylene/α-olefin block interpolymer has a $M_w/M_n$ from 1.7 to 3.5 and is **characterized by** a heat of fusion, ΔH in J/g, and a delta quantity, ΔT, in °C (degrees Celsius) defined as the temperature difference between the tallest DSC peak and the tallest CRYSTAF peak, wherein the numerical values of ΔT and ΔH have the following relationships:

$\Delta T > -0.1299(\Delta H) + 62.81$ for ΔH greater than zero and up to 130J/g,
$\Delta T \geq 48°C$ for ΔH greater than 130 J/g ,

wherein the CRYSTAF peak is determined using at least 5 percent of the cumulative polymer, and if less than 5 percent of the polymer has an identifiable CRYSTAF peak, then the CRYSTAF temperature is 30°C.

4. The foam of claim 1, wherein the ethylene/α-olefin block interpolymer is **characterized by** an elastic recovery, Re, in percent at 300 percent strain and 1 cycle measured with a compression-molded film of the ethylene/α-olefin interpolymer, and has a density, d, in g/cm$^3$ (grams/cubic centimeter), wherein the numerical values of Re and d satisfy the following relationship when ethylene/α-olefin interpolymer is substantially free of a cross-linked phase:

$$Re > 1481-1629(d).$$

5. The foam of claim 1, wherein the numerical values of Re and d satisfy the following relationship:

$$Re > 1491-1629(d).$$

6. The foam of claim 1, wherein the numerical values of Re and d satisfy the following relationship:

$$Re > 1501-1629(d).$$

7. The foam of claim 1, wherein the numerical values of Re and d satisfy the following relationship:

$$Re > 1511-1629(d).$$

8. A foam comprising at least one ethylene/α-olefin block interpolymer, wherein the density of the soft foam is from greater than 150 to 500 kg/m$^3$ and wherein the ethylene/α-olefin interpolymer has:
(b) an average block index from greater than 0 and up to 1.0 and a molecular weight distribution, $M_w/M_n$, greater than 1.3.

9. The foam of claim 1 or 8, wherein the ethylene/α-olefin block interpolymer has a molecular fraction which elutes between 40°C and 130°C when fractionated using TREF, **characterized in that** the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer.

10. The foam of claim 1 or 8, wherein the ethylene/a-olefin block interpolymer has a storage modulus at 25°C, G'(25°C), and a storage modulus at 100°C, G'(100°C), wherein the ratio of G'(25°C) to G'(100°C) is in the range of 1:1 to 9:1.

11. The foam of claim 1 or 8, wherein the α-olefin in the ethylene/α-olefin block interpolymer is styrene, propylene, 1-butene, 1-hexene, 1-octene, 4-methyl-1-pentene, norbornene, 1-decene, 1,5-hexadiene, or a combination thereof.

**12.** The foam of claim 1 or 8, wherein the ethylene/α-olefin block interpolymer is cross-linked by a cross-linking agent or radiation.

**13.** The foam of claim 12, wherein the foam contains more than 5 % of gel per ASTM D-2765-84 Method A.

**14.** The foam of claim 1 or 8 further comprising at least an additive, wherein the additive is a blowing agent, a cross-linking agent, a stability control agent, a nucleating agent, a filler, a pigment, an antioxidant, an acid scavenger, a UV stabilizer, a flame retardant, a lubricant, a processing aid, an extrusion aid, a blowing agent activator, a coagent or a combination thereof.

**15.** The foam of claim 1 or 8 further comprising an ethylene vinyl acetate copolymer (EVA).

**16.** The foam of claim 15, wherein the ratio of the EVA to the ethylene/α-olefin block interpolymer is from 1:10 to 10:1.

**17.** A foamable composition comprising:

(i) a blowing agent;
(ii) a crosslinking agent; and
(iii) at least one ethylene/α-olefin block interpolymer, wherein the ethylene/α-olefin block interpolymer:

(a) has a $M_w/M_n$ from 1.7 to 3.5, at least one melting point, $T_m$, in °C (degrees Celsius), and a density, d, in g/cm$^3$ (grams/cubic centimeter), wherein the numerical values of $T_m$ and d correspond to the relationship:

$$T_m \geq -2002.9 + 4538.5(d) - 2422.2(d)^2;$$

or
(b) has a $M_w/M_n$ from 1.7 to 3.5, and is **characterized by** a heat of fusion, ΔH in J/g, and a delta quantity, ΔT, in °C (degrees Celsius) defined as the temperature difference between the tallest DSC peak and the tallest CRYSTAF peak, wherein the numerical values of ΔT and ΔH have the following relationships:

$\Delta T > -0.1299(\Delta H) + 62.81$ for ΔH greater than zero and up to 130 J/g,
$\Delta T \geq 48°C$ for ΔH greater than 130 J/g,

wherein the CRYSTAF peak is determined using at least 5 percent of the cumulative polymer, and if less than 5 percent of the polymer has an identifiable CRYSTAF peak, then the CRYSTAF temperature is 30°C; or
(c) is **characterized by** an elastic recovery, Re, in percent at 300 percent strain and 1 cycle measured with a compression-molded film of the ethylene/α-olefin interpolymer, and has a density, d, in g/cm$^3$ (grams/cubic centimeter), wherein the numerical values of Re and d satisfy the following relationship when ethylene/α-olefin interpolymer is substantially free of a cross-linked phase:

$$Re > 1481-1629(d);$$

or
(d) has a a comonomer content of the TREF fraction which elutes between 40 and 130°C greater than or equal to the quantity (- 0.2013) T + 21.07, wherein T is the numerical value of the peak elution temperature of the TREF fraction, measured in °C; or
(e) has a storage modulus at 25°C, G'(25°C), and a storage modulus at 100°C, G'(100°C), wherein the ratio of G'(25°C) to G'(100°C) is in the range of 1:1 to 9:1.

**18.** A foamable composition comprising:

(i) a blowing agent;
(ii) a crosslinking agent; and
(iii) at least one ethylene/α-olefin block interpolymer, wherein the ethylene/a-olefin block interpolymer has:
(b) an average block index from greater than 0 and up to 1.0 and a molecular weight distribution, greater than 1.3.

**19.** A foamed article comprising the foam of claim 1 or 8.

**20.** The foamed article of claim 19, wherein the foamed article is a footwear article.

**Patentansprüche**

**1.** Schaum, umfassend mindestens ein Ethylen/$\alpha$-Olefin-Blockinterpolymer, wobei die Dichte des Schaums von größer als 150 bis 500 kg/m$^3$ ist und wobei das Ethylen/$\alpha$-Olefin-Blockinterpolymer:

(a) eine $M_w/M_n$ von 1,7 bis 3,5 hat, mindestens einen Schmelzpunkt, $T_m$, in °C (Graden Celsius), und eine Dichte, d, in g/cm$^3$ (Gramm/Kubikzentimeter), wobei die numerischen Werte von $T_m$ und d der Beziehung entsprechen:

$$T_m \geq -2002{,}9 + 4538{,}5(d) - 2422{,}2(d)^2;$$

oder
(b) eine $M_w/M_n$ von 1,7 bis 3,5 hat, und **gekennzeichnet ist, durch** eine Fusionswärme, $\Delta H$ in J/g, und eine Deltamenge, $\Delta T$, in °C (Graden Celsius) definiert als die Temperaturdifferenz zwischen dem höchsten DSC-Peak und dem höchsten CRYSTAF-Peak, wobei die numerischen Werte von $\Delta T$ und $\Delta H$ die folgenden Beziehungen haben:

$\Delta T > -0{,}1299(\Delta H) + 62{,}81$ für $\Delta H$ größer als null und bis zu 130 J/g,
$\Delta T \geq 48$ °C für $\Delta H$ größer als 130 J/g,

wobei der CRYSTAF-Peak bestimmt wird unter Verwendung von mindestens 5 Prozent des kumulativen Polymers, und falls weniger als 5 Prozent des Polymers einen identifizierbaren CRYSTAF-Peak hat, dann ist die CRYSTAF-Temperatur 30 °C; oder
(c) **gekennzeichnet ist, durch** eine elastische Erholung, Re, in Prozent bei 300 Prozent Belastung und 1 Zyklus, gemessen mit einer formgepressten Folie des Ethylen/$\alpha$-Olefin-Interpolymers, und eine Dichte, d, in g/cm$^3$ (Gramm/Kubikzentimeter) hat, wobei die numerischen Werte von Re und d die folgende Beziehung erfüllen, wenn das Ethylen/$\alpha$-Olefin-Interpolymer im Wesentlichen frei von einer vernetzten Phase ist:

$$Re > 1481 - 1629(d);$$

oder
(d) einen Comonomergehalt einer TREF-Fraktion hat, die zwischen 40 °C und 130 °C eluiert, größer als oder gleich der Menge (-2013) T + 2107, wobei T der numerische Wert der Peakelutionstemperatur der TREF-Fraktion gemessen in °C ist; oder
(e) ein Speichermodul bei 25 °C, G'(25°C), und ein Speichermodul bei 100°C, G'(100°C), hat, wobei das Verhältnis von G'(25°C) zu G'(100°C) im Bereich von 1:1 bis 9:1 ist.

**2.** Schaum nach Anspruch 1, wobei das Ethylen/$\alpha$-Olefin-Blockinterpolymer eine $M_w/M_n$ von 1,7 bis 3,5 hat, mindestens einen Schmelzpunkt, $T_m$, in °C (Graden Celsius), und eine Dichte, d, in g/cm$^3$ (Gramm/Kubikzentimeter), wobei die numerischen Werte von $T_m$ und d der Beziehung entsprechen:

$$T_m \geq 858{,}91 - 1825{,}3(d) + 1112{,}8(d)^2.$$

**3.** Schaum nach Anspruch 1, wobei das Ethylen/$\alpha$-Olefin-Blockinterpolymer eine $M_w/M_n$ von 1,7 bis 3,5 hat und **gekennzeichnet ist, durch** eine Fusionswärme, $\Delta H$ in J/g, und eine Deltamenge, $\Delta T$, in °C (Graden Celsius) definiert als die Temperaturdifferenz zwischen dem höchsten DSC-Peak und dem höchsten CRYSTAF-Peak, wobei die numerischen Werte von $\Delta T$ und $\Delta H$ die folgenden Beziehungen haben:

$\Delta T > -0{,}1299(\Delta H) + 62{,}81$ für $\Delta H$ größer als null und bis zu 130 J/g,
$\Delta T \geq 48$ °C für $\Delta H$ größer als 130 J/g,

wobei der CRYSTAF-Peak bestimmt wird unter Verwendung von mindestens 5 Prozent des kumulativen Polymers, und falls weniger als 5 Prozent des Polymers einen identifizierbaren CRYSTAF-Peak hat, dann ist die CRYSTAF-Temperatur 30 °C.

4. Schaum nach Anspruch 1, wobei das Ethylen/α-Olefin-Blockinterpolymer **gekennzeichnet ist, durch** eine elastische Erholung, Re, in Prozent bei 300 Prozent Belastung und 1 Zyklus, gemessen mit einer formgepressten Folie des Ethylen/α-Olefin-Interpolymers, und eine Dichte, d, in g/cm$^3$ (Gramm/Kubikzentimeter) hat, wobei die numerischen Werte von Re und d die folgende Beziehung erfüllen, wenn das Ethylen/α-Olefin-Interpolymer im Wesentlichen frei von einer vernetzten Phase ist:

$$Re > 1481 - 1629(d).$$

5. Schaum nach Anspruch 1, wobei die numerischen Werte von Re und d die folgende Beziehung erfüllen:

$$Re > 1491 - 1629(d).$$

6. Schaum nach Anspruch 1, wobei die numerischen Werte von Re und d die folgende Beziehung erfüllen:

$$Re > 1501 - 1629(d).$$

7. Schaum nach Anspruch 1, wobei die numerischen Werte von Re und d die folgende Beziehung erfüllen:

$$Re > 1511 - 1629(d).$$

8. Schaum, umfassend mindestens ein Ethylen/α-Olefin-Blockinterpolymer, wobei die Dichte des weichen Schaums von größer als 150 bis 500 kg/m$^3$ ist und wobei das Ethylen/α-Olefin-Interpolymer hat:
(b) einen durchschnittlichen Blockindex von größer als null und bis zu 1,0 und eine Molekulargewichtsverteilung, $M_w/M_n$ größer als 1,3.

9. Schaum nach Anspruch 1 oder 8, wobei das Ethylen/α-Olefin-Blockinterpolymer eine molekulare Fraktion hat, die zwischen 40°C und 130 °C eluiert, wenn unter Verwendung von TREF fraktioniert, **dadurch gekennzeichnet, dass** die Fraktion einen molaren Comonomergehalt von mindestens 5 Prozent höher als die einer vergleichbaren zufälligen Ethyleninterpolymer-Fraktion hat, die zwischen den gleichen Temperaturen eluiert, wobei das vergleichbare zufällige Ethyleninterpolymer das/die gleiche(n) Comonomer(e) hat und einen Schmelzindex, eine Dichte und einen molaren Comonomergehalt (basierend auf dem Gesamtpolymer) innerhalb 10 Prozent von dem des Ethylen/α-Olefin-Interpolymers hat.

10. Schaum nach Anspruch 1 oder 8, wobei das Ethylen/α-Olefin-Blockinterpolymer ein Speichermodul bei 25°C, G'(25°C), und ein Speichermodul bei 100 °C, G'(100 °C), hat, wobei das Verhältnis von G'(25°C) zu G'(100°C) im Bereich von 1:1 bis 9:1 ist.

11. Schaum nach Anspruch 1 oder 8, wobei das α-Olefin in dem Ethylen/α-Olefin-Blockinterpolymer Styrol, Propylen, 1-Buten, 1-Hexen, 1-Octen, 4-Methyl-1-Penten, Norbornen, 1-Decen, 1,5-Hexadien, oder eine Kombination davon ist.

12. Schaum nach Anspruch 1 oder 8, wobei das Ethylen/α-Olefin-Blockinterpolymer vernetzt ist durch ein Vernetzungsagens oder Bestrahlung.

13. Schaum nach Anspruch 12, wobei der Schaum mehr als 5 % Gel per ASTM D-2765-84 Verfahren A enthält.

14. Schaum nach Anspruch 1 oder 8, ferner umfassend mindestens ein Additiv, wobei das Additiv ein Treibmittel ist, ein Vernetzungsagens, ein Stabilitätskontrollagens, ein Nukleierungsmittel, ein Füllstoff, ein Pigment, ein Antioxidants, ein Säurefänger, ein UV-Stabilisator, ein Flammschutzmittel, ein Gleitmittel, ein Verarbeitungshilfsmittel, ein Spritzbarmacher, Treibmittelaktivator, ein Coagens oder eine Kombination davon ist.

**15.** Schaum nach Anspruch 1 oder 8, ferner umfassend ein Ethylenvinylacetatcopolymer (EAV).

**16.** Schaum nach Anspruch 15, wobei das Verhältnis von dem EAV zu dem Ethylen/$\alpha$-Olefin-Blockinterpolymer von 1:10 bis 10:1 ist.

**17.** Schäumbare Zusammensetzung, umfassend:

(i) ein Treibmittel;
(ii) ein Vernetzungsagens; und
(iii) mindestens ein Ethylen/$\alpha$-Olefin-Blockinterpolymer, wobei das Ethylen/$\alpha$-Olefin-Blockinterpolymer:

(a) eine $M_w/M_n$ von 1,7 bis 3,5 hat, mindestens einen Schmelzpunkt, $T_m$, in °C (Graden Celsius), und eine Dichte, d, in g/cm$^3$ (Gramm/Kubikzentimeter), wobei die numerischen Werte von $T_m$ und d der Beziehung entsprechen:

$$T_m \geq -2002{,}9 + 4538{,}5(d) - 2422{,}2(d)^2;$$

oder
(b) eine $M_w/M_n$ von 1,7 bis 3,5 hat, und **gekennzeichnet ist, durch** eine Fusionswärme, $\Delta H$ in J/g, und eine Deltamenge, $\Delta T$, in °C (Graden Celsius) definiert als die Temperaturdifferenz zwischen dem höchsten DSC-Peak und dem höchsten CRYSTAF-Peak, wobei die numerischen Werte von $\Delta T$ und $\Delta H$ die folgenden Beziehungen haben:

$\Delta T > -0{,}1299(\Delta H) + 62{,}81$ für $\Delta H$ größer als null und bis zu 130 J/g,
$\Delta T \geq 48$ °C für $\Delta H$ größer als 130 J/g,

wobei der CRYSTAF-Peak bestimmt wird unter Verwendung von mindestens 5 Prozent des kumulativen Polymers, und falls weniger als 5 Prozent des Polymers einen identifizierbaren CRYSTAF-Peak hat, dann ist die CRYSTAF-Temperatur 30 °C; oder
(c) **gekennzeichnet ist, durch** eine elastische Erholung, Re, in Prozent bei 300 Prozent Belastung und 1 Zyklus, gemessen mit einer formgepressten Folie des Ethylen/$\alpha$-Olefin-Interpolymers, und eine Dichte, d, in g/cm$^3$ (Gramm/Kubikzentimeter) hat, wobei die numerischen Werte von Re und d die folgende Beziehung erfüllen, wenn das Ethylen/$\alpha$-Olefin-Interpolymer im Wesentlichen frei von einer vernetzten Phase ist:

$$Re > 1481 - 1629(d);$$

oder
(d) einen Comonomergehalt der TREF-Fraktion hat, die zwischen 40 °C und 130 °C eluiert, größer als oder gleich der Menge (-0,2013) T + 21,07, wobei T der numerische Wert der Peakelutionstemperatur der TREF-Fraktion gemessen in °C ist; oder
(e) ein Speichermodul bei 25 °C, G'(25°C), und ein Speichermodul bei 100°C, G'(100°C), hat, wobei das Verhältnis von G'(25°C) zu G'(100°C) im Bereich von 1:1 bis 9:1 ist.

**18.** Schäumbare Zusammensetzung, umfassend:

(i) ein Treibmittel;
(ii) ein Vernetzungsagens; und
(iii) mindestens ein Ethylen/$\alpha$-Olefin-Blockinterpolymer, wobei das Ethylen/$\alpha$-Olefin-Blockinterpolymer hat:
(b) einen durchschnittlichen Blockindex von größer als null und bis zu 1,0 und eine Molekulargewichtsverteilung, größer als 1,3.

**19.** Geschäumter Gegenstand, umfassend den Schaum nach Anspruch 1 oder 8.

**20.** Geschäumter Gegenstand nach Anspruch 19, wobei der geschäumte Gegenstand ein Fußbekleidungsgegenstand ist.

## Revendications

1. Une mousse comprenant au moins un interpolymère à blocs d'éthylène/$\alpha$-oléfine, dans laquelle la masse volumique de la mousse va de plus de 150 à 500 kg/$m^3$ et dans laquelle l'interpolymère à blocs d'éthylène/$\alpha$-oléfine :

   (a) a une $M_w/M_n$ allant de 1,7 à 3,5, au moins un point de fusion, $T_m$, en °C (degrés Celsius), et une masse volumique, d, en g/$cm^3$ (grammes/centimètre cube), dans laquelle les valeurs numériques de $T_m$ et de d correspondent à la relation :

   $$T_m \geq -2\,002{,}9 + 4\,538{,}5\,(d) - 2\,422{,}2\,(d)^2\ ;$$

   ou
   (b) a une $M_w/M_n$ allant de 1,7 à 3,5, et est **caractérisé par** une chaleur de fusion, $\Delta H$ en J/g, et une quantité delta, $\Delta T$, en °C (degrés Celsius) définie comme la différence de température entre le pic DSC le plus haut et le pic CRYSTAF le plus haut, dans laquelle les valeurs numériques de $\Delta T$ et de $\Delta H$ ont les relations suivantes :

   $\Delta T > -0{,}1299\ (\Delta H) + 62{,}81$ pour $\Delta H$ supérieure à zéro et allant jusqu'à 130 J/g,
   $\Delta T \geq 48$ °C pour $\Delta H$ supérieure à 130 J/g,

   dans laquelle le pic CRYSTAF est déterminé à l'aide d'au moins 5 pour cent du polymère cumulé, et si moins de 5 pour cent du polymère a un pic CRYSTAF identifiable, alors la température CRYSTAF est de 30 °C ; ou
   (c) est **caractérisé par** une recouvrance élastique, Re, en pour cent sous une contrainte de 300 pour cent et pour 1 cycle mesurée avec un film moulé par compression de l'interpolymère d'éthylène/$\alpha$-oléfine, et a une masse volumique, d, en g/$cm^3$ (grammes/centimètre cube), dans laquelle les valeurs numériques de Re et de d satisfont à la relation suivante lorsque l'interpolymère d'éthylène/$\alpha$-oléfine est substantiellement dépourvu d'une phase réticulée :

   $$Re > 1\,481 - 1\,629\,(d)\ ;$$

   ou
   (d) a une teneur en comonomère d'une fraction de TREF qui s'élue entre 40 °C et 130 °C supérieure ou égale à la quantité (-2 013) T + 2 107, où T est la valeur numérique de la température d'élution de la fraction de TREF mesurée en °C ; ou
   (e) a un module de conservation à 25 °C, G'(25 °C), et un module de conservation à 100 °C, G'(100 °C), dans laquelle le rapport de G'(25 °C) à G'(100 °C) est compris dans la gamme de 1/1 à 9/1.

2. La mousse de la revendication 1, dans laquelle l'interpolymère à blocs d'éthylène/$\alpha$-oléfine a une $M_w/M_n$ allant de 1,7 à 3,5, au moins un point de fusion, $T_m$, en °C (degrés Celsius), et une masse volumique, d, en g/$cm^3$ (grammes/centimètre cube), dans laquelle les valeurs numériques de $T_m$ et de d correspondent à la relation :

   $$T_m \geq 858{,}91 - 1\,825{,}3\,(d) + 1\,112{,}8\,(d)^2.$$

3. La mousse de la revendication 1, dans laquelle l'interpolymère à blocs d'éthylène/$\alpha$-oléfine a une $M_w/M_n$ allant de 1,7 à 3,5 et est **caractérisé par** une chaleur de fusion, $\Delta H$ en J/g, et une quantité delta, $\Delta T$, en °C (degrés Celsius) définie comme la différence de température entre le pic DSC le plus haut et le pic CRYSTAF le plus haut, dans laquelle les valeurs numériques de $\Delta T$ et de $\Delta H$ ont les relations suivantes :

   $\Delta T > -0{,}1299\ (\Delta H) + 62{,}81$ pour $\Delta H$ supérieure à zéro et allant jusqu'à 130 J/g,
   $\Delta T \geq 48$ °C pour $\Delta H$ supérieure à 130 J/g,

   dans laquelle le pic CRYSTAF est déterminé à l'aide d'au moins 5 pour cent du polymère cumulé, et si moins de 5 pour cent du polymère a un pic CRYSTAF identifiable, alors la température CRYSTAF est de 30 °C.

4. La mousse de la revendication 1, dans laquelle l'interpolymère à blocs d'éthylène/$\alpha$-oléfine est **caractérisé par** une recouvrance élastique, Re, en pour cent sous une contrainte de 300 pour cent et pour 1 cycle mesurée avec un

film moulé par compression de l'interpolymère d'éthylène/α-oléfine, et a une masse volumique, d, en g/cm$^3$ (grammes/centimètre cube), dans laquelle les valeurs numériques de Re et de d satisfont à la relation suivante lorsque l'interpolymère d'éthylène/α-oléfine est substantiellement dépourvu d'une phase réticulée :

$$Re > 1\,481 - 1\,629\,(d).$$

5. La mousse de la revendication 1, dans laquelle les valeurs numériques de Re et de d satisfont à la relation suivante :

$$Re > 1\,491 - 1\,629\,(d).$$

6. La mousse de la revendication 1, dans laquelle les valeurs numériques de Re et de d satisfont à la relation suivante :

$$Re > 1\,501 - 1\,629\,(d).$$

7. La mousse de la revendication 1, dans laquelle les valeurs numériques de Re et de d satisfont à la relation suivante :

$$Re > 1\,511 - 1\,629\,(d).$$

8. Une mousse comprenant au moins un interpolymère à blocs d'éthylène/α-oléfine, dans laquelle la masse volumique de la mousse souple va de plus de 150 à 500 kg/m$^3$ et dans laquelle l'interpolymère d'éthylène/α-oléfine a :
(b) un indice moyen de séquence allant de plus de 0 et jusqu'à 1,0 et une distribution des masses moléculaires, supérieure à 1,3.

9. La mousse de la revendication 1 ou de la revendication 8, dans laquelle l'interpolymère à blocs d'éthylène/α-oléfine a une fraction moléculaire qui s'élue entre 40 °C et 130 °C lorsque fractionné à l'aide d'un TREF, **caractérisée en ce que** la fraction a une teneur molaire en comonomère d'au moins 5 pour cent supérieure à celle d'une fraction d'interpolymère aléatoire d'éthylène comparable s'éluant entre les mêmes températures, dans laquelle ledit interpolymère aléatoire d'éthylène comparable a le(s) même(s) comonomère(s) et un indice de fusion, une masse volumique, et une teneur molaire en comonomère (rapporté à la totalité du polymère) qui sont ceux de l'interpolymère d'éthylène/α-oléfine à 10 pour cent près.

10. La mousse de la revendication 1 ou de la revendication 8, dans laquelle l'interpolymère à blocs d'éthylène/α-oléfine a un module de conservation à 25 °C, G'(25 °C), et un module de conservation à 100 °C, G'(100 °C), dans laquelle le rapport de G'(25 °C) à G'(100 °C) est compris dans la gamme de 1/1 à 9/1.

11. La mousse de la revendication 1 ou de la revendication 8, dans laquelle l'a-oléfine dans l'interpolymère à blocs d'éthylène/α-oléfine est le styrène, le propylène, le 1-butène, le 1-hexène, le 1-octène, le 4-méthyl-1-pentène, le norbornène, le 1-décène, le 1,5-hexadiène, ou une combinaison de ceux-ci.

12. La mousse de la revendication 1 ou de la revendication 8, dans laquelle l'interpolymère à blocs d'éthylène/α-oléfine est réticulé par un agent de réticulation ou par rayonnement.

13. La mousse de la revendication 12, la mousse contenant plus de 5 % de gel conformément à l'ASTM D-2765-84, Méthode A.

14. La mousse de la revendication 1 ou de la revendication 8 comprenant en outre au moins un additif, dans laquelle l'additif est un agent gonflant, un agent de réticulation, un agent de régulation de stabilité, un agent de nucléation, une charge, un pigment, un antioxydant, un capteur d'acide, un stabilisant UV, un retardateur de flamme, un lubrifiant, un auxiliaire de mise en oeuvre, un agent d'aide à l'extrusion, un activateur d'agent gonflant, un coagent ou une combinaison de ceux-ci.

15. La mousse de la revendication 1 ou de la revendication 8 comprenant en outre un copolymère d'éthylène-acétate de vinyle (EVA).

**16.** La mousse de la revendication 15, dans laquelle le rapport de l'EVA à l'interpolymère à blocs d'éthylène/$\alpha$-oléfine va de 1/10 à 10/1.

**17.** Une composition moussante comprenant :

(i) un agent gonflant ;
(ii) un agent de réticulation ; et
(iii) au moins un interpolymère à blocs d'éthylène/$\alpha$-oléfine, dans laquelle l'interpolymère à blocs d'éthylène/$\alpha$-oléfine :

(a) a une $M_w/M_n$ allant de 1,7 à 3,5, au moins un point de fusion, $T_m$, en °C (degrés Celsius), et une masse volumique, d, en g/cm$^3$ (grammes/centimètre cube), dans laquelle les valeurs numériques de $T_m$ et de d correspondent à la relation :

$$T_m \geq -2\,002{,}9 + 4\,538{,}5\,(d) - 2\,422{,}2\,(d)^2\,;$$

ou
(b) a une $M_w/M_n$ allant de 1,7 à 3,5, et est **caractérisé par** une chaleur de fusion, $\Delta H$ en J/g, et une quantité delta, $\Delta T$, en °C (degrés Celsius) définie comme la différence de température entre le pic DSC le plus haut et le pic CRYSTAF le plus haut, dans laquelle les valeurs numériques de $\Delta T$ et de $\Delta H$ ont les relations suivantes :

$\Delta T > -0{,}1299\,(\Delta H) + 62{,}81$ pour $\Delta H$ supérieure à zéro et allant jusqu'à 130 J/g,
$\Delta T \geq 48$ °C pour $\Delta H$ supérieure à 130 J/g,

dans laquelle le pic CRYSTAF est déterminé à l'aide d'au moins 5 pour cent du polymère cumulé, et si moins de 5 pour cent du polymère a un pic CRYSTAF identifiable, alors la température CRYSTAF est de 30 °C ; ou
(c) est **caractérisé par** une recouvrance élastique, Re, en pour cent sous une contrainte de 300 pour cent et pour 1 cycle mesurée avec un film moulé par compression de l'interpolymère d'éthylène/$\alpha$-oléfine, et a une masse volumique, d, en g/cm$^3$ (grammes/centimètre cube), dans laquelle les valeurs numériques de Re et de d satisfont à la relation suivante lorsque l'interpolymère d'éthylène/$\alpha$-oléfine est substantiellement dépourvu d'une phase réticulée :

$$Re > 1\,481 - 1\,629\,(d)\,;$$

ou
(d) a une teneur en comonomère de la fraction de TREF qui s'élue entre 40 et 130 °C supérieure ou égale à la quantité (-0,2013) T + 21,07, dans laquelle T est la valeur numérique de la température d'élution de pic de la fraction de TREF, mesurée en °C ; ou
(e) a un module de conservation à 25 °C, G'(25 °C), et un module de conservation à 100 °C, G'(100 °C), dans laquelle le rapport de G'(25 °C) à G'(100 °C) est compris dans la gamme de 1/1 à 9/1.

**18.** Une composition moussante comprenant :

(i) un agent gonflant ;
(ii) un agent de réticulation ; et
(iii) au moins un interpolymère à blocs d'éthylène/$\alpha$-oléfine, dans laquelle l'interpolymère à blocs d'éthylène/$\alpha$-oléfine a :
(b) un indice moyen de séquence allant de plus de 0 et jusqu'à 1,0 et une distribution des masses moléculaires, supérieure à 1,3.

**19.** Un article en mousse comprenant la mousse de la revendication 1 ou de la revendication 8.

**20.** L'article en mousse de la revendication 19, l'article en mousse étant un article chaussant.

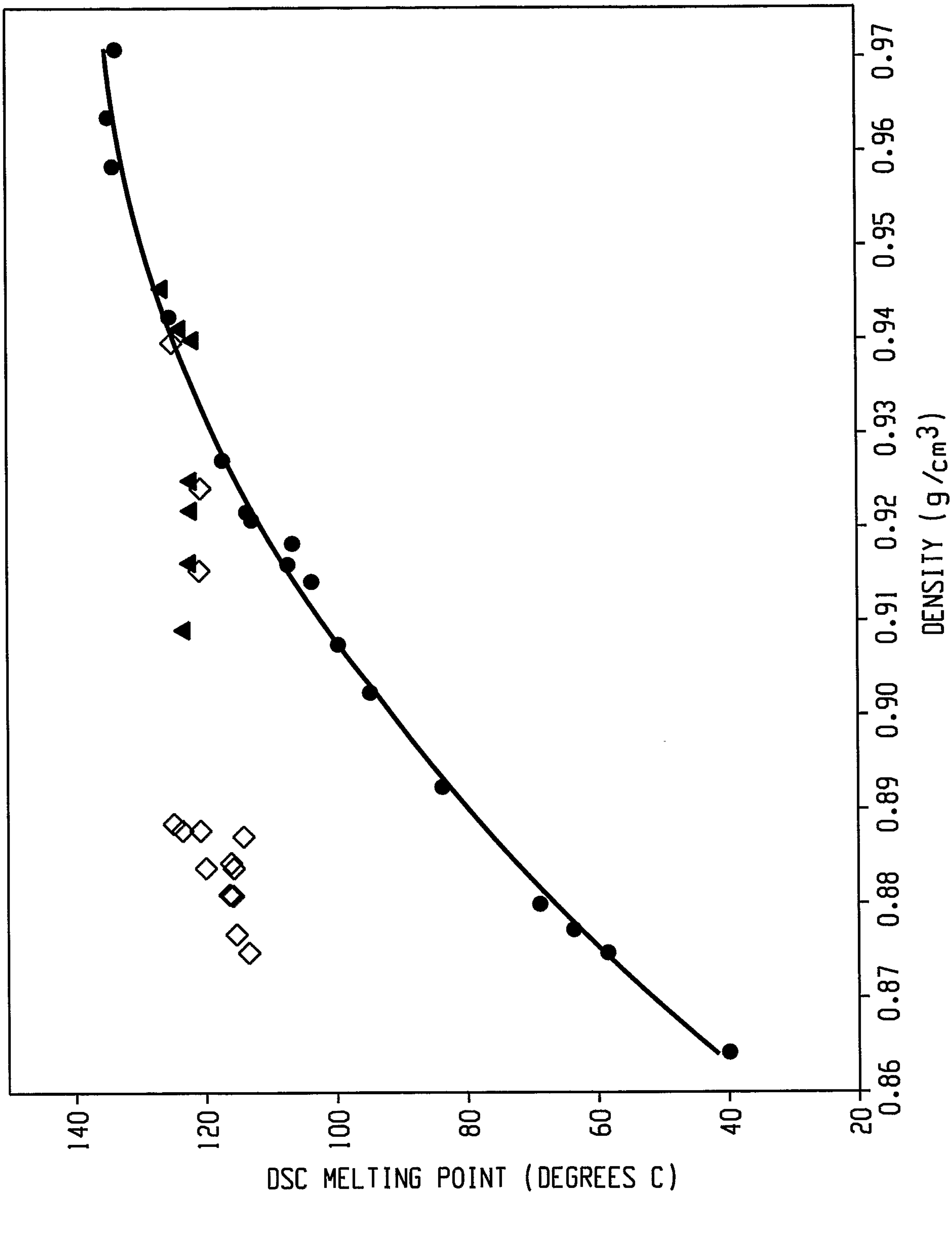

DSC MELTING POINT (DEGREES C)
140
120
100
80
60
40
20
DENSITY (g/cm3)
0.86
0.87
0.88
0.89
0.90
0.91
0.92
0.93
0.94
0.95
0.96
0.97


Fig. 1

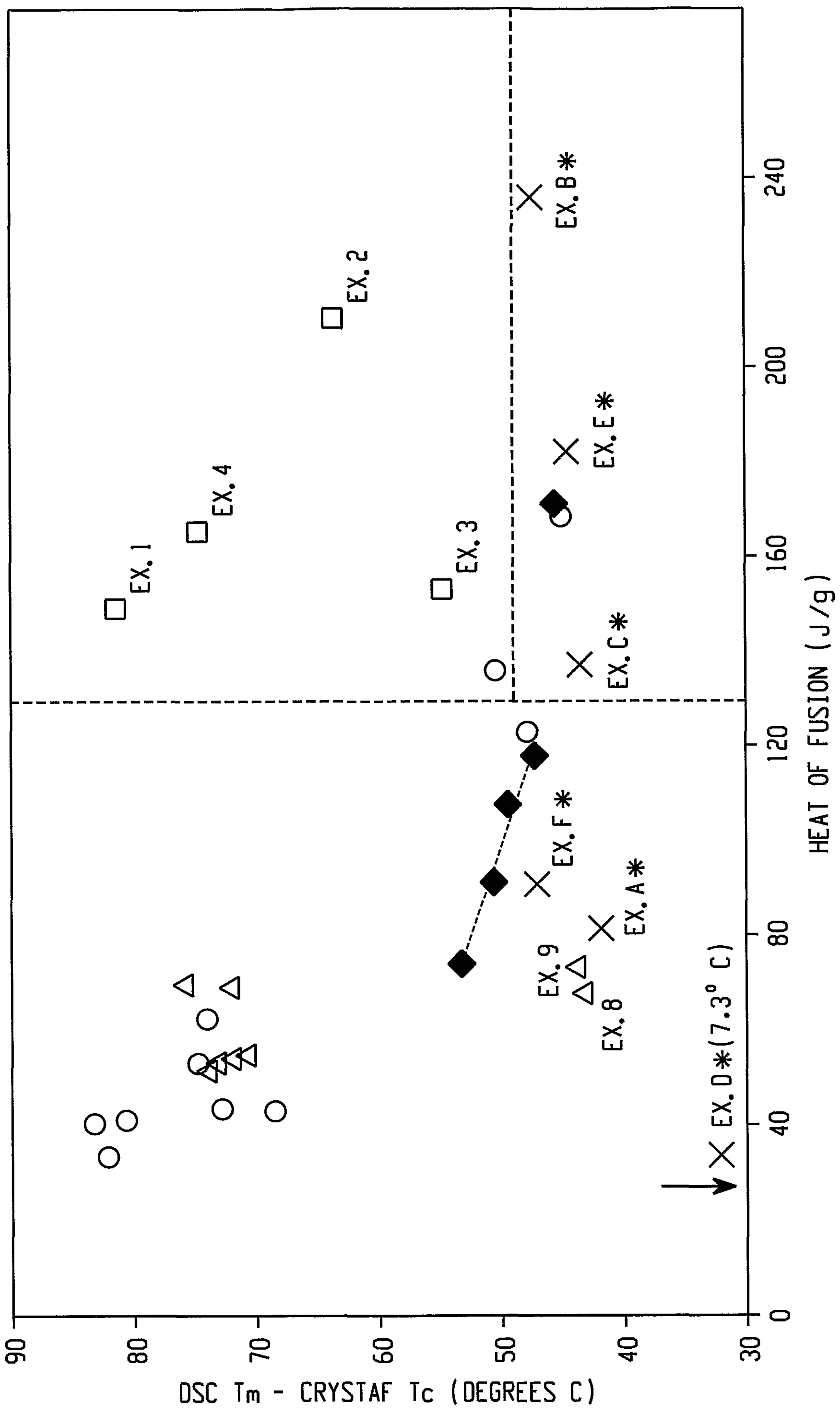

DSC Tm - CRYSTAF Tc (DEGREES C)
HEAT OF FUSION (J/g)
90
80
70
60
50
40
30
0
40
80
120
160
200
240
EX. 1
EX. 2
EX. 3
EX. 4
EX. 8
EX. 9
EX. A*
EX. B*
EX. C*
EX. D*(7.3° C)
EX. E*
EX. F*


*Fig. 2*

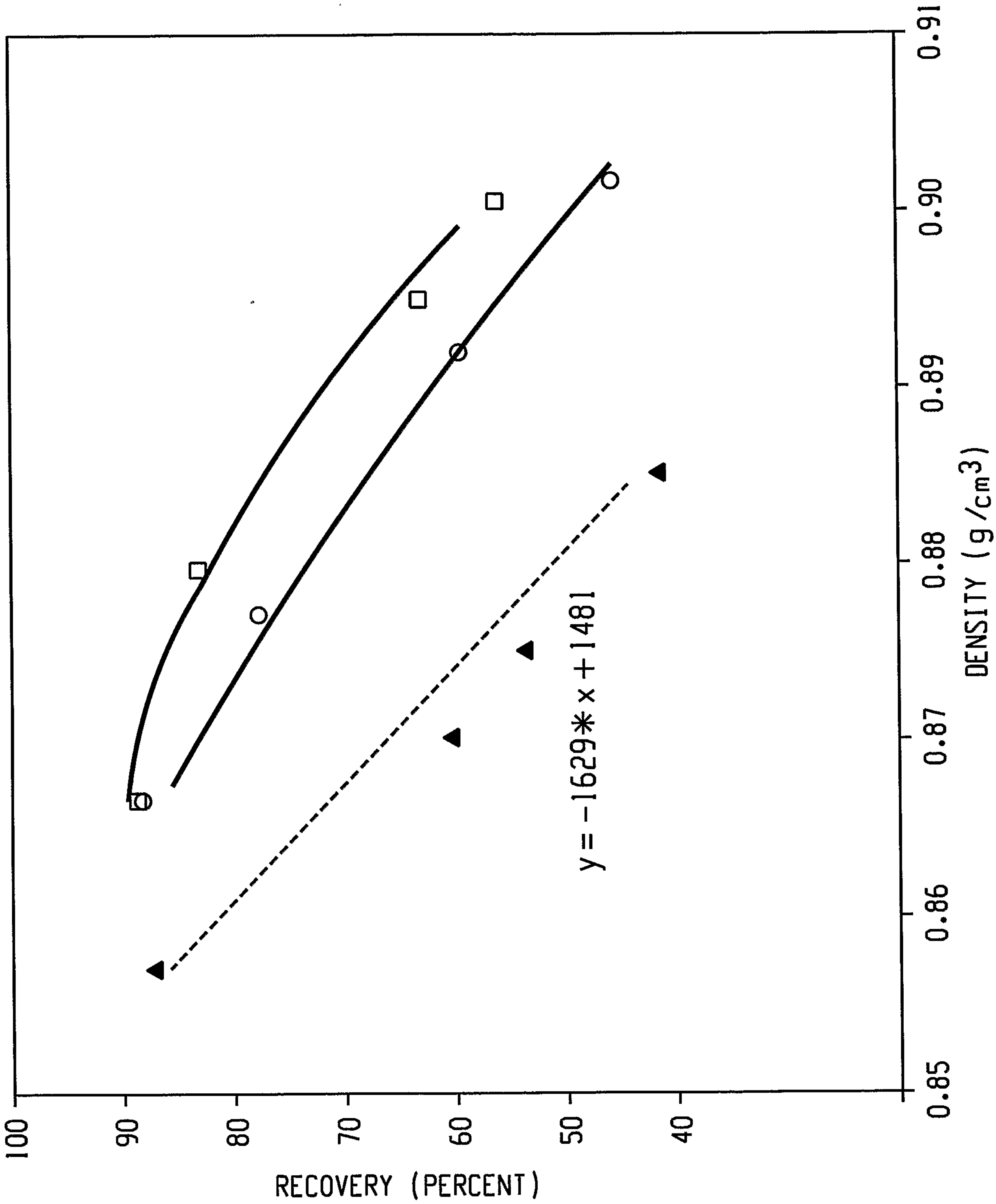

RECOVERY (PERCENT)
100
90
80
70
60
50
40
DENSITY (g/cm3)
0.85
0.86
0.87
0.88
0.89
0.90
0.91
y = −1629 ∗ x + 1481


*Fig. 3*

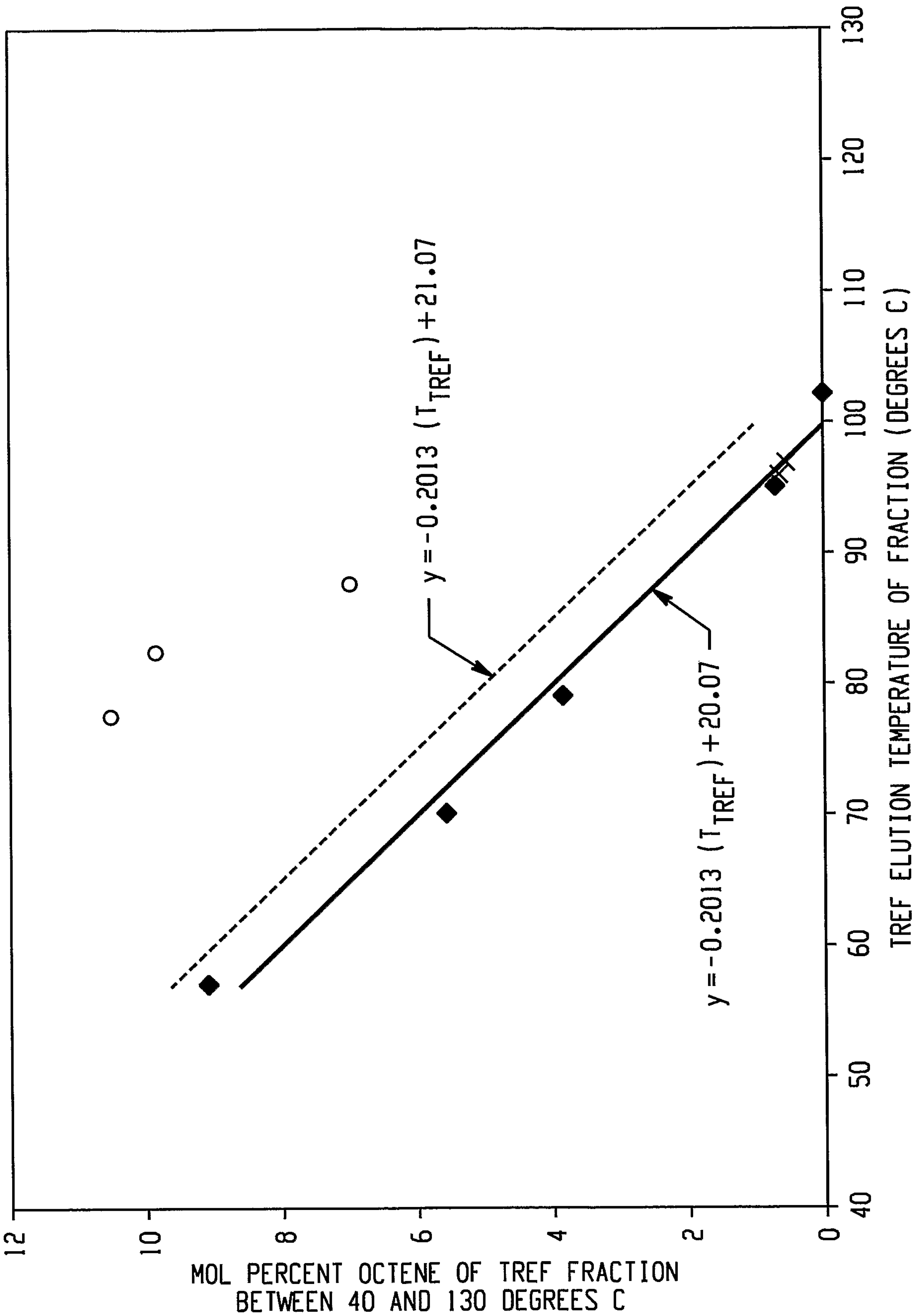

y = -0.2013 (T_TREF) + 21.07
y = -0.2013 (T_TREF) + 20.07
TREF ELUTION TEMPERATURE OF FRACTION (DEGREES C)
MOL PERCENT OCTENE OF TREF FRACTION BETWEEN 40 AND 130 DEGREES C
40 50 60 70 80 90 100 110 120 130
0 2 4 6 8 10 12


Fig. 4

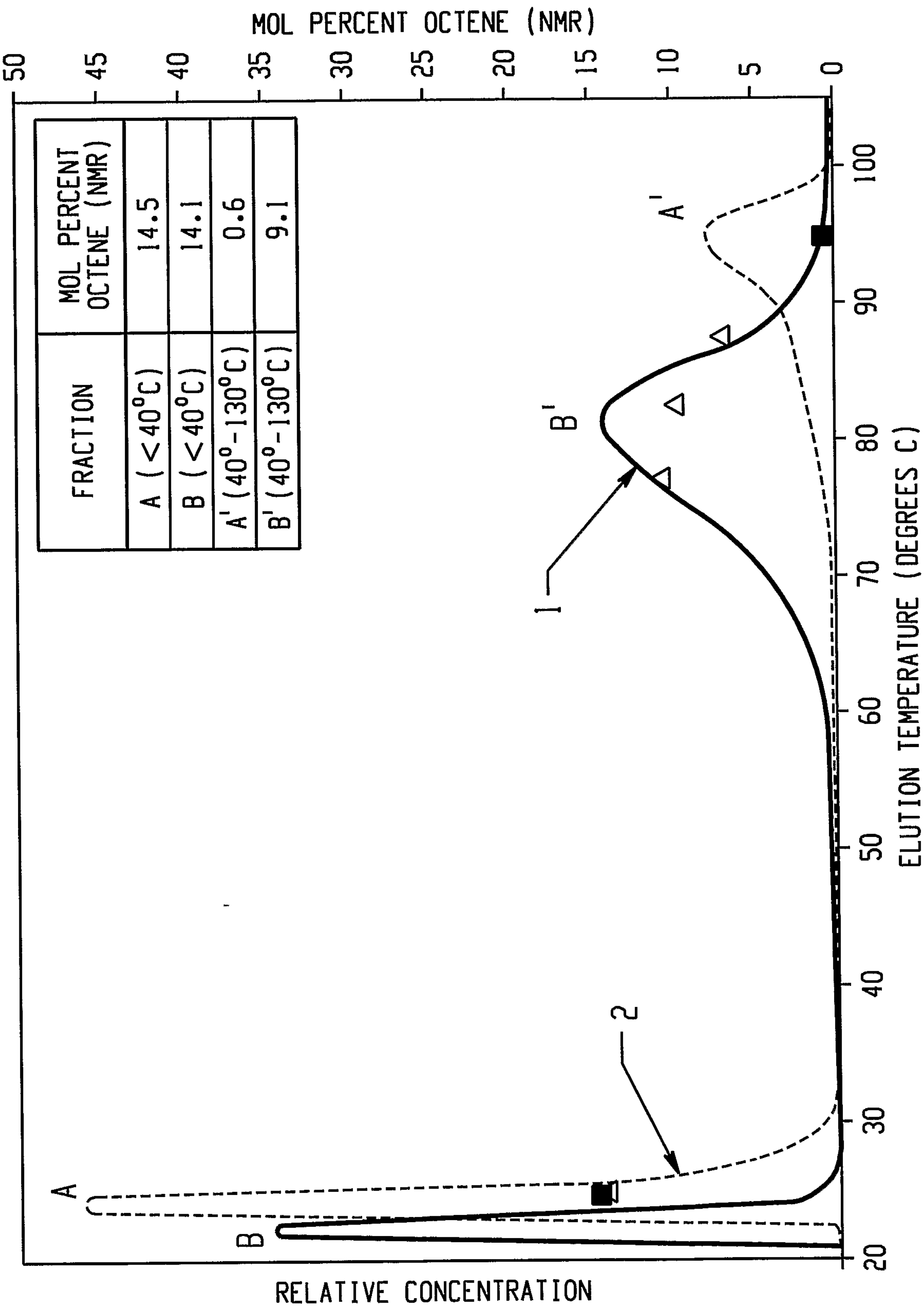
MOL PERCENT OCTENE (NMR)
50
45
40
35
30
25
20
15
10
5
0
FRACTION
MOL PERCENT OCTENE (NMR)
A (<40°C)
14.5
B (<40°C)
14.1
A' (40°-130°C)
0.6
B' (40°-130°C)
9.1
A
B
A'
B'
1
2
20
30
40
50
60
70
80
90
100
ELUTION TEMPERATURE (DEGREES C)
RELATIVE CONCENTRATION

Fig. 5

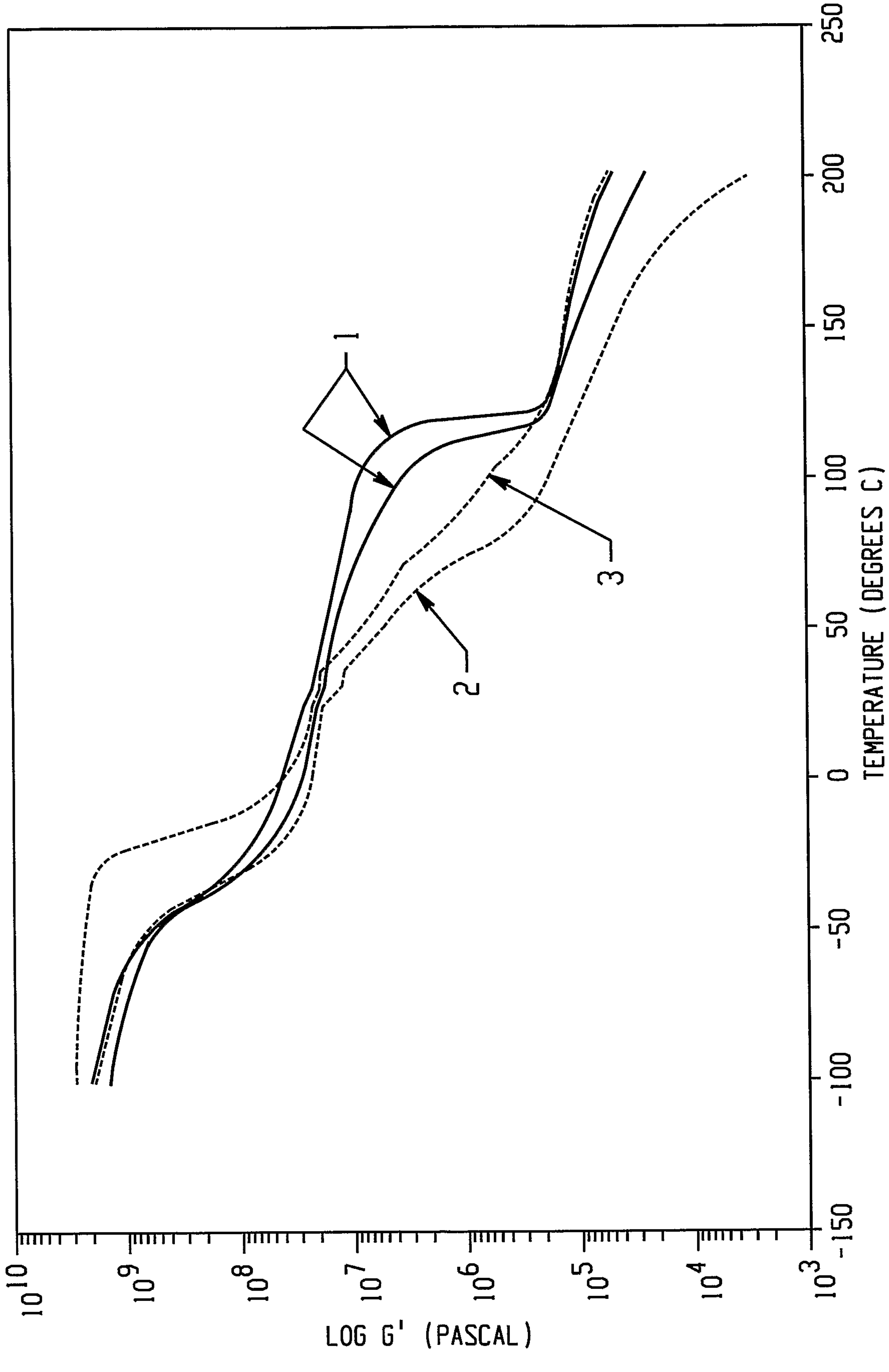
LOG G' (PASCAL)
$10^{10}$
$10^{9}$
$10^{8}$
$10^{7}$
$10^{6}$
$10^{5}$
$10^{4}$
$10^{3}$
TEMPERATURE (DEGREES C)
-150
-100
-50
0
50
100
150
200
250
1
2
3

*Fig. 6*

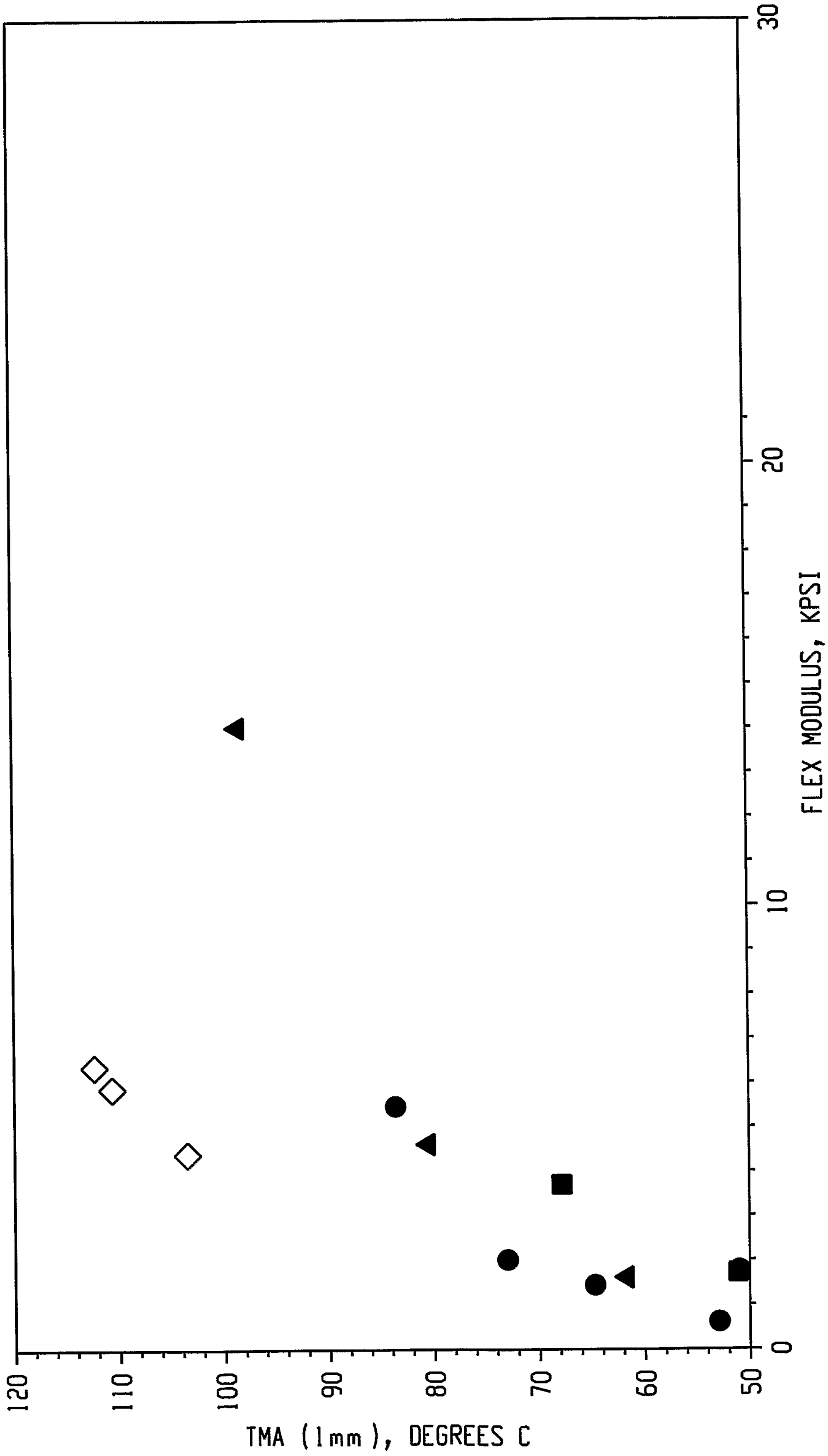
TMA (1mm), DEGREES C
120
110
100
90
80
70
60
50
FLEX MODULUS, KPSI
0
10
20
30

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 19993006 P
- US 55390604 P
- US 66293705 P
- US 66293905 P
- US 605662938 A
- US 2005008916 W
- US 2005008915 W
- US 2005008917 W
- WO 0340195 A
- US 0204017 A
- US 10429024 B
- WO 0424740 A
- US 20040010103 A
- US 6268444 B
- US 2003004286 A
- US 4762890 A
- US 4927888 A
- US 4950541 A
- US 5424016 A
- US 5585058 A
- US 3284421 A
- US 3297674 A
- US 5266627 A
- US 3644230 A
- US 4214054 A
- US 6103803 A
- US 3573152 A
- US 4824720 A
- US 4323528 A
- US 4379859 A
- US 4464484 A
- US 4168353 A
- US 3504068 A
- US 3953558 A
- US 5158986 A
- US 5160674 A
- US 5334356 A
- US 5866053 A
- US 6169122 B
- US 6284810 B
- US 6294115 B
- US 71818605 P
- US 4152189 A, Guerin
- US 4798081 A
- US 59199883 B
- US 6395671 B
- US 6248540 B
- US 6030917 A
- US 6362309 B
- US 6306658 B
- US 6316663 B

### Non-patent literature cited in the description

- **MARKOVICH, RONALD P. ; HAZLITT, LONNIE G. ; SMITH, LINLEY.** Development of gel-permeation chromatography-Fourier transform infrared spectroscopy for characterization of ethylene-based polyolefin copolymers. *Polymeric Materials Science and Engineering,* 1991, vol. 65, 98-100
- **DESLAURIERS, P.J. ; ROHLFING, D.C. ; SHIEH, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **SENDIJAREVIC et al.** Polymeric Foams And Foam Technology. Hanser Gardner Publications, 2004, 505-547
- **ZWEIFEL HANS et al.** Plastics Additives Handbook. Hanser Gardner Publications, 2001, 725-812
- Encyclopedia of Chemical Technology. Interscience Publishers, 1968, vol. 17
- **DANIEL SEERN.** Organic Peroxides. Wiley-Interscience, 1970, vol. 1
- Polyolefin Foam''. **C. P. PARK.** Handbook of Polymer Foams and Technology. Hanser Publishers, 1991, 198-204
- **ZWEIFEL HANS et al.** Plastics Additives Handbook. Hanser Gardner Publications, 2001
- **ZWEIFEL HANS et al.** Plastics Additives Handbook. Hanser Gardner Publications, 2001, 1-140
- **ZWEIFEL HANS et al.** Plastics Additives Handbook. Hanser Gardner Publications, 2001, 141-426
- **ZWEIFEL HANS et al.** Plastics Additives Handbook. Hanser Gardner Publications, 2001, 813-882
- **ZWEIFEL HANS et al.** Plastics Additives Handbook. Hanser Gardner Publications, 2001, 901-948
- **ZWEIFEL HANS et al.** Plastics Additives Handbook. Hanser Gardner Publications, 2001, 511-552
- **ZWEIFEL HANS et al.** Plastics Additives Handbook. Hanser Gardner Publications, 2001, 627-646

- Polyolefin Foam. **C. P. PARK.** Handbook of Polymer Foams and Technology. Hanser Publishers, 1991
- **C. RAUWENDAAL.** Polymer Extrusion. Hanser Publishers, 1986, 322-334
- **WILLIAMS ; WARD.** Polym. Let. *J. Polym. Sci.,* 1968, vol. 6, 621
- **WILDE, L. ; RYLE, T.R. ; KNOBELOCH, D.C. ; PEAT, I.R.** Determination of Branching Distributions in Polyethylene and Ethylene Copolymers. *J. Polym. Sci.,* 1982, vol. 20, 441-455
- **RANDALL, J.C.** *JMS-Rev. Macromol. Chem. Phys.,* 1989, vol. C29, 201-317